(19) Europäisches Patentamt / European Patent Office / Office européen des brevets

(11) **EP 4 617 715 A1**

(12) **EUROPEAN PATENT APPLICATION**
published in accordance with Art. 153(4) EPC

(43) Date of publication:
**17.09.2025 Bulletin 2025/38**

(21) Application number: **24802843.3**

(22) Date of filing: **29.04.2024**

(51) International Patent Classification (IPC):
**G01S 7/481** (2006.01)

(52) Cooperative Patent Classification (CPC):
**G01S 7/48; G01S 7/481; G01S 17/42**

(86) International application number:
**PCT/CN2024/090648**

(87) International publication number:
**WO 2024/230560 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.05.2023 CN 202310520681**

(71) Applicant: **Huawei Technologies Co., Ltd.
Shenzhen, Guangdong 518129 (CN)**

(72) Inventors:
• **XU, Cheng
  Shenzhen, Guangdong 518129 (CN)**
• **MA, Huixiao
  Shenzhen, Guangdong 518129 (CN)**

(74) Representative: **MERH-IP Matias Erny Reichl Hoffmann
Patentanwälte PartG mbB
Paul-Heyse-Straße 29
80336 München (DE)**

(54) **LIDAR RECEIVING APPARATUS AND DETECTION METHOD, AND LIDAR**

(57) A receiving apparatus (520) and a detection method for a lidar, and a lidar relate to the field of optical communication technologies, and are used to reduce a quantity of used components in a case of distance-speed ambiguity, so as to reduce costs and a size. Sweep optical signals with different slopes are introduced, and multi-phase detection is used during detection. A positive frequency and a negative frequency can be identified through multi-phase detection, so that a virtual target can be eliminated, to resolve a distance-speed ambiguity problem. In addition, signals having different phases are multiplexed, to reduce a quantity of used analog-to-digital converters, to further reduce a size of the receiving apparatus (520), and reduce costs.

FIG. 8

EP 4 617 715 A1

**Description**

CROSS-REFERENCE TO RELATED APPLICATIONS

This application claims priority to Chinese Patent Application No. 202310520681.3, filed with the China National Intellectual Property Administration on May 9, 2023 and entitled "RECEIVING APPARATUS AND DETECTION METHOD FOR LIDAR, AND LIDAR", which is incorporated herein by reference in its entirety.

TECHNICAL FIELD

This application relates to the field of optical communication technologies, and in particular, to a receiving apparatus and a detection method for a lidar, and a lidar.

BACKGROUND

A coherent lidar may use a feature of a linear frequency modulation signal, to generate, based on a beat frequency between a local oscillator signal and an echo signal, a frequency-mixed signal that varies with a distance and a speed of a detected object, and distance information and speed information of the detected object may be calculated based on a frequency of the frequency-mixed signal. Currently, a receiver for the coherent lidar uses a 180-degree frequency mixer and a balanced detector, and therefore, the receiver can detect only an I signal of the echo signal. Due to the lack of a Q signal, complete phase information of the echo signal cannot be obtained, and therefore, whether a frequency component of the detected echo signal is a positive frequency or a negative frequency cannot be distinguished. Consequently, real information of the detected object cannot be determined.

SUMMARY

Embodiments of this application provide a receiving apparatus and a detection method for a lidar, and a lidar, to distinguish between positive and negative frequency components of a detected echo signal, so as to obtain positioning information of a detected object.

According to a first aspect, an embodiment of this application provides a receiving apparatus for a lidar, including: a frequency mixing detection unit, configured to: receive one channel of optical signal, where the channel of optical signal includes N echo signals, N is an integer greater than 1, and the N echo signals are in one-to-one correspondence with N sweep optical signals; and perform signal processing on the N sweep optical signals and the N echo signals to obtain M channels of detection signals, where the signal processing includes frequency mixing and photoelectric detection, and M is an integer greater than or equal to 2; and in a first time period, a sweep slope of a first sweep optical signal in the N sweep optical signals is different from a sweep slope of a second sweep optical signal in the N sweep optical signals, or the sweep slope of the first sweep optical signal is not 0 and the sweep slope of the second sweep optical signal is 0; a first detection signal in the M channels of detection signals includes at least an electrical sub-signal of a first echo signal corresponding to the first sweep optical signal and an electrical sub-signal of a second echo signal corresponding to the second sweep optical signal; the signal processing is performed on at least one echo signal in the N echo signals to obtain electrical sub-signals having at least two phases; a second detection signal in the M channels of detection signals includes at least an electrical sub-signal of the first echo signal; and the electrical sub-signal of the first echo signal in the first detection signal and the electrical sub-signal of the first echo signal in the second detection signal have different phases; and M analog-to-digital converters, respectively configured to perform analog-to-digital conversion on the M channels of detection signals to obtain M detection results. It should be noted that one analog-to-digital converter processes one channel of detection signal, and different analog-to-digital converters process different channels of multiplexed signals.

In this embodiment of this application, sweep optical signals with different slopes are introduced, so that multi-phase reception detection is performed on a plurality of real targets in at least two time periods separately corresponding to different sweep optical signals. Because distances and speeds of the real targets obtained through calculation by using different sweep optical signals do not change, but distances and speeds of false targets change, the distances and speeds of the real targets are determined by using a same coherent detection result of the plurality of sweep optical signals, so that the virtual targets can be eliminated. In addition, multi-phase detection is used during detection. A positive frequency and a negative frequency can be identified through multi-phase detection, so that the virtual targets can be eliminated. Different phases can be multiplexed in one channel of detection signal, thereby reducing a quantity of used analog-to-digital converters, reducing a size of a receiving apparatus, and reducing costs.

In a possible implementation, the electrical sub-signal of the first echo signal and the electrical sub-signal of the second echo signal in the first detection signal have a same phase or different phases.

In a possible implementation, the second detection signal further includes an electrical sub-signal of the second echo signal, the electrical sub-signal of the first echo signal and the electrical sub-signal of the second echo signal in the second detection signal have a same phase or different phases, and the electrical sub-signal of the second echo signal in the first detection signal and the electrical sub-signal of the second echo signal in the second detection signal have different phases.

In a possible implementation, a possible structure of the frequency mixing detection unit is as follows: The frequency mixing detection unit includes a frequency mixing receiving unit, an optical multiplexing unit, and M photoelectric detectors, where

the frequency mixing receiving unit is configured to receive the channel of optical signal, and perform frequency mixing on the N sweep optical signals and the N echo signals to obtain L channels of frequency-mixed signals, where L is an integer greater than N, the L channels of frequency-mixed signals at least include at least two optical sub-signals of the first echo signal and at least one optical sub-signal of the second echo signal, and the at least two optical sub-signals of the first echo signal have different phases; the optical multiplexing unit is configured to multiplex the L channels of frequency-mixed signals to obtain M channels of multiplexed signals; and the M photoelectric detectors are respectively configured to perform photoelectric detection on the M channels of multiplexed signals to obtain the M channels of detection signals. It should be noted that one photoelectric detector processes one channel of multiplexed signal, and different photoelectric detectors process different channel of multiplexed signals.

In the foregoing solution, performing an optical multiplexing operation cannot only reduce the quantity of analog-to-digital converters, but also reduce a quantity of photoelectric detectors. This further reduces the size of the receiving apparatus, and reduce the costs.

In a possible implementation, another possible structure of the frequency mixing detection unit is as follows: The frequency mixing detection unit includes a frequency mixing receiving unit, L photoelectric detectors, and an electrical multiplexing unit, where

the frequency mixing receiving unit is configured to: receive the optical signal, where the optical signal includes the N echo signals, N is an integer greater than 1, and the N echo signals are in one-to-one correspondence with the N sweep optical signals; and perform frequency mixing on the N sweep optical signals and the N echo signals to obtain the L channels of frequency-mixed signals, where L is an integer greater than N, the L channels of frequency-mixed signals at least include the at least two optical sub-signals of the first echo signal and the at least one optical sub-signal of the second echo signal, and the at least two optical sub-signals of the first echo signal have different phases;

the L photoelectric detectors are configured to respectively perform photoelectric detection on the L channels of frequency-mixed signals to obtain L channels of detection signals; and

the electrical multiplexing unit is configured to multiplex the L channels of detection signals into the M channels of detection signals.

In the foregoing two structures of the frequency mixing detection unit, locations of the photoelectric detectors are different. In the first structure, a frequency-mixed signal is first multiplexed, and then undergoes photoelectric detection. In the second structure, a frequency-mixed signal first undergoes photoelectric detection, and then is multiplexed. Compared with the solution of the second structure, the solution of the first structure can reduce the quantity of photoelectric detectors.

In a manner, the frequency mixing receiving unit is specifically configured to:
separately split P sweep optical signals in the N sweep optical signals to obtain L channels of sweep optical signals, where each of the P sweep optical signals is split into S channels of sweep optical signals, and L meets $L=P\times(S-1)+N$; demultiplex the channel of optical signal to obtain the N echo signals, and separately split P echo signals in the N echo signals to obtain L channels of echo signals, where each of the P echo signals is split into S channels of echo signals; perform phase adjustment on S-1 channels of echo signals corresponding to each of the P echo signals, where adjusted phases of different channels of echo signals that belong to a same echo signal are different; and respectively perform frequency mixing on the L channels of sweep optical signals and the L channels of echo signals in one-to-one correspondence to obtain the L channels of frequency-mixed signals.

In another manner, the frequency mixing receiving unit is specifically configured to:
separately split P sweep optical signals in the N sweep optical signals to obtain L channels of sweep optical signals, where each of the P sweep optical signals is split into S channels of sweep optical signals, P, L, and S are all positive integers, P is less than N, and L meets $L=P\times(S-1)+N$; split the channel of optical signal into S channels of optical signals, and demultiplex one of the S channels of optical signals to obtain N channels of echo signals, where different channels of echo signals belong to different echo signals; separately demultiplex S-1 channels of optical signals to obtain P channels of echo signals, where the P channels of echo signals belong to different echo signals; perform phase adjustment on $(S-1)\times P$ channels of echo signals that are obtained by demultiplexing the S-1 channels of optical signals, where adjusted phases of different channels of echo signals that belong to a same echo signal are different; and respectively perform frequency mixing on the L channels of sweep optical signals and L channels of echo signals in one-to-one correspondence to obtain the L channels of frequency-mixed signals.

In a possible implementation, the frequency mixing receiving unit may include a beam splitting unit and a 180-degree frequency mixing unit. The beam splitting unit is configured to perform beam splitting on a sweep optical signal and an echo signal, where phases of different channels of echo signals that belong to a same echo signal are different.

In a possible implementation, N=P=S=2, and a possible structure of the frequency mixing receiving unit is as follows: The frequency mixing receiving unit includes:

a first beam splitting unit, configured to perform beam splitting on the first echo signal in the channel of optical signal to obtain two channels of first echo signals, and perform beam splitting on the second echo signal in the optical signal to obtain two channels of second echo signals, where the two channels of first echo signals have different phases, and the two channels of second echo signals have different phases; and a first 180-degree frequency mixing unit, configured to: separately perform frequency mixing on the two channels of first echo signals by using the first sweep optical signal, to obtain a first optical sub-signal of the first echo signal and a second optical sub-signal of the first echo signal; and separately perform frequency mixing on the two channels of second echo signals by using the second sweep optical signal, to obtain a first optical sub-signal of the second echo signal and a second optical sub-signal of the second echo signal.

The first beam splitting unit may specifically perform beam splitting on the first echo signal in the optical signal to obtain two channels of first echo signals, perform phase adjustment on one channel of first echo signal, perform beam splitting on the second echo signal in the optical signal to obtain two channels of second echo signals, and perform phase adjustment on one channel of second echo signals. Alternatively, the first beam splitting unit may specifically perform beam splitting on the channel of optical signal to obtain two channels of optical signals, and demultiplex each channel of optical signal to obtain the first echo signal and the second echo signal, to obtain two channels of first echo signals and two channels of second echo signals. Phase adjustment may be performed on the first echo signal and the second echo signal that are obtained by demultiplexing the one channel of optical signal.

In a possible implementation, a structure of the optical multiplexing unit is follows: The optical multiplexing unit includes:

a first optical multiplexer, configured to multiplex the first optical sub-signal of the first echo signal and the first optical sub-signal of the second echo signal into a first multiplexed signal, where the first optical sub-signal of the first echo signal and the first optical sub-signal of the second echo signal have a same phase; and

a second optical multiplexer, configured to multiplex the second optical sub-signal of the first echo signal and the second optical sub-signal of the second echo signal into a second multiplexed signal, where the second optical sub-signal of the first echo signal and the second optical sub-signal of the second echo signal that are included in the second multiplexed signal have a same phase.

In a possible implementation, another structure of the optical multiplexing unit is as follows: The optical multiplexing unit includes:

a third optical multiplexer, configured to multiplex the second optical sub-signal of the first echo signal and the first optical sub-signal of the second echo signal into a first multiplexed signal, where the second optical sub-signal of the first echo signal and the first optical sub-signal of the second echo signal have different phases; and

a fourth optical multiplexer, configured to multiplex the first optical sub-signal of the first echo signal and the second optical sub-signal of the second echo signal into a second multiplexed signal, where the first optical sub-signal of the first echo signal and the second optical sub-signal of the second echo signal have different phases.

In a possible implementation, a possible structure of the first beam splitting unit is as follows: The first beam splitting unit includes a demultiplexer, a first 90-degree phase shifter, a second 90-degree phase shifter, a first optical splitter, a second optical splitter, a third optical splitter, and a fourth optical splitter, where

the demultiplexer is configured to demultiplex the received optical signal to obtain the first echo signal and the second echo signal;

the first optical splitter is configured to demultiplex the first sweep optical signal into a first channel of first sweep optical signal and a second channel of first sweep optical signal;

the second optical splitter is configured to demultiplex the second sweep optical signal into a first channel of second sweep optical signal and a second channel of second sweep optical signal;

the third optical splitter is configured to demultiplex the first echo signal into a first channel of first echo signal and a second channel of first echo signal;

the fourth optical splitter is configured to demultiplex the second echo signal into a first channel of second echo signal and a second channel of second echo signal;

the first 90-degree phase shifter is configured to adjust a phase of the second channel of first echo signal by 90 degrees, to obtain an adjusted second channel of first echo signal; and

the second 90-degree phase shifter is configured to adjust a phase of the second channel of first echo signal by 90 degrees, to obtain an adjusted second channel of first echo signal.

In a possible implementation, another possible structure of the first beam splitting unit is as follows: The first beam splitting unit includes a first demultiplexer, a second demultiplexer, a third 90-degree phase shifter, a first optical splitter, a second optical splitter, and a fifth optical splitter, where

the first optical splitter is configured to demultiplex the first sweep optical signal into a first channel of first sweep optical signal and a second channel of first sweep optical signal;

the second optical splitter is configured to demultiplex the second sweep optical signal into a first channel of second sweep optical signal and a second channel of second sweep optical signal;

the fifth optical splitter is configured to demultiplex the optical signal into a first channel of optical signal and a second channel of optical signal;

the third 90-degree phase shifter is configured to adjust a phase of the second channel of optical signal to obtain an adjusted second channel of optical signal;

the first demultiplexer is configured to demultiplex the first channel of optical signal to obtain a first channel of first echo signal and a first channel of second echo signal; and

the second demultiplexer is configured to demultiplex the adjusted second channel of optical signal to obtain an adjusted second channel of first echo signal and an adjusted second channel of second echo signal.

In a possible implementation, the first 180-degree frequency mixing unit includes:

a first 180-degree frequency mixer, configured to perform frequency mixing on the first channel of first echo signal and the first channel of first sweep optical signal to obtain the first optical sub-signal of the first echo signal;

a second 180-degree frequency mixer, configured to perform frequency mixing on the adjusted second channel of first echo signal and the second channel of first sweep optical signal to obtain the second optical sub-signal of the first echo signal;

a third 180-degree frequency mixer, configured to perform frequency mixing on the first channel of second echo signal and the first channel of second sweep optical signal to obtain the first optical sub-signal of the second echo signal; and

a fourth 180-degree frequency mixer, configured to perform frequency mixing on the adjusted second channel of second echo signal and the second channel of second sweep optical signal to obtain the second optical sub-signal of the second echo signal.

In a possible implementation, N=S=2, P=1, and another possible structure of the frequency mixing receiving unit is as follows: The frequency mixing receiving unit includes a second beam splitting unit and a second 180-degree frequency mixing unit.

The second beam splitting unit is configured to perform beam splitting on the first echo signal in the optical signal to obtain two channels of first echo signals, where the two channels of first echo signals have different phases.

The second 180-degree frequency mixing unit is configured to: separately perform frequency mixing on the two channels of first echo signals by using the first sweep optical signal, to obtain a first optical sub-signal of the first echo signal and a second optical sub-signal of the first echo signal; and perform frequency mixing on the second echo signal by using the second sweep optical signal, to obtain a first optical sub-signal of the second echo signal.

In a possible implementation, the optical multiplexing unit includes:

a first optical multiplexer, configured to multiplex the first optical sub-signal of the first echo signal and the first optical sub-signal of the second echo signal into a first multiplexed signal, where the first optical sub-signal of the first echo signal and the first optical sub-signal of the second echo signal have a same phase, and the second optical sub-signal of the first echo signal is output from the optical multiplexing unit as a second multiplexed signal; or

a third optical multiplexer, configured to multiplex the second optical sub-signal of the first echo signal and the first optical sub-signal of the second echo signal into a first multiplexed signal, where the second optical sub-signal of the first echo signal and the first optical sub-signal of the second echo signal have different phases, and the first optical sub-signal of the first echo signal is output from the optical multiplexing unit as a second multiplexed signal.

In a possible implementation, another possible structure of the second beam splitting unit is as follows: The second beam splitting unit includes a demultiplexer, a first 90-degree phase shifter, a first optical splitter, and a third optical splitter, where

the demultiplexer is configured to demultiplex the received optical signal to obtain the first echo signal and the second echo signal;

the first optical splitter is configured to demultiplex the first sweep optical signal into a first channel of first sweep optical signal and a second channel of first sweep optical signal;

the third optical splitter is configured to demultiplex the first echo signal into two channels of first echo signals, where in the two channels of first echo signals, one channel of first echo signal is used as a first channel of first echo signal, and the other channel of first echo signal is input to the first 90-degree phase shifter; and

the first 90-degree phase shifter is configured to adjust a phase of the other channel of first echo signal by 90 degrees, to obtain a second channel of first echo signal.

In a possible implementation, another possible structure of the second beam splitting unit is as follows: The second beam splitting unit includes a first demultiplexer, a third demultiplexer, a third 90-degree phase shifter, a first optical splitter, and a fifth optical splitter, where

the first optical splitter is configured to demultiplex the first sweep optical signal into a first channel of first sweep optical signal and a second channel of first sweep optical signal;

the fifth optical splitter is configured to demultiplex the optical signal into a first channel of optical signal and a second channel of optical signal;

the third 90-degree phase shifter is configured to adjust a phase of the second channel of optical signal to obtain an adjusted second channel of optical signal;

the first demultiplexer is configured to demultiplex the first channel of optical signal to obtain a first channel of first echo signal and the second echo signal; and

the third demultiplexer is configured to demultiplex the adjusted second channel of optical signal to obtain a second channel of first echo signal.

In a possible implementation, another possible structure of the second beam splitting unit is as follows: The second beam splitting unit includes a demultiplexer, a first 90-degree phase shifter, a fourth 90-degree phase shifter, a first optical splitter, and a third optical splitter, where

the demultiplexer is configured to demultiplex the received optical signal to obtain the first echo signal and the second echo signal;

the first optical splitter is configured to demultiplex the first sweep optical signal into a first channel of first sweep optical signal and a second channel of first sweep optical signal;

the third optical splitter is configured to demultiplex the first echo signal into two channels of first echo signals, where in the two channels of first echo signals, one channel of first echo signal is input to the first 90-degree phase shifter, and the other channel of first echo signal is used as a second channel of first echo signal;

the first 90-degree phase shifter is configured to adjust a phase of the one channel of first echo signal by 90 degrees, to obtain a first channel of first echo signal; and

the fourth 90-degree phase shifter is configured to adjust a phase of the second echo signal by 90 degrees and output an adjusted second echo signal.

In a possible implementation, another possible structure of the second beam splitting unit is as follows: The second beam splitting unit includes a fourth demultiplexer, a fifth demultiplexer, a fifth 90-degree phase shifter, a first optical splitter, and a fifth optical splitter, where

the first optical splitter is configured to demultiplex the first sweep optical signal into a first channel of first sweep optical signal and a second channel of first sweep optical signal;

the fifth optical splitter is configured to demultiplex the optical signal into a first channel of optical signal and a second channel of optical signal;

the fifth 90-degree phase shifter is configured to adjust a phase of the first channel of optical signal to obtain an adjusted first channel of optical signal;

the fourth demultiplexer is configured to demultiplex the adjusted first channel of optical signal to obtain a first channel of first echo signal and the second echo signal; and

the fifth demultiplexer is configured to demultiplex the second channel of optical signal to obtain a second channel of first echo signal.

In a possible implementation, the second 180-degree frequency mixing unit includes:

a first 180-degree frequency mixer, configured to perform frequency mixing on the first channel of first echo signal and the first channel of first sweep optical signal to obtain the first optical sub-signal of the first echo signal;

a second 180-degree frequency mixer, configured to perform frequency mixing on the second channel of first echo signal and the second channel of first sweep optical signal to obtain the second optical sub-signal of the first echo signal; and

a fifth 180-degree frequency mixer, configured to perform frequency mixing on the received second echo signal and the received second sweep optical signal to obtain the first optical sub-signal of the second echo signal.

In a possible implementation, another possible structure of the frequency mixing detection unit is as follows: The frequency mixing detection unit includes a third 90-degree phase shifter, a first optical splitter, a fifth optical splitter, a sixth 180-degree frequency mixer, a third demultiplexer, a seventh 180-degree frequency mixer, a first photoelectric detector, and a second photoelectric detector, where

the first optical splitter is configured to demultiplex the first sweep optical signal into a first channel of first sweep optical signal and a second channel of first sweep optical signal;

the fifth optical splitter is configured to demultiplex the optical signal into a first channel of optical signal and a second channel of optical signal, where the first channel of optical signal includes a first channel of first echo signal and a first channel of second echo signal, and the second channel of optical signal includes a second channel of first echo signal and a second channel of second echo signal;

the third 90-degree phase shifter is configured to adjust a phase of the second channel of optical signal to obtain an adjusted second channel of optical signal;

the sixth 180-degree frequency mixer is configured to perform frequency mixing on the first channel of optical signal by using the first channel of first sweep optical signal and the second sweep optical signal, to obtain a frequency-mixed signal, where the frequency-mixed signal includes a first optical sub-signal of the first echo signal and a first optical sub-signal of the second echo signal;

the third demultiplexer is configured to demultiplex the adjusted second channel of optical signal to obtain an adjusted second channel of first echo signal;

the seventh 180-degree frequency mixer is configured to perform frequency mixing on the adjusted second channel of first echo signal by using the second channel of first sweep optical signal, to obtain a second optical sub-signal of the first echo signal;

the first photoelectric detector is configured to perform photoelectric detection on the frequency-mixed signal to obtain a first channel of detection signal; and

the second photoelectric detector is configured to perform photoelectric detection on the second optical sub-signal of the first echo signal to obtain a second channel of detection signal.

In a possible implementation, another possible structure of the frequency mixing detection unit is as follows: The frequency mixing detection unit includes a third 90-degree phase shifter, a first optical splitter, a fifth optical splitter, an eighth 180-degree frequency mixer, a first demultiplexer, a ninth 180-degree frequency mixer, a first photoelectric detector, and a second photoelectric detector, where

the first optical splitter is configured to demultiplex the first sweep optical signal into a first channel of first sweep optical signal and a second channel of first sweep optical signal;

the fifth optical splitter is configured to demultiplex the optical signal into a first channel of optical signal and a second channel of optical signal, where the first channel of optical signal includes a first channel of first echo signal and a first channel of second echo signal, and the second channel of optical signal includes a second channel of first echo signal and a second channel of second echo signal;

the third 90-degree phase shifter is configured to adjust a phase of the second channel of optical signal to obtain an adjusted second channel of optical signal;

the eighth 180-degree frequency mixer is configured to perform frequency mixing on the adjusted second channel of optical signal by using the second channel of first sweep optical signal and the second sweep optical signal, to obtain a frequency-mixed signal, where the frequency-mixed signal includes a second optical sub-signal of the first echo signal and a second optical sub-signal of the second echo signal;

the first demultiplexer is configured to demultiplex the first channel of optical signal to obtain a first channel of first echo signal;

the ninth 180-degree frequency mixer is configured to perform frequency mixing on the first echo signal by using the first channel of first sweep optical signal, to obtain a first optical sub-signal of the first echo signal;

the first photoelectric detector is configured to perform photoelectric detection on the frequency-mixed signal to obtain a first channel of detection signal; and

the second photoelectric detector is configured to perform photoelectric detection on the first optical sub-signal of the first echo signal to obtain a second channel of detection signal.

In a possible implementation, another possible structure of the frequency mixing detection unit is as follows: The frequency mixing receiving unit includes a demultiplexer, a first coupler, a second coupler, and three multiplexers, where

the demultiplexer is configured to demultiplex the optical signal to obtain the first echo signal and the second echo signal;
the first coupler is configured to perform frequency mixing on the first echo signal by using the first sweep optical signal, to obtain three optical sub-signals of the first echo signal;
the second coupler is configured to perform frequency mixing on the second echo signal by using the second sweep optical signal, to obtain three optical sub-signals of the second echo signal;
the three multiplexers are configured to multiplex the three optical sub-signals of the first echo signal and the three optical sub-signals of the second echo signal into three channels of multiplexed signals, where each of the three channels of multiplexed signals includes two optical sub-signals, and the two optical sub-signals included in each channel of multiplexed signal belong to different echo signals; and
the three photoelectric detectors are configured to perform photoelectric detection on the three channels of multiplexed signals to obtain the three channels of detection signals.

According to a second aspect, an embodiment of this application provides a lidar, where the lidar includes the receiving apparatus for the lidar according to any implementation of the first aspect and a signal processor, and the signal processor is configured to process the M detection results to obtain positioning information of a detected object.

In a possible implementation, the lidar further includes a transmitting apparatus for the lidar, and the transmitting apparatus is configured to generate the N sweep optical signals. The N sweep optical signals may be multiplexed into one channel of signal for transmission. After multiplexing, the channel of signal may be further split into two channels of signals, where one channel of signal is used as a transmit signal, and the other is used as a local oscillator signal to be sent to the receiving apparatus.

According to a third aspect, an embodiment of this application provides a detection method for a lidar, including:

transmitting a detection signal, where the detection signal includes N sweep optical signals, N is an integer greater than 1, and in a first time period, a sweep slope of a first sweep optical signal in the N sweep optical signals is different from a sweep slope of a second sweep optical signal in the N sweep optical signals, or the sweep slope of the first sweep optical signal is not 0 and the sweep slope of the second sweep optical signal is 0;
receiving one channel of optical signal reflected by a detected object, where the channel of optical signal includes N echo signals, and the N echo signals are in one-to-one correspondence with the N sweep optical signals;
performing signal processing on the N sweep optical signals and the N echo signals to obtain M channels of detection signals, where the signal processing includes frequency mixing and photoelectric detection, and M is an integer greater than or equal to 2, where
a first detection signal in the M channels of detection signals includes at least an electrical sub-signal of a first echo signal corresponding to the first sweep optical signal and an electrical sub-signal of a second echo signal corresponding to the second sweep optical signal; the signal processing is performed on at least one echo signal in the N echo signals to obtain electrical sub-signals having at least two phases; a second detection signal in the M channels of detection signals includes at least an electrical sub-signal of the first echo signal; and the electrical sub-signal of the first echo signal in the first detection signal and the electrical sub-signal of the first echo signal in the second detection signal have different phases;
performing analog-to-digital conversion on the M channels of detection signals to obtain M detection results; and
obtaining positioning information of the detected object based on the M detection results.

In a possible implementation, the electrical sub-signal of the first echo signal and the electrical sub-signal of the second echo signal in the first frequency-mixed signal have a same phase or different phases.

In a possible implementation, the second frequency-mixed signal further includes an electrical sub-signal of the second echo signal, the electrical sub-signal of the first echo signal and the electrical sub-signal of the second echo signal in the second frequency-mixed signal have a same phase or different phases, and the electrical sub-signal of the second echo signal in the first frequency-mixed signal and the electrical sub-signal of the second echo signal in the second frequency-mixed signal have different phases.

In a possible implementation, the performing signal processing on the N sweep optical signals and the N echo signals includes:

performing frequency mixing on the N sweep optical signals and the N echo signals to obtain L channels of frequency-mixed signals, where L is greater than N, the L channels of frequency-mixed signals at least include at least two optical sub-signals of the first echo signal and at least one optical sub-signal of the second echo signal, and the at least two optical sub-signals of the first echo signal have different phases;

multiplexing the L channels of frequency-mixed signals to obtain M channels of multiplexed signals; and

performing photoelectric detection on the M channels of multiplexed signals to obtain the M channels of detection signals.

In a possible implementation, the performing signal processing on the N sweep optical signals and the N echo signals includes:

performing frequency mixing on the N sweep optical signals and the N echo signals to obtain L channels of frequency-mixed signals, where L is an integer greater than N, the L channels of frequency-mixed signals at least include at least two optical sub-signals of the first echo signal and at least one optical sub-signal of the second echo signal, and the at least two optical sub-signals of the first echo signal have different phases;

respectively performing frequency mixing on the L channels of frequency-mixed signals to obtain L channels of detection signals; and

multiplexing the L channels of detection signals into the M channels of detection signals, where M is less than L.

In a possible implementation, the performing frequency mixing on the N sweep optical signals and the N echo signals to obtain L channels of frequency-mixed signals includes:

separately splitting P sweep optical signals in the N sweep optical signals to obtain L channels of sweep optical signals, where each of the P sweep optical signals is split into S channels of sweep optical signals, and L meets L=P×(S-1)+N;

demultiplexing the channel of optical signal to obtain the N echo signals, and separately splitting P echo signals in the N echo signals to obtain L channels of echo signals, where each of the P echo signals is split into S channels of echo signals;

performing phase adjustment on S-1 channels of echo signals corresponding to each of the P echo signals, where adjusted phases of different channels of echo signals that belong to a same echo signal are different; and

respectively performing frequency mixing on the L channels of sweep optical signals and the L channels of echo signals in one-to-one correspondence to obtain the L channels of frequency-mixed signals.

In a possible implementation, the performing frequency mixing on the N sweep optical signals and the N echo signals to obtain L channels of frequency-mixed signals includes:

separately splitting P sweep optical signals in the N sweep optical signals to obtain L channels of sweep optical signals, where each of the P sweep optical signals is split into S channels of sweep optical signals, and L meets L=P×(S-1)+N;

splitting the channel of optical signal into S channels of optical signals, and demultiplexing one of the S channels of optical signals to obtain N channels of echo signals, where different channels of echo signals belong to different echo signals; and separately demultiplexing S-1 channels of optical signals to obtain P channels of echo signals, where the P channels of echo signals belong to different echo signals;

performing phase adjustment on (S-1)×P channels of echo signals that are obtained by demultiplexing the S-1 channels of optical signals, where adjusted phases of different channels of echo signals that belong to a same echo signal are different; and

respectively performing frequency mixing on the L channels of sweep optical signals and L channels of echo signals in one-to-one correspondence to obtain the L channels of frequency-mixed signals.

According to a fourth aspect, an embodiment of this application provides a computer-readable medium, configured to store a computer program. The computer program includes instructions for performing the method according to the third aspect or any optional implementation of the third aspect.

In this application, based on the implementations provided in the foregoing aspects, the implementations may be further combined to provide more implementations.

BRIEF DESCRIPTION OF DRAWINGS

FIG. 1 is a diagram of an architecture of a lidar;

FIG. 2 is a diagram of a local oscillator signal, an echo signal, and a frequency-mixed signal;

FIG. 3 is a diagram of a spectrum of a frequency-mixed signal;

FIG. 4 is a diagram of a distance-speed ambiguity area;

FIG. 5A is a diagram of a structure of a detection system of a lidar according to an embodiment of this application;

FIG. 5B is a diagram of a structure of a detection system of another lidar according to an embodiment of this application;

FIG. 6 is a diagram of a waveform of a sweep optical signal according to an embodiment of this application;

FIG. 7 is a diagram of a possible structure of a receiving apparatus 520 for a lidar according to an embodiment of this application;

FIG. 8 is a diagram of a possible structure of a receiving apparatus 520 for a lidar according to an embodiment of this application;

FIG. 9A is a diagram of a possible structure of a frequency mixing detection unit 810 according to an embodiment of this application;

FIG. 9B is a diagram of another possible structure of a frequency mixing detection unit 810 according to an embodiment of this application;

FIG. 10 is a diagram of a possible structure of a frequency mixing detection unit 810 according to Example 1 according to an embodiment of this application;

FIG. 11A is a diagram of a possible structure of a first beam splitting unit 9201 according to Example 1 according to an embodiment of this application;

FIG. 11B is a diagram of another possible structure of a first beam splitting unit 9201 according to Example 1 according to an embodiment of this application;

FIG. 12 is a diagram of a possible structure of a frequency mixing detection unit 810 according to Example 1 according to an embodiment of this application;

FIG. 13 is a diagram of another possible structure of a frequency mixing detection unit 810 according to Example 1 according to an embodiment of this application;

FIG. 14 is a diagram of another possible structure of a frequency mixing detection unit 810 according to Example 1 according to an embodiment of this application;

FIG. 15 is a diagram of another possible structure of a frequency mixing detection unit 810 according to Example 1 according to an embodiment of this application;

FIG. 16 is a diagram of another possible structure of a frequency mixing detection unit 810 according to Example 1 according to an embodiment of this application;

FIG. 17 is a diagram of a possible structure of a frequency mixing detection unit 810 according to Example 2 according to an embodiment of this application;

FIG. 18 is a diagram of a possible structure of a second beam splitting unit 9210 according to Example 2 according to an embodiment of this application;

FIG. 19 is a diagram of another possible structure of a second beam splitting unit 9210 according to Example 2 according to an embodiment of this application;

FIG. 20 is a diagram of another possible structure of a frequency mixing detection unit 810 according to Example 2 according to an embodiment of this application;

FIG. 21 is a diagram of another possible structure of a frequency mixing detection unit 810 according to Example 2 according to an embodiment of this application;

FIG. 22 is a diagram of another possible structure of a second beam splitting unit 9210 according to Example 2 according to an embodiment of this application;

FIG. 23 is a diagram of another possible structure of a second beam splitting unit 9210 according to Example 2 according to an embodiment of this application;

FIG. 24 is a diagram of another possible structure of a frequency mixing detection unit 810 according to Example 2 according to an embodiment of this application;

FIG. 25 is a diagram of another possible structure of a frequency mixing detection unit 810 according to Example 2 according to an embodiment of this application;

FIG. 26 is a diagram of a possible structure of a frequency mixing detection unit 810 according to Example 3 according to an embodiment of this application;

FIG. 27 is a diagram of another possible structure of a frequency mixing detection unit 810 according to Example 3 according to an embodiment of this application;

FIG. 28 is a diagram of another possible structure of a frequency mixing detection unit 810 according to Example 3 according to an embodiment of this application;

FIG. 29 is a diagram of another possible structure of a frequency mixing detection unit 810 according to Example 3 according to an embodiment of this application;

FIG. 30 is a diagram of another possible structure of a frequency mixing detection unit 810 according to Example 3 according to an embodiment of this application;

FIG. 31 is a diagram of a possible structure of a frequency mixing detection unit 810 according to Example 4 according to an embodiment of this application;

FIG. 32 is a diagram of a possible structure of a frequency mixing detection unit 810 according to Example 5 according to an embodiment of this application;

FIG. 33 is a diagram of a possible structure of a frequency mixing detection unit 810 according to Example 6 according to an embodiment of this application; and

FIG. 34 is a schematic flowchart of a detection method for a lidar according to an embodiment of this application.

DESCRIPTION OF EMBODIMENTS

The following describes in detail embodiments of this application with reference to the accompanying drawings.

Some terms in this application are described below. It should be noted that these explanations are for ease of understanding by a person skilled in the art, and are not intended to limit the protection scope claimed by this application.

(1) The term "at least one" in this application means one or more, that is, includes one, two, three, or more; and the term "a plurality of" means two or more, that is, includes two, three, or more. In addition, it should be understood that in description of this application, terms such as "first" and "second" are merely used for distinguishing and description, but should not be understood as indicating or implying relative importance, or should not be understood as indicating or implying a sequence. The term "and/or" describes an association relationship between associated objects and represents that three relationships may exist. For example, A and/or B may represent the following three cases: Only A exists, both A and B exist, and only B exists. A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, or c may indicate: a, b, c, a-b, a-c, b-c, or a-b-c, where a, b, and c may be singular or plural.

(2) A sweep signal is a signal whose frequency varies linearly with time.

(3) A sweep waveform indicates a sweep trajectory of a sweep signal.

(4) A sweep slope is a frequency variation of a sweep signal in a unit time. The unit is Hz/s.

A symbol of the sweep slope indicates: When the symbol of the sweep slope is positive, the frequency increases with time. When the symbol of the sweep slope is negative, the frequency decreases with time. When the symbol of the sweep slope is zero, the frequency does not change with time. That symbols of two sweep slopes are opposite means that a symbol of one sweep slope is positive and a symbol of the other sweep slope is negative.

(5) A guard bandwidth is a specific frequency range between signals when frequency multiplexing is used. No signal is loaded within the frequency range to prevent interference between signals of different frequencies.

(6) A radar transmit signal is a signal that is generated by one or more sweep signals and that can be transmitted via a transmit antenna after frequency multiplexing. The radar transmit signal is generally an optical signal.

(7) An echo signal is a signal reflected after a transmit signal reaches a detected object. The echo signal is generally an optical signal.

(8) A minimum detectable distance of a lidar means: Some lidars have a blind area, and an object that is close to the lidar, for example, 1 m from the lidar, cannot be detected, where a minimum distance of the blind area is the minimum detectable distance of the lidar. Some lidars do not have a blind area. However, some objects are close to the lidar, and due to a limitation of processor precision or an algorithm, after the lidar transmits a detection signal, and a close object transmits an echo signal, the lidar cannot accurately position the object to obtain an accurate location by using the echo signal. Therefore, a minimum distance from which the object can be accurately positioned is the minimum detectable distance of the lidar.

A detection solution in this application may be applied to an electronic device having a detection capability. The electronic device may be an intelligent device with a detection capability, and includes but is not limited to: a smart home device, for example, a television, a robotic vacuum cleaner, a smart lamp, a speaker system, an intelligent lighting system, an electric appliance control system, home background music, a home theater system, an intercom system, and video surveillance, an intelligent transportation device, for example, a vehicle, a ship, an uncrewed aerial vehicle, a train, a van, a wagon, and a truck, and an intelligent manufacturing device, for example, a robot, industrial equipment, intelligent logistics, and an intelligent factory. Alternatively, the electronic device may be a computer device with a detection capability, for example, a desktop computer, a personal computer, or a server. It should be further understood that the electronic device may alternatively be a portable electronic device with a detection capability, for example, a mobile phone, a tablet computer, a palmtop computer, a headset, an acoustic device, a wearable device (for example, a smartwatch), a vehicle-mounted device, a virtual reality device, or an augmented reality device. An example of the portable electronic device includes but is not limited to a portable electronic device using iOS®, Android®, Microsoft®, Harmony®, or another operating system. The portable electronic device may alternatively be, for example, a laptop computer (Laptop) with a touch-sensitive surface (for example, a touch panel).

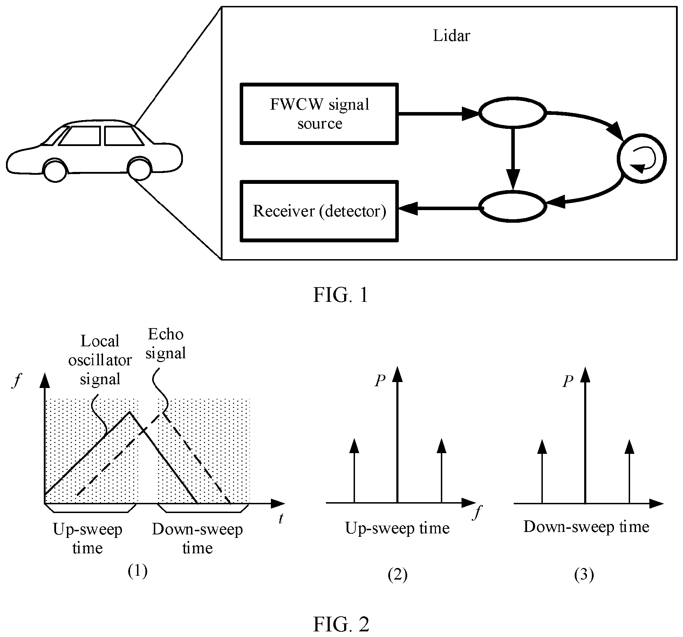

In a specific application scenario, the detection solution may be applied to a lidar. The lidar is mounted on a vehicle, and therefore is also referred to as a vehicle-mounted lidar. In addition to the vehicle-mounted lidar, the lidar further includes a ship-borne lidar mounted on a ship, an on-board lidar mounted on a machine, and the like. Refer to FIG. 1. A lidar transmits a sweep optical signal via a sweep signal source. The sweep optical signal is reflected by a detected object after being irradiated to the object, and a reflected echo signal may be received by a receive end of the lidar. In this way, the receive end of the lidar generates, based on a beat frequency between the echo signal and a local oscillator signal, an intermediate frequency signal that varies with a distance and a speed of the detected object, and may calculate information such as the distance, the speed, and a reflectivity of the detected object based on a frequency of the intermediate frequency signal.

As described in the background, currently, a receiver for a coherent lidar uses a 180-degree frequency mixer and a balanced detector, and therefore, the receiver can detect only an I signal of the echo signal. Due to the lack of a Q signal, complete phase information of the echo signal cannot be obtained, and therefore, whether a frequency component of the detected echo signal is a positive frequency or a negative frequency cannot be distinguished. Consequently, real information of the detected object cannot be determined. Refer to FIG. 2. Coherent detection is performed on an echo signal and a local oscillator signal to generate a frequency-mixed signal. It can be learned from (1) in FIG. 2 that time may be divided into up-sweep time and down-sweep time. A sweep slope of a transmit signal or an echo signal varies with the time. Fourier transform is separately performed on signals at the up-sweep time and the down-sweep time to obtain spectrum diagrams shown in (2) and (3) in FIG. 2. In FIG. 2, P represents a power spectral density, and f represents a frequency. It can be learned from (2) and (3) in FIG. 2 that, because complete phase information of the echo signal cannot be obtained, whether a frequency component of the detected echo signal is a positive frequency or a negative frequency cannot be distinguished. In other words, a real image and a virtual image cannot be distinguished.

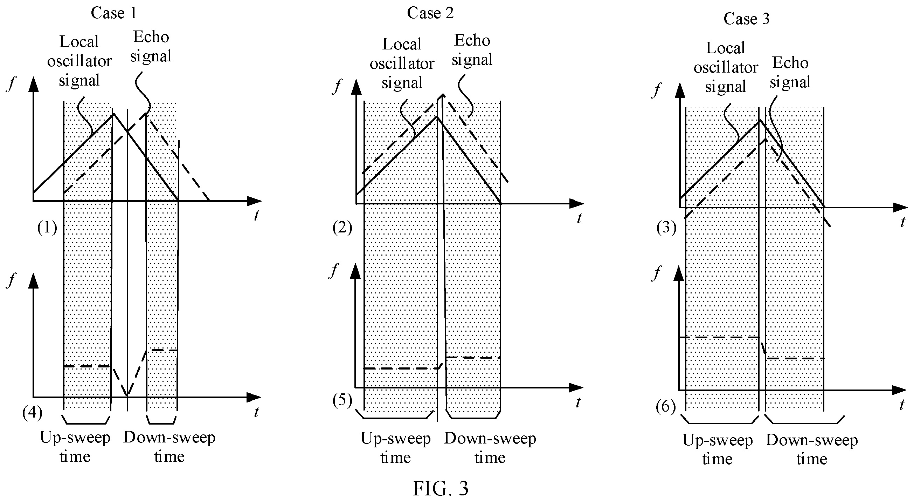

For the coherent lidar, for example, an FMCW lidar, because the echo signal carries different speed and distance information, the echo signal and the local oscillator signal have a plurality of different location relationships. When both the echo signal and the local oscillator signal are general triangular wave sweep signals, there are three relative relationships shown in FIG. 3. (1) to (3) in FIG. 3 are diagrams of frequency changes of the local oscillator signal and the echo signal in three possible cases (Case 1 to Case 3).

A receiver (which may be understood as an I receiver) for the FMCW lidar uses a 180-degree frequency mixer and a balanced detector. Therefore, positive and negative frequency components of an echo beat frequency signal cannot be distinguished. As a result, speed and distance calculation formulas in the three cases are different.

In Case 1 shown in (1) in FIG. 3, when the I receiver (or a Q receiver) is used for detection, for a frequency-mixed signal at up-sweep time and a frequency-mixed signal at down-sweep time, refer to (4) in FIG. 3. When the I receiver or the Q receiver is used for detection, because the I receiver or the Q receiver cannot distinguish between positive and negative frequencies, theoretically, for a calculation formula of a speed $V$ and a distance $R$ corresponding to Case 1, refer to Formula (1).

$$R = \frac{T(f_{up}+f_{dn})}{2B}; \quad V = \frac{\lambda(f_{dn}-f_{up})}{4} \text{ (Formula 1)}$$

In the formula, R indicates a distance between a detected target and a lidar, B indicates a sweep bandwidth of a transmitted optical signal, $\lambda$ indicates an optical wavelength, and $V$ indicates a moving speed of the detected target. $f_{up}$ indicates a frequency at the up-sweep time, $f_{dn}$ indicates a frequency at the down-sweep time, and $T$ indicates duration of a time period, for example, the up-sweep time or the down-sweep time.

In Case 2 shown in (2) in FIG. 3, when the I receiver or a Q receiver is used for detection, for a frequency-mixed signal at up-sweep time and a frequency-mixed signal at down-sweep time, refer to (5) in FIG. 3. When the I receiver or the Q receiver is used for detection, because the I receiver or the Q receiver cannot distinguish between positive and negative frequencies, theoretically, for a calculation formula of a speed $V$ and a distance R corresponding to Case 2, refer to Formula (2).

$$R = \frac{T(f_{dn}-f_{up})}{2B}; \quad V = \frac{\lambda(f_{up}+f_{dn})}{4} \text{ Formula (2)}$$

In Case 3 shown in (3) in FIG. 3, when the I receiver or a Q receiver is used for detection, for a frequency-mixed signal at up-sweep time and a frequency-mixed signal at down-sweep time, refer to (6) in FIG. 3. When the I receiver or the Q receiver is used for detection, because the I receiver or the Q receiver cannot distinguish between positive and negative frequencies, theoretically, for a calculation formula of a speed *V* and a distance *R* corresponding to Case 3, refer to Formula (3).

$$R = \frac{T(f_{up} - f_{dn})}{2B}; \quad V = \frac{\lambda(f_{up} + f_{dn})}{4} \quad \text{Formula (3)}$$

Because it is impossible to distinguish which location relationship in Case 1 to Case 3 in FIG. 3 is a location relationship between the echo signal and the local oscillator signal, for calculation of speed and distance information, it is impossible to determine a to-be-used calculation formula corresponding to a specific case. Generally, the distance and the speed information calculated by using different calculation formulas are greatly different. As a result, real information of the detected object cannot be determined, to severely affect measurement performance of the lidar. This problem is referred to as distance-speed ambiguity, or speed ambiguity.

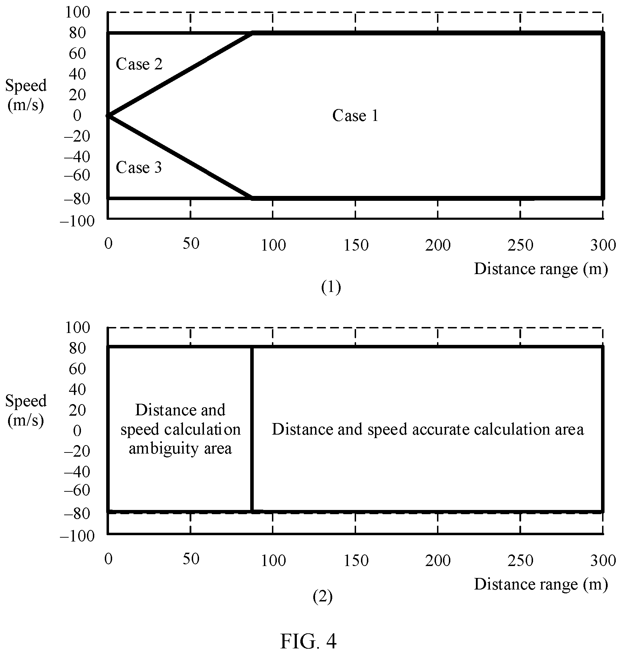

Actually, the distance-speed ambiguity problem occurs only in measurement of a target object at a short distance. It is assumed that a sweep bandwidth of the FMCW lidar is 1 GHz, and a sweep cycle is 100 kHz. Corresponding target distances and speed values in the three cases are shown in FIG. 4. Refer to (1) in FIG. 4. For a target object whose distance from the FMCW lidar is greater than about 83 m, if the formula in Case 2 or Case 3 is used to calculate the distance and speed information, it is found that the distance and speed information obtained through calculation cannot meet conditions of RE[0, 300 m] and V∈[-300 km/h, 300 km/h] at the same time. RE[0, 300 m] and V∈[-300 km/h, 300 km/h] indicate a range in which an object that can be detected by a current system may exist. Therefore, refer to (2) in FIG. 4. For a target object whose distance from the lidar is greater than 83 m, when the three formulas are used for calculation at the same time, only one appropriate solution can be obtained. However, when the distance between the target object and the lidar is less than 83 m, at least two appropriate solutions can be obtained by using the three formulas at the same time. Therefore, the distance-speed ambiguity problem still exists for a short-distance target.

For the distance-speed ambiguity problem, in embodiments of this application, sweep optical signals with different slopes are introduced, so that multi-phase reception detection is performed on a plurality of real targets in at least two time periods separately corresponding to different sweep optical signals. Because distances and speeds of the real targets obtained through calculation by using different sweep optical signals do not change, but distances and speeds of false targets change, the distances and speeds of the real targets are determined by using a same coherent detection result of the plurality of sweep optical signals, so that the virtual targets can be eliminated, and detection time is not prolonged. In addition, multi-phase detection is used during detection. A positive frequency and a negative frequency can be identified through multi-phase detection, so that a virtual target can be eliminated, to further resolve the distance-speed ambiguity problem.

In embodiments of this application, the detected object is also referred to as a reflector, and the detected object may be any object in an antenna scanning direction, for example, may be a person, a mountain, a vehicle, a tree, or a bridge. An antenna involved in embodiments of this application includes a transmit antenna for transmitting an optical signal and a receive antenna for receiving an optical signal, may also be referred to as a scanner, and is configured to transmit an optical signal and receive an optical signal.

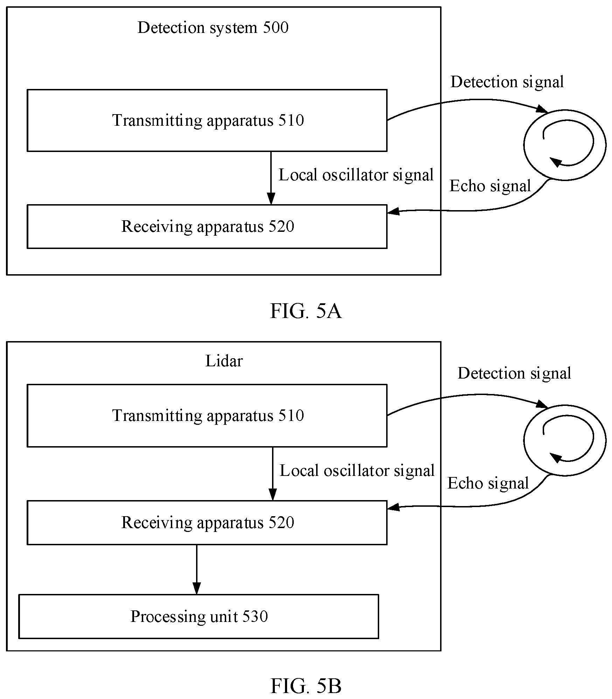

FIG. 5A is a diagram of a structure of a detection system of a lidar. A detection system 500 includes a transmitting apparatus (which may also be referred to as a transmitting component or a transmitting module) 510 and a receiving apparatus (which may also be referred to as a receiving component or a receiving module) 520. The detection system may be used in a distance measurement device or a speed measurement device, for example, may be used in an FMCW lidar, a laser speedometer, a laser rangefinder, an optical coherence tomography (optical coherence tomography, OCT) device, or an optical frequency domain reflectometer (optical frequency domain reflectometer, OFDR) device.

In some scenarios, the transmitting apparatus 510 and the receiving apparatus 520 may be located in a same electronic device. The electronic device can independently complete an entire target detection operation by using the transmitting apparatus 510 and the receiving apparatus 520 that are disposed internally. In some other scenarios, the transmitting apparatus 510 and the receiving apparatus 520 may be located in different electronic devices. For example, the transmitting apparatus 510 is located in a transmitting terminal, the receiving apparatus 520 is located in a receiving terminal, and the transmitting terminal and the receiving terminal cooperate to complete target detection. In some other scenarios, the receiving apparatus 520 is used but the transmitting apparatus 510 is not used. For example, another apparatus or component with a same transmitting function is used to complete target detection in combination with the receiving apparatus 520 in this embodiment of this application. This is not specifically limited.

The transmitting apparatus 510 is configured to transmit N sweep optical signals. N is an integer greater than 1. A sweep signal source may be generated in a manner of direct modulation (also referred to as internal modulation) of a laser, or may be generated in a manner of external modulation performed by a modulator on an optical signal generated by a laser. A structure that may be used for the sweep signal source is described in detail subsequently. Details are not described herein again.

The N sweep signals include at least two sweep optical signals having different sweep waveforms. Frequency ranges of the N sweep optical signals are different. For ease of distinguishing, the two sweep signals are referred to as a first sweep optical signal and a second sweep optical signal. In some scenarios, the frequency ranges of the N sweep optical signals are different, and wavelength ranges (or bands) of the N sweep optical signals are different.

In a first possible implementation, a sweep slope of the first sweep optical signal is different from that of the second sweep optical signal. It may also be understood that the first sweep optical signal and the second sweep optical signal meet Condition 1 and/or Condition 2.

Condition 1: The first sweep optical signal and the second sweep optical signal include at least a time period in which symbols of the sweep slopes are opposite. The time period is referred to as a first time period in this specification. It may be understood that, in the first time period, the symbols of the sweep slopes of the first sweep optical signal and the second sweep optical signal are opposite.

Condition 2: An absolute value of the sweep slope of the first sweep optical signal is different from an absolute value of the sweep slope of the second sweep optical signal in the first time period.

In a second possible implementation, the first sweep optical signal and the second sweep optical signal meet Condition 3.

Condition 3: In a specific time period, a sweep slope of one of the first sweep optical signal and the second sweep optical signal is 0, and a sweep slope of the other sweep optical signal is not 0. For example, in a first time period, a sweep slope of the first sweep optical signal is 0, and a sweep slope of the second sweep optical signal is not 0. Alternatively, in a first time period, a sweep slope of the first sweep optical signal is not 0, and a sweep slope of the second sweep optical signal is 0.

In some possible embodiments, the N sweep optical signals further meet at least one of Condition 4 to Condition 7.

Condition 4: All the N sweep optical signals are cyclic sweep optical signals, or a sweep optical signal is a constant frequency signal, in other words, a sweep slope of the sweep optical signal is 0. In some embodiments, signal cycles of the N sweep optical signals meet a multiple relationship. The multiple may alternatively be 1. In other words, the signal cycles of the sweep optical signals are equal. The first sweep optical signal and the second sweep optical signal are used as an example, and both the first sweep optical signal and the second sweep optical signal are cyclic sweep optical signals. For example, signal cycles of the first sweep optical signal and the second sweep optical signal meet the multiple relationship. For example, the signal cycle of the first sweep optical signal is K times the signal cycle of the second sweep optical signal, or the signal cycle of the second sweep optical signal is K times the signal cycle of the first sweep optical signal. K may be 1, or may be an integer greater than 1.

Condition 5: In a target signal cycle, the first sweep optical signal and the second sweep optical signal have two time periods in which symbols of sweep slopes are opposite. To be specific, it may be understood that, in addition to the first time period in which the symbols of the sweep slopes of the first sweep optical signal and the second sweep optical signal are opposite, there is at least one time period in which symbols of sweep slopes of the first sweep optical signal and the second sweep optical signal are opposite. For ease of distinguishing, a time period other than the first time period is referred to as a second time period. The target signal cycle herein is a larger value of a signal cycle of the first sweep optical signal and a signal cycle of the second sweep optical signal. For example, the signal cycle of the first sweep optical signal is greater than or equal to the signal cycle of the second sweep signal. In the signal cycle of the first sweep optical signal, the symbol of the sweep slope of the first sweep signal in the first time period is opposite to a symbol of a sweep slope of the first sweep signal in the second time period; the symbol of the sweep slope of the second sweep signal in the first time period is opposite to a symbol of a sweep slope of the second sweep signal in the second time period; the sweep slope of the first sweep signal in the first time period is different from the sweep slope of the second sweep signal in the second time period; and the sweep slope of the second sweep signal in the first time period is different from the sweep slope of the first sweep signal in the second time period.

Condition 6: There is a guard bandwidth between two sweep optical signals of adjacent frequencies in the N sweep optical signals. Settings of the guard bandwidth are related to a receive bandwidth of an antenna. The first sweep optical signal and the second sweep optical signal are used as an example, and the first sweep optical signal and the second sweep optical signal are two sweep optical signals with a smallest frequency difference in the N sweep optical signals. The smallest frequency difference between the first sweep optical signal and the second sweep optical signal is related to the receive bandwidth of the antenna.

For example, the smallest frequency difference between the first sweep optical signal and the second sweep optical signal meets a condition shown in Formula (4).

$$min(|f_1 - f_2|) > |fR_1| + |fR_2| + fOE \quad \text{Formula (4)}$$

In the formula, $f_1$ indicates a sweep range of the first sweep optical signal, $f_2$ indicates a sweep range of the second sweep optical signal, $fR_1$ indicates a maximum value of a frequency shift amount of an echo signal of the first sweep optical signal relative to a local oscillator signal of the first sweep optical signal, $fR_2$ indicates a maximum value of a frequency shift amount of an echo signal of the second sweep optical signal relative to a local oscillator signal of the second sweep optical signal, and *fOE* indicates the receive bandwidth of the antenna.

When different sweep optical signals have a specific guard bandwidth in frequency domain (in other words, when Condition 6 is met), generation of an unnecessary beat frequency signal may be prevented, thereby preventing a calculation error and reducing a speed or distance calculation complexity.

Condition 7: Sweep slopes of the first sweep optical signal and the second sweep optical signal meet a condition shown in Formula (5).

$$\text{round}\left(\frac{2K_1 R_{min}}{c}\right) > \text{round}\left(\frac{2K_2 R_{min}}{c}\right) \text{ or } \text{round}\left(\frac{2K_2 R_{min}}{c}\right) > \text{round}\left(\frac{2K_1 R_{min}}{c}\right) \quad \text{Formula (5)}$$

In the formula, round( ) indicates a round-off operation, $K_1$ indicates an absolute value of a sweep slope of the first sweep signal in a first time period, $K_2$ indicates an absolute value of a sweep slope of the second sweep signal in the first time period, $R_{min}$ indicates a minimum detectable distance of the lidar, and c indicates a speed of light.

For example, in embodiments of this application, conditions met by the N sweep optical signals may include a plurality of combinations of the foregoing conditions. For example, the N sweep optical signals meet Condition 1+Condition 2+Condition 6+Condition 7. For another example, the N sweep optical signals meet Condition 3+Condition 6+Condition 7. For another example, the N sweep optical signals meet Condition 1+Condition 2+Condition 4+Condition 5+Condition 6+Condition 7. For another example, the N sweep optical signals meet Condition 1+Condition 2+Condition 5+Condition 6+Condition 7, and the like. Examples are not enumerated one by one herein.

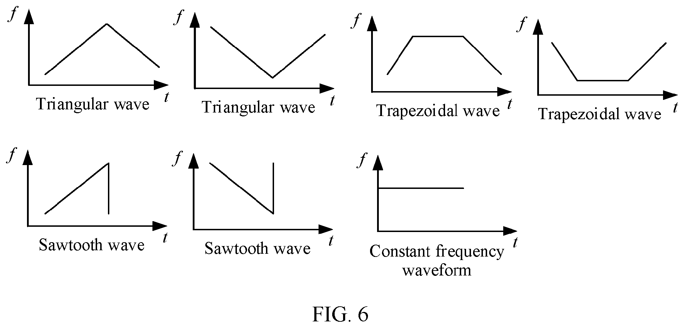

In some embodiments, each cyclic signal of the N sweep optical signals in this application may use various sweep waveforms whose frequencies linearly change with time, such as a triangular wave, a trapezoid wave, and a sawtooth wave, or may use any combination of the foregoing waveforms. In some other embodiments, some sweep optical signals may use a constant frequency waveform. In other words, a sweep slope is 0. In an example, refer to a sweep waveform shown in FIG. 6.

In some embodiments, after generating the N sweep optical signals, the transmitting apparatus 510 may multiplex the N sweep optical signals into one transmit optical signal. A multiplexing manner may be frequency multiplexing (or wavelength division multiplexing), polarization multiplexing, or time division multiplexing. In the polarization multiplexing manner, there is no requirement on the guard bandwidth, described in Condition 6, between the N sweep optical signals. A multiplexed transmit optical signal may be understood as including the N sweep optical signals. In some embodiments, in the transmitting apparatus 510, the multiplexed transmit optical signal may be split into two channels via an optical splitting component. One channel is used as a transmit signal and transmitted through the antenna, and the other channel is used as a local oscillator signal and transmitted to the receiving apparatus. In some other embodiments, the N sweep optical signals may be separately split, one channel of each sweep optical signal is used as a local oscillator signal, and the other channel is used to generate a transmit signal. The local oscillator signal of each sweep optical signal is transmitted to the receiving apparatus, and the transmit signal is transmitted through the antenna, to obtain an echo signal. The receiving apparatus 520 receives a local oscillator signal (the N sweep optical signals) from the transmitting apparatus 510, and also receives an echo signal that is returned after the transmit signal is reflected by the target object. Therefore, the receiving apparatus 520 performs frequency mixing on the echo signal by using the local oscillator signal, to obtain a detection result.

In a possible implementation, the detection system may be applied to a lidar, and the lidar may further include a processing unit 530. FIG. 5B is a diagram of a possible structure of the lidar. The processing unit 530 may have a signal processing control capability. For example, the processing unit 530 includes but is not limited to a controller 531 and a signal processor 532. The controller 531 may be configured to complete a driving control capability of another component in the lidar, and the signal processor 532 is configured to complete a capability of processing a signal returned by the another component in the lidar. In another scenario, the controller 531 and the signal processor 532 may be integrated into one component for implementation, or functions may be separately implemented in a plurality of components. This is not specifically limited. The processing unit 530 may process (or analyze) a detection result of the receiving apparatus 520 to obtain positioning information, for example, a distance, a speed, a height, and a posture, of a detected object (namely, a target object).

It should be noted that the processing unit 530 may be an integrated circuit chip, for example, a general-purpose processor, a field programmable gate array (field programmable gate array, FPGA), an application-specific integrated circuit (application-specific integrated circuit, ASIC), a system on a chip (system on a chip, SoC), a network processor (network processor, NP), a digital signal processor (digital signal processor, DSP), a micro controller unit (micro controller unit, MCU), a programmable logic device (programmable logic device, PLD), or another programmable logic device, a discrete gate or a transistor logic device, a discrete hardware component, or another integrated chip. The processing unit 530 may include a central processing unit (central processing unit, CPU), a neural-network processing unit (neural-network processing unit, NPU), and a graphics processing unit (graphics processing unit, GPU), and may further include an application processor (application processor, AP), a modem processor, an image signal processor (image signal processor, ISP), a video codec, a digital signal processor (digital signal processor, DSP), and/or a baseband processor. This is not specifically limited.

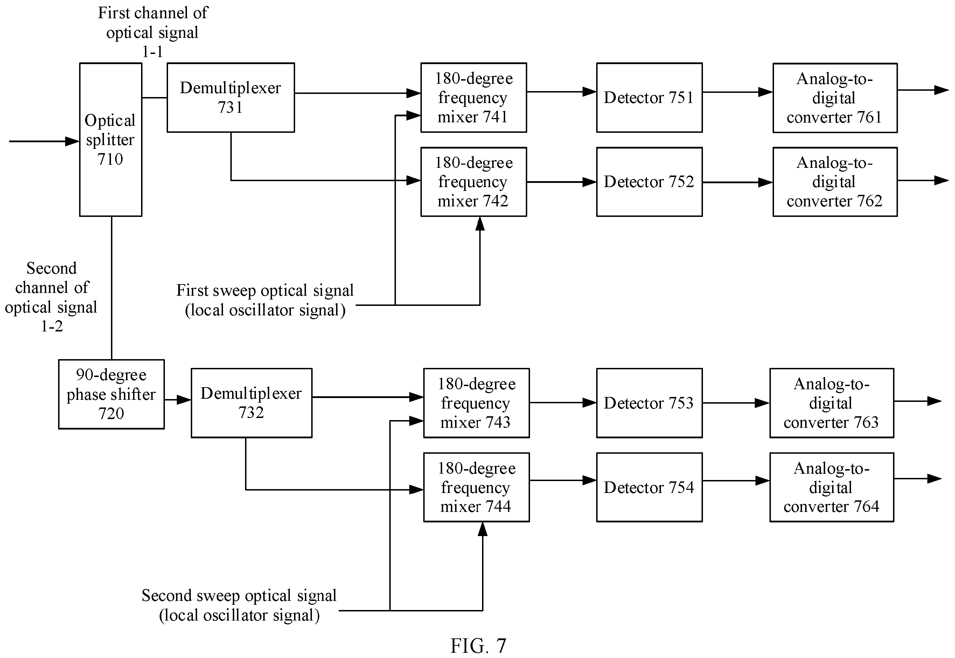

FIG. 7 is a diagram of a possible structure of a receiving apparatus 520 for a lidar according to an embodiment of this application. In FIG. 7, two phases are used as an example. In other words, IQ detection is used as an example.

The receiving apparatus includes an optical splitter 710, a 90-degree phase shifter 720, a demultiplexer 731, and a demultiplexer 732. The receiving apparatus further includes 2N 180-degree frequency mixers, 2N detectors, and 2N analog-to-digital converters (analog-to-digital converters, ADCs).

The optical splitter 710 may be a power optical splitter. The optical splitter 710 receives one channel of optical signal. The channel of optical signal includes N echo signals, and the N echo signals are in one-to-one correspondence with N sweep optical signals. The N echo signals may be understood as echo signals that are separately reflected back by a positioned object after the N sweep optical signals are transmitted. The optical splitter 710 splits the received channel of optical signal into two channels of optical signals: a first channel of optical signal 1-1 and a second channel of optical signal 1-2. That the channel of optical signal passes through the optical splitter 710 may be understood as that each echo signal is split into two channels of echo signals. One channel of echo signal is input to the demultiplexer 731, and the other channel of echo signal is input to the 90-degree phase shifter 720. For example, the first channel of optical signal 1-1 is input to the demultiplexer 731, and the second channel of optical signal 1-2 is input to the 90-degree phase shifter 720. The demultiplexer 731 demultiplexes the first channel of optical signal 1-1 to obtain N first channel of echo signals, and the second channel of optical signal 1-2 is input to the demultiplexer 732 after the 90-degree phase shifter 720 performs phase adjustment on the second channel of optical signal 1-2. The demultiplexer 732 demultiplexes the second channel of optical signal 1-2 after the phase adjustment to obtain N second channels of echo signals. A phase difference between the two channels of echo signals of each echo signal is 90 degrees. Every two 180-degree frequency mixers in the 2N 180-degree frequency mixers use a corresponding local oscillator signal for the two channels of echo signals of each echo signal, that is, perform frequency mixing on a corresponding sweep optical signal, to output 2N channels of frequency-mixed signals. Then, the 2N detectors perform detection on the 2N channels of frequency-mixed signals, and then the 2N analog-to-digital converters perform analog-to-digital conversion to obtain detection results. In FIG. 7, an example in which two sweep optical signals are respectively a first sweep optical signal and a second sweep optical signal is used. The two sweep optical signals have different bands. The two sweep optical signals have different bands, so that the two demultiplexers may be wavelength division multiplexers (beam splitters, BSs). The two sweep optical signals have different polarization directions, so that the two demultiplexers may alternatively be polarization beam splitters (polarization beam splitters, PBSs). The two sweep optical signals are transmitted in a time division multiplexing manner, so that the demultiplexers may alternatively be time-domain optical splitters. It should be noted that the polarization beam splitter may alternatively be replaced with a polarization rotator splitter (polarization rotator splitter, PRS) having a similar function. Details are not described herein again. In FIG. 7, the four 180-degree frequency mixers are respectively a 180-degree frequency mixer 741 to a 180-degree frequency mixer 744, and the four detectors are respectively a detector 751 to a detector 754. The four analog-to-digital converters are respectively an analog-to-digital converter 761 to an analog-to-digital converter 764.

From the foregoing structure of the receiving apparatus in FIG. 7, when the two sweep optical signals are used, the four detectors and the four ADCs are needed. As a result, a large quantity of components are used, costs are high, and a large amount of data needs to be processed. In some scenarios, to reduce the costs, embodiments of this application provide another feasible solution. Signals having different phases in echo signals for different sweep optical signals are multiplexed, to reduce a quantity of used detection units (detectors and ADCs), and then to reduce the costs.

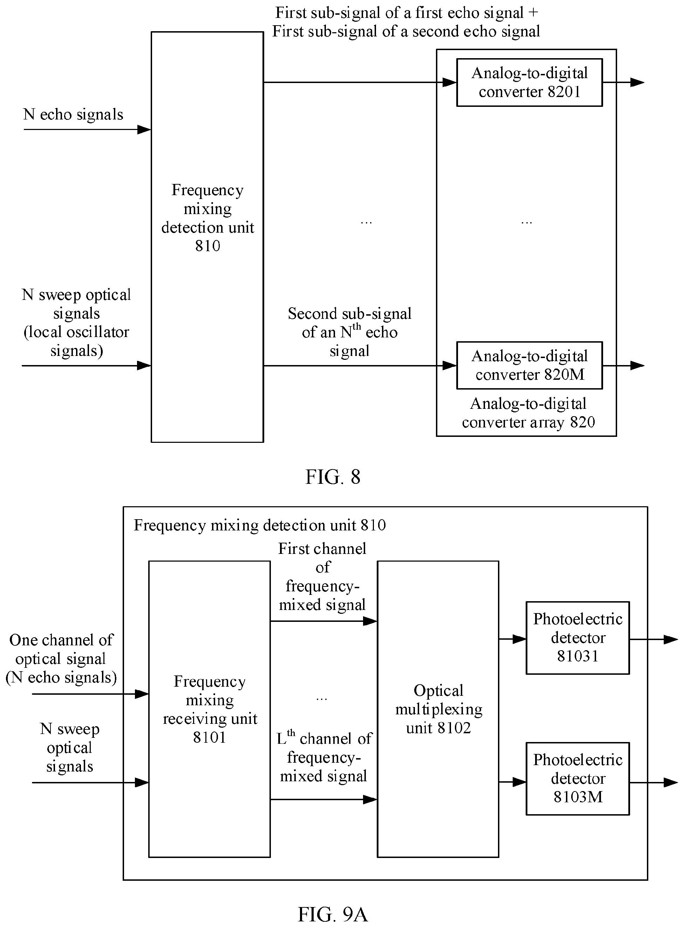

FIG. 8 is a diagram of a possible structure of a receiving apparatus 520 for a lidar according to an embodiment of this application. The receiving apparatus 520 includes a frequency mixing detection unit 810 and M analog-to-digital converters. The M analog-to-digital converters may be arranged in an array manner, or may be arranged in another manner. This is not specifically limited in embodiments of this application. For example, the M analog-to-digital converters are arranged in the array manner, and an array formed by the M analog-to-digital converters is referred to as an analog-to-digital converter array 820. The analog-to-digital converter array 820 includes the M analog-to-digital converters: analog-to-digital converters 8201 to 820M.

The frequency mixing detection unit 810 is configured to: receive an optical signal, where the optical signal includes N echo signals, N is an integer greater than 1, and the N echo signals are in one-to-one correspondence with N sweep optical signals; and perform signal processing on the N sweep optical signals and the N echo signals to obtain M channels of detection signals, where M is an integer greater than or equal to 2. The N sweep optical signals may meet the foregoing conditions. Details are not described herein again. The signal processing includes frequency mixing and photoelectric detection.

The M analog-to-digital converters 8201 to 820M are respectively configured to perform analog-to-digital conversion on the M channels of detection signals to obtain M detection results.

Frequency mixing is performed on at least one of the N echo signals to obtain optical sub-signals having at least two phases. Optical sub-signals having different phases are detected to obtain electrical sub-signals having different phases. The M channels of detection signals include at least three electrical sub-signals that belong to at least two echo signals. Phases of at least two electrical sub-signals in the at least three electrical sub-signals are different. Phases of electrical sub-signals that belong to a same echo signal and that are included in the at least three electrical sub-signals are different. For example, the at least two echo signals include a first echo signal corresponding to a first sweep optical signal and a second echo signal corresponding to a second sweep optical signal. A first detection signal in the M channels of detection signals includes at least an electrical sub-signal of a first echo signal corresponding to the first sweep optical signal and an electrical sub-signal of a second echo signal corresponding to the second sweep optical signal; a second detection signal in the M channels of detection signals includes at least an electrical sub-signal of the first echo signal; and the electrical sub-signal of the first echo signal in the first detection signal and the electrical sub-signal of the first echo signal in the second detection signal have different phases.

In a possible implementation, the electrical sub-signal of the first echo signal and the electrical sub-signal of the second echo signal in the first detection signal may have a same phase or different phases.

In another possible implementation, the second detection signal further includes an electrical sub-signal of the second echo signal. The electrical sub-signal of the first echo signal and the electrical sub-signal of the second echo signal in the second detection signal may have a same phase or different phases. The electrical sub-signal of the second echo signal in the first detection signal and the electrical sub-signal of the second echo signal in the second detection signal have different phases.

For example, each echo signal includes electrical sub-signals having K phases, where M=K. Each channel of detection signal may include an electrical sub-signal having one phase of each of the N echo signals obtained through signal processing. Electrical sub-signals of different echo signals in a same detection signal may have a same phase or different phases. K electrical sub-signals that belong to a same echo signal in K channels of detection signals have different phases.

For another example, signal processing is performed on each echo signal to obtain a first electrical sub-signal and a second electrical sub-signal, and a quantity of sweep optical signals is N. M=N+1. One channel of detection signal includes first electrical sub-signals of two echo signals obtained through signal processing. The remaining N-1 channels of detection signals include second electrical sub-signals of N-1 echo signals. Alternatively, one channel of detection signal includes a first electrical sub-signal of one echo signal and a second electrical sub-signal of the other echo signal that are obtained through signal processing. The remaining N-1 channels of detection signals include second electrical sub-signals (or first electrical sub-signals) of N-1 echo signals. It should be understood that electrical sub-signals that belong to a same echo signal in different detection signals have different phases. For example, signal processing is performed on each echo signal to obtain a first electrical sub-signal and a second electrical sub-signal, and a quantity of sweep optical signals is 2. The first detection signal includes first electrical sub-signals of two echo signals obtained through signal processing. The second detection signal includes second electrical sub-signals of the two echo signals. Alternatively, the first detection signal includes first electrical sub-signals of two echo signals obtained through signal processing, and the second detection signal includes a second electrical sub-signal of one of the echo signals. Alternatively, the first detection signal includes a first electrical sub-signal of one echo signal and a second electrical sub-signal of the other echo signal that are obtained through signal processing, and the second detection signal includes a first electrical sub-signal of one of the echo signals or a second electrical sub-signal of one of the echo signals.

In some possible implementations, FIG. 9A is a diagram of a possible structure of a frequency mixing detection unit according to an embodiment of this application. The frequency mixing detection unit 810 may include a frequency mixing receiving unit 8101, an optical multiplexing unit 8102, and M photoelectric detectors 81031 to 8103M. The frequency mixing receiving unit 8101 is configured to: receive an optical signal, where the optical signal includes N echo signals, N is an integer greater than 1, and the N echo signals are in one-to-one correspondence with N sweep optical signals; and perform frequency mixing on the N sweep optical signals and the N echo signals to obtain L channels of frequency-mixed signals, where L is greater than N. The L channels of frequency-mixed signals include at least optical sub-signals having different phases that belong to a same echo signal. For example, the L channels of frequency-mixed signals include at least a first optical sub-signal of one channel of first echo signal and a second optical sub-signal of the one channel of first echo signal, and further includes optical sub-signals of the remaining N-1 echo signals. The optical multiplexing unit 8102 is configured to multiplex the L channels of frequency-mixed signals to obtain M channels of multiplexed signals. The M photoelectric detectors 81031 to 8103M respectively perform photoelectric detection on the M channels of multiplexed signals to obtain the M channels of detection signals. Then, the M analog-to-digital converters 8201 to 820M respectively perform analog-to-digital conversion on the M channels of detection signals to obtain the M detection results.

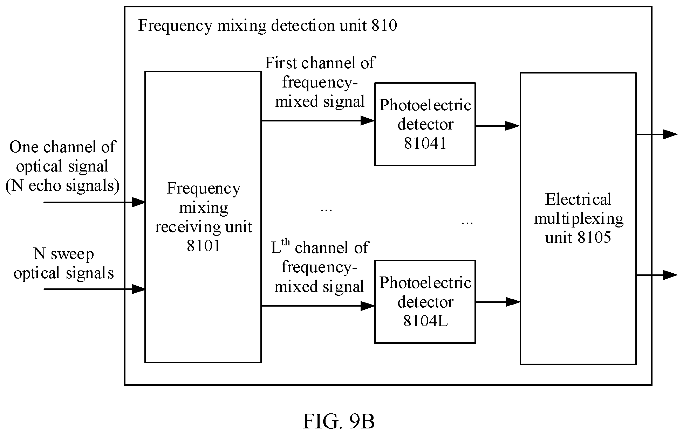

In some other possible implementations, FIG. 9B is a diagram of another possible structure of a frequency mixing detection unit according to an embodiment of this application. The frequency mixing detection unit 810 may include a frequency mixing receiving unit 8101, L photoelectric detectors 81041 to 8104L, and an electrical multiplexing unit 8105. The frequency mixing receiving unit 8101 is configured to: receive an optical signal, where the optical signal includes N echo signals, N is an integer greater than 1, and the N echo signals are in one-to-one correspondence with N sweep optical signals; and perform frequency mixing on the N sweep optical signals and the N echo signals to obtain L channels of frequency-mixed signals. L is greater than or equal to N. The L channels of frequency-mixed signals at least include at least two optical sub-signals of the first echo signal and at least one optical sub-signal of the second echo signal, and the at least two optical sub-signals of the first echo signal have different phases. The L photoelectric detectors 81041 to 8104L respectively perform frequency mixing on the L channels of frequency-mixed signals to obtain L channels of detection signals. The electrical multiplexing unit 8105 is configured to multiplex the L channels of detection signals into the M channels of detection signals.

In FIG. 9A and FIG. 9B, locations of the photoelectric detectors are different. In FIG. 9A, a frequency-mixed signal is first multiplexed, and then undergoes photoelectric detection. In FIG. 9B, a frequency-mixed signal first undergoes photoelectric detection, and then is multiplexed. In comparison with the solution in FIG. 9B, a quantity of photoelectric detectors may be reduced in FIG. 9A. In comparison with the solution in FIG. 7, a quantity of used ADCs may also be reduced in the foregoing solutions, thereby reducing costs.

In a manner, the frequency mixing receiving unit 8101 first performs echo unit demultiplexing, and then performs beam splitting and phase adjustment. The frequency mixing receiving unit 8101 is specifically configured to:
separately split P sweep optical signals in the N sweep optical signals to obtain L channels of sweep optical signals, where each of the P sweep optical signals is split into S channels of sweep optical signals, and L meets L=P×(S-1)+N; demultiplex the channel of optical signal to obtain the N echo signals, and separately split P echo signals in the N echo signals to obtain L channels of echo signals, where each of the P echo signals is split into S channels of echo signals; perform phase adjustment on S-1 channels of echo signals corresponding to each of the P echo signals, where adjusted phases of different channels of echo signals that belong to a same echo signal are different; and respectively perform frequency mixing on the L channels of sweep optical signals and the L channels of echo signals in one-to-one correspondence to obtain the L channels of frequency-mixed signals.

In another manner, the frequency mixing receiving unit 8101 performs beam splitting and phase adjustment, and then performs echo unit demultiplexing. The frequency mixing receiving unit 8101 is specifically configured to:
separately split P sweep optical signals in the N sweep optical signals to obtain L channels of sweep optical signals, where each of the P sweep optical signals is split into S channels of sweep optical signals, and L meets L=P×(S-1)+N; split the channel of optical signal into S channels of optical signals, and demultiplex one of the S channels of optical signals to obtain N channels of echo signals, where different channels of echo signals belong to different echo signals; separately demultiplex S-1 channels of optical signals to obtain P channels of echo signals, where the P channels of echo signals belong to different echo signals; perform phase adjustment on (S-1)×P channels of echo signals that are obtained by demultiplexing the S-1 channels of optical signals, where adjusted phases of different channels of echo signals that belong to a same echo signal are different; and respectively perform frequency mixing on the L channels of sweep optical signals and L channels of echo signals in one-to-one correspondence to obtain the L channels of frequency-mixed signals.

In a possible implementation, the frequency mixing receiving unit may include a beam splitting unit and a 180-degree frequency mixing unit. The beam splitting unit is configured to perform beam splitting on a sweep optical signal and an echo signal, where phases of different channels of echo signals that belong to a same echo signal are different. The following uses N=2 as an example to describe the solution in detail. For ease of differentiation, when N=S=P=2, a used beam splitting unit is referred to as a first beam splitting unit, and a used 180-degree frequency mixing unit is referred to as a first 180-degree frequency mixing unit; and when N=S=2 and P=1, a used beam splitting unit is referred to as a second beam splitting unit, and a used 180-degree frequency mixing unit is referred to as a second 180-degree frequency mixing unit.

The following uses the solution in FIG. 9A as an example to describe structures of the frequency mixing receiving unit 8101 and the optical multiplexing unit 8102 respectively. For a structure of the frequency mixing receiving unit in FIG. 9B, refer to the descriptions of the structure of the frequency mixing receiving unit 8101 in FIG. 9A. Details are not described herein again. In the following examples, N=2, and M=2.

### Example 1

For example, there are two sweep optical signals: a first sweep optical signal S0 and a second sweep optical signal S1. Echo signals respectively corresponding to the first sweep optical signal S0 and the second sweep optical signal S1 are a first echo signal U0 and a second echo signal U1. Two optical sub-signals are output after frequency mixing is performed on the first echo signal U0, and two optical sub-signals are output after frequency mixing is performed on the second echo signal U1. Phases of the two optical sub-signals (a first optical sub-signal and a second optical sub-signal) output after frequency mixing is performed on the first echo signal U0 are different. Phases of the two optical sub-signals (a first optical sub-signal and a second optical sub-signal) output after frequency mixing is performed on the second echo signal U1 are different. The first optical sub-signal of U0 and the first optical sub-signal of U1 have a same phase. The second optical sub-signal of U0 and the second optical sub-signal of U1 have a same phase. For example, the first optical sub-signal may be an I signal, and the second optical sub-signal may be a Q signal; or the first optical sub-signal is a Q signal, and the second optical sub-signal may be an I signal.

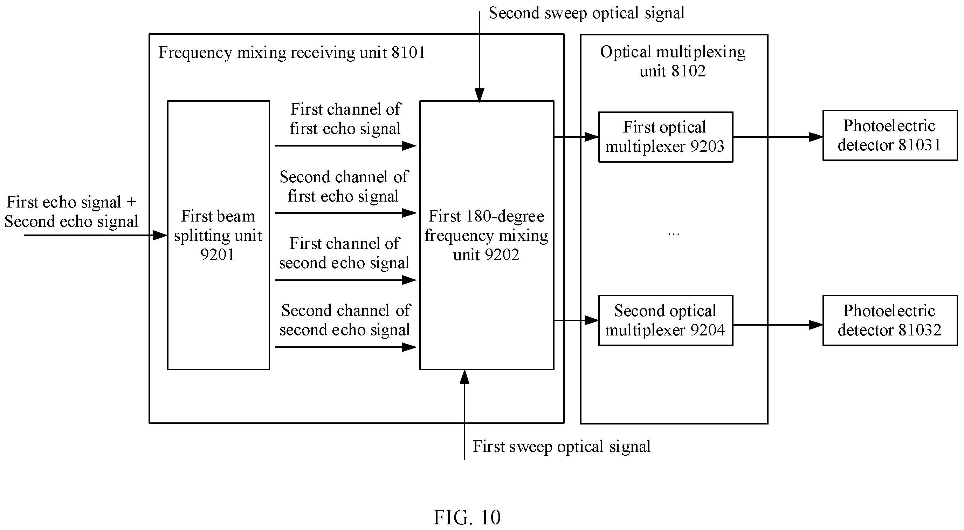

FIG. 10 is a diagram of a possible structure of a frequency mixing detection unit 810 according to an embodiment of this application. The frequency mixing receiving unit 8101 in the frequency mixing detection unit 810 includes a first beam splitting unit 9201 and a first 180-degree frequency mixing unit 9202. The optical multiplexing unit 8102 includes a first optical multiplexer 9203 and a second optical multiplexer 9204. Two photoelectric detectors are respectively photoelectric detectors 81031 and 81032.

The first beam splitting unit 9201 performs beam splitting on the first echo signal in the received channel of optical signal to obtain two channels of first echo signals, and performs beam splitting on the second echo signal in the received channel of optical signal to obtain two channels of second echo signals, where the two channels of first echo signals have different phases, and the two second echo signals have different phases. An example in which phases of optical sub-signals that belong to two different echo signals and that are of a frequency-mixed signal are the same is used in FIG. 10.

The first 180-degree frequency mixing unit 9202 is configured to: separately perform frequency mixing on the two channels of first echo signals by using the first sweep optical signal, to obtain a first optical sub-signal of the first echo signal and a second optical sub-signal of the first echo signal; and separately perform frequency mixing on the two channels of second echo signals by using the second sweep optical signal, to obtain a first optical sub-signal of the second echo signal and a second optical sub-signal of the second echo signal.

The first optical multiplexer 9203 is configured to multiplex the first optical sub-signal of the first echo signal and the first optical sub-signal of the second echo signal into a first frequency-mixed signal, where the first optical sub-signal of the first echo signal and the first optical sub-signal of the second echo signal have a same phase.

The second optical multiplexer 9204 is configured to multiplex the second optical sub-signal of the first echo signal and the second optical sub-signal of the second echo signal into a second frequency-mixed signal, where the second optical sub-signal of the first echo signal and the second optical sub-signal of the second echo signal have a same phase.

In embodiments of this application, the optical multiplexer may also be referred to as an optical coupler, and is configured to perform beam combination or multiplexing. Multiplexing may be performed in a frequency division multiplexing manner, or in a polarization multiplexing manner, or in a wavelength division multiplexing manner.

The following describes a structure of the first beam splitting unit 9201. The following uses two structures as an example: Structure 1-1 and Structure 1-2.

Structure 1-1

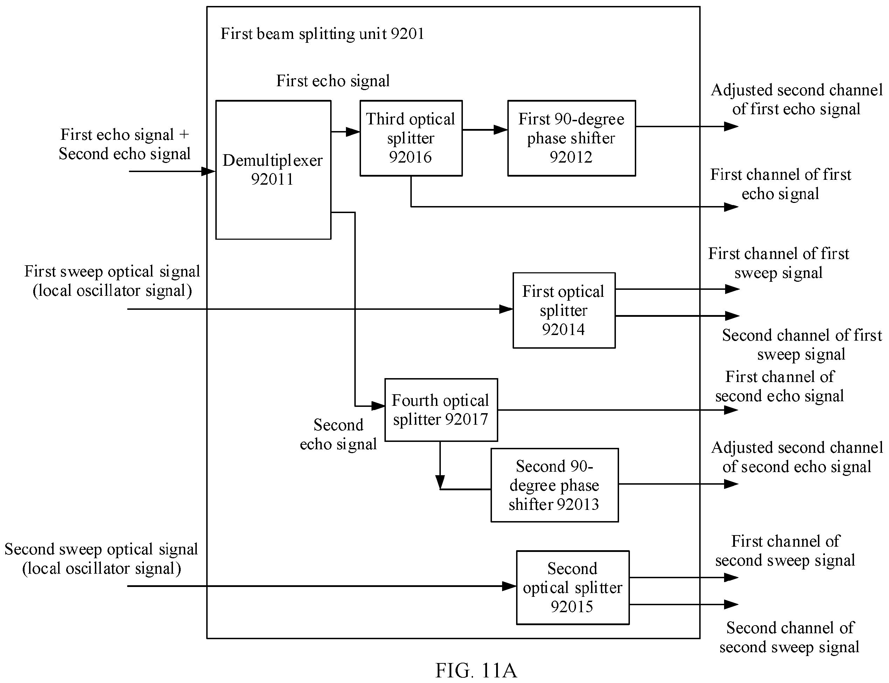

Refer to FIG. 11A. The first beam splitting unit 9201 includes a demultiplexer 92011, a first 90-degree phase shifter 92012, a second 90-degree phase shifter 92013, a first optical splitter 92014, a second optical splitter 92015, a third optical splitter 92016, and a fourth optical splitter 92017. The demultiplexer 92011 demultiplexes the received optical signal to obtain the first echo signal and the second echo signal. The first optical splitter 92014 demultiplexes the first sweep optical signal into a first channel of first sweep optical signal and a second channel of first sweep optical signal. The second optical splitter 92015 demultiplexes the second sweep optical signal into a first channel of second sweep optical signal and a second channel of second sweep optical signal. The third optical splitter 92016 demultiplexes the first echo signal into a first channel of first echo signal and a second channel of first echo signal. The fourth optical splitter 92017 demultiplexes the second echo signal into a first channel of second echo signal and a second channel of second echo signal. The first 90-degree phase shifter 92012 adjusts a phase of the second channel of first echo signal by 90 degrees, to obtain an adjusted second channel of first echo signal. The second 90-degree phase shifter 92013 adjusts a phase of the second channel of second echo signal by 90 degrees, to obtain an adjusted second channel of second echo signal.

The two sweep optical signals have different bands. The two sweep optical signals have different bands, so that the demultiplexer 92011 may be a wavelength division multiplexer (beam splitter, BS). The two sweep optical signals have different polarization directions, so that the demultiplexer 92011 may alternatively be a polarization beam splitter (polarization beam splitter, PBS). The two sweep optical signals are transmitted in a time division multiplexing manner, so that the demultiplexer 92011 may alternatively be a time-domain optical splitter. It should be noted that the polarization beam splitter may alternatively be replaced with a polarization rotator splitter (polarization rotator splitter, PRS) having a similar function. Details are not described herein again.

Structure 1-2

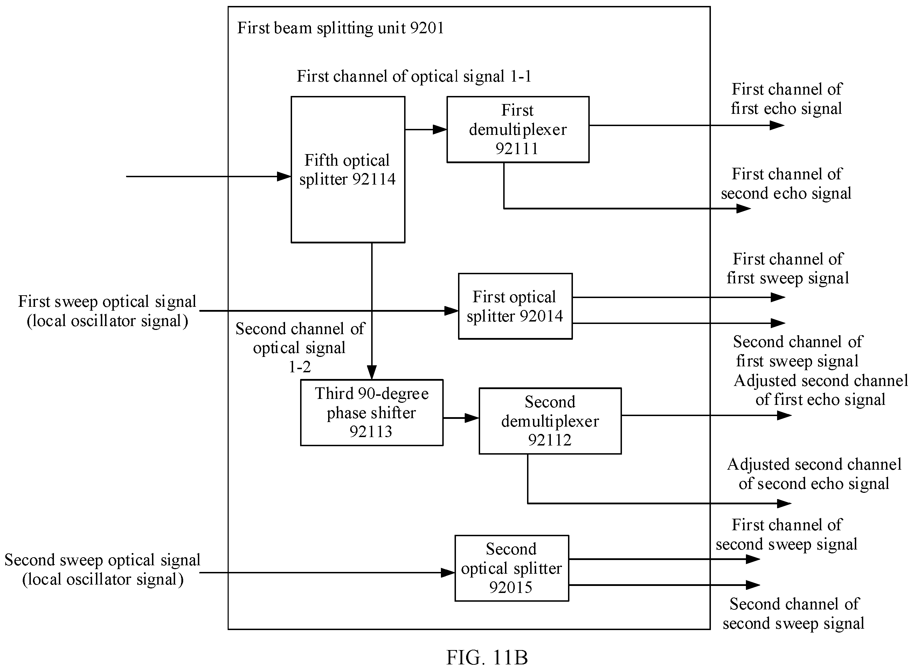

Refer to FIG. 11B. The first beam splitting unit 9201 includes a first demultiplexer (Demux) 92111, a second demultiplexer 92112, a third 90-degree phase shifter 92113, a first optical splitter 92014, a second optical splitter 92015, and a fifth optical splitter 92114. The first optical splitter 92014 demultiplexes the first sweep optical signal into a first channel of first sweep optical signal and a second channel of first sweep optical signal. The second optical splitter 92015 demultiplexes the second sweep optical signal into a first channel of second sweep optical signal and a second channel of second sweep optical signal. The fifth optical splitter 92114 demultiplexes the received channel of optical signal into a first channel of optical signal 1-1 and a second channel of optical signal 1-2. The third 90-degree phase shifter 92113 adjusts a phase of the second channel of optical signal 1-2 to obtain an adjusted second channel of optical signal. The first demultiplexer 92111 demultiplexes the first channel of optical signal to obtain a first channel of first echo signal and a first channel of second echo signal. The second demultiplexer 92112 demultiplexes the adjusted second channel of optical signal to obtain an adjusted second channel of first echo signal and an adjusted second cannel of second echo signal.

The two sweep optical signals have different bands. The two sweep optical signals have different bands, so that the first demultiplexer 92111 and the second demultiplexer 92112 may be wavelength division multiplexers (beam splitters, BSs). The two sweep optical signals have different polarization directions, so that the first demultiplexer 92111 and the second demultiplexer 92112 may alternatively be polarization beam splitters (polarization beam splitters, PBSs). The two sweep optical signals are transmitted in a time division multiplexing manner, so that the first demultiplexer 92111 and the second demultiplexer 92112 may alternatively be time-domain optical splitters. It should be noted that the polarization beam splitter may alternatively be replaced with a polarization rotator splitter (polarization rotator splitter, PRS) having a similar function. Details are not described herein again.

In Example 1, the first 180-degree frequency mixing unit 9202 may include four 180-degree frequency mixers: a first 180-degree frequency mixer 92021, a second 180-degree frequency mixer 92022, a third 180-degree frequency mixer 92023, and a fourth 180-degree frequency mixer 92024.

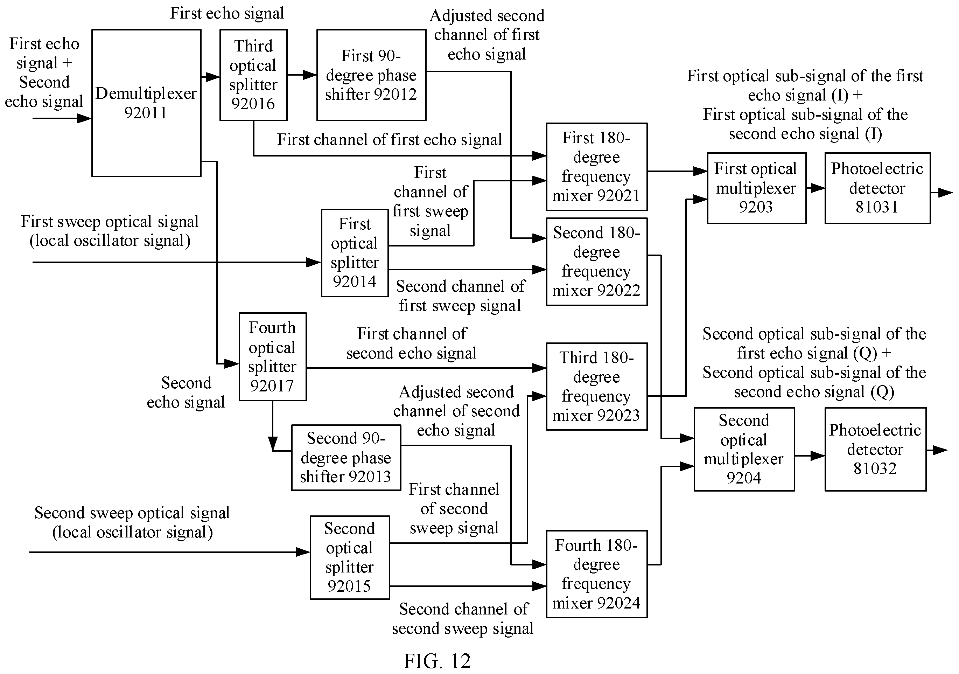

FIG. 12 is a diagram of a possible structure of a frequency mixing detection unit 810 according to Example 1 according to an embodiment of this application. An example in which the first optical sub-signal is an I signal and the second optical sub-signal is a Q signal is used in FIG. 12. For example, the first beam splitting unit 9201 in FIG. 12 uses Structure 1-1 shown in FIG. 11A. The first 180-degree frequency mixer 92021 performs frequency mixing on the first channel of first echo signal output by the third optical splitter 92016 and the first channel of first sweep optical signal output by the first optical splitter 92014, to obtain the first optical sub-signal of the first echo signal. The second 180-degree frequency mixer 92022 performs frequency mixing on the adjusted second channel of first echo signal output by the first 90-degree phase shifter 92012 and the second channel of first sweep optical signal output by the first optical splitter 92014, to obtain the second optical sub-signal of the first echo signal. The third 180-degree frequency mixer 92023 performs frequency mixing on the first channel of second echo signal output by the fourth optical splitter 92017 and the first channel of second sweep optical signal output by the second optical splitter 92015, to obtain the first optical sub-signal of the second echo signal. The fourth 180-degree frequency mixer 92024 performs frequency mixing on the adjusted second channel of second echo signal output by the second 90-degree phase shifter 92013 and the second channel of second sweep optical signal output by the second optical splitter 92015, to obtain the second optical sub-signal of the second echo signal. Further, the first optical multiplexer 9203 multiplexes the first optical sub-signal of the first echo signal and the first optical sub-signal of the second echo signal into one channel which is referred to as a first multiplexed signal. The second optical multiplexer 9204 multiplexes the second optical sub-signal of the first echo signal and the second optical sub-signal of the second echo signal into one channel which is referred to as a second multiplexed signal. The two multiplexed signals enter the two photoelectric detectors 81031 and 81032, and then pass through analog-to-digital converters to obtain detection results.

It can be learned from this solution that, in this solution, only two detectors and two analog-to-digital converters are required, so that costs can be further reduced in a case of avoiding distance and speed ambiguity.

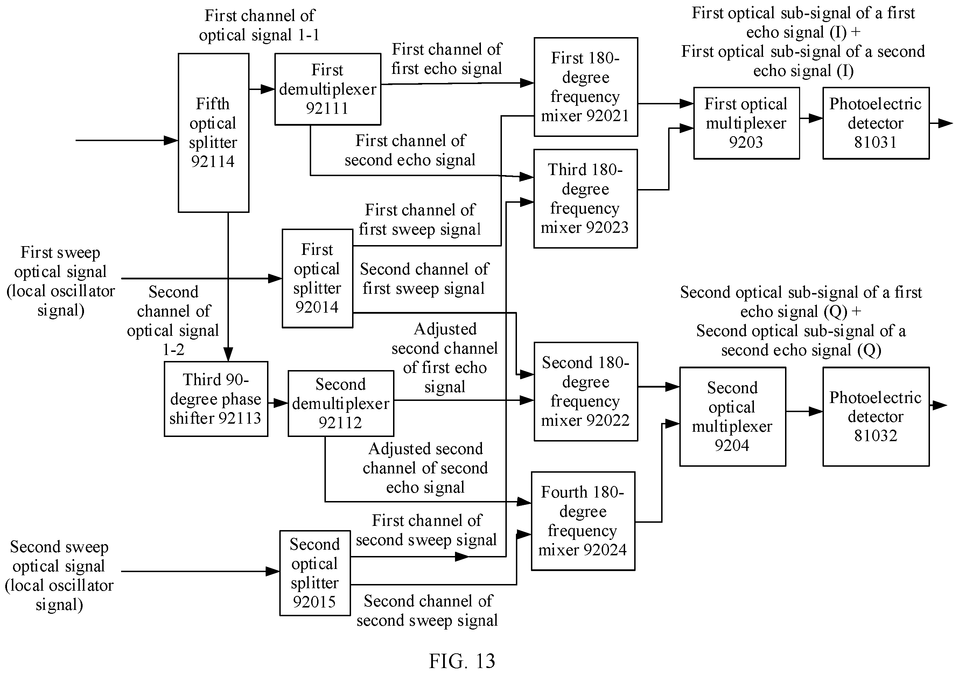

FIG. 13 is a diagram of another possible structure of a frequency mixing detection unit 810 according to an embodiment of this application. An example in which the first optical sub-signal is an I signal and the second optical sub-signal is a Q signal is used in FIG. 13. For example, the first optical splitting unit 9201 in FIG. 13 uses Structure 1-2 shown in FIG. 11B. The first 180-degree frequency mixer 92021 performs frequency mixing on the first channel of first echo signal output by the first demultiplexer 92111 and the first channel of first sweep optical signal output by the first optical splitter 92014, to obtain the first optical sub-signal of the first echo signal. The second 180-degree frequency mixer 92022 performs frequency mixing on the adjusted second channel of first echo signal output by the second demultiplexer 92112 and the second channel of first sweep optical signal output by the first optical splitter 92014, to obtain the second optical sub-signal of the first echo signal. The third 180-degree frequency mixer 92023 performs frequency mixing on the first channel of second echo signal output by the first demultiplexer 92111 and the first channel of second sweep optical signal output by the second optical splitter 92015, to obtain the first optical sub-signal of the second echo signal. The fourth 180-degree frequency mixer 92024 performs frequency mixing on the adjusted second channel of second echo signal output by the second demultiplexer 92112 and the second channel of second sweep optical signal output by the second optical splitter 92015, to obtain the second optical sub-signal of the second echo signal. Further, the first optical multiplexer 9203 multiplexes the first optical sub-signal of the first echo signal and the first optical sub-signal of the second echo signal into one channel. The second optical multiplexer 9204 multiplexes the second optical sub-signal of the first echo signal and the second optical sub-signal of the second echo signal into one channel. The two multiplexed signals enter the two photoelectric detectors 81031 and 81032, and then pass through analog-to-digital converters to obtain detection results.

It can be learned from this solution that, in this solution, only two detectors and two analog-to-digital converters are required, so that costs can be further reduced in a case of avoiding distance and speed ambiguity.

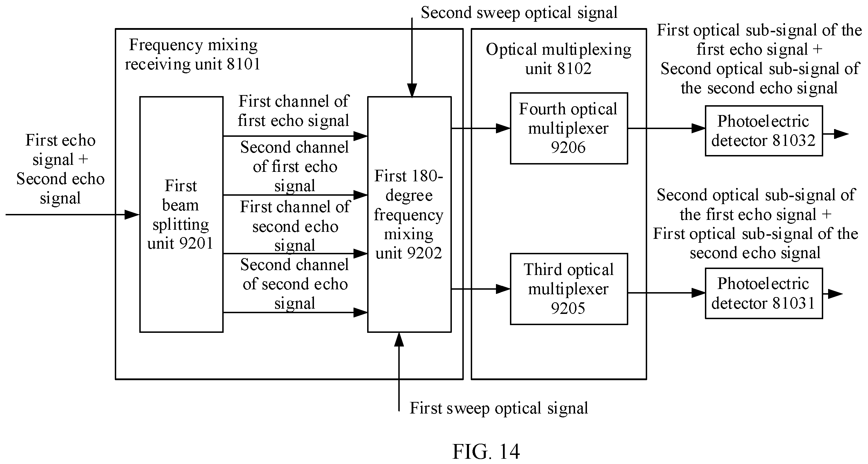

FIG. 14 is a diagram of another possible structure of a frequency mixing detection unit 810 according to an embodiment of this application. The frequency mixing receiving unit 8101 in the frequency mixing detection unit 810 includes a first beam splitting unit 9201 and a first 180-degree frequency mixing unit 9202. The optical multiplexing unit 8102 includes a third optical multiplexer 9205 and a fourth optical multiplexer 9206. Functions of the first beam splitting unit 9201 and the first 180-degree frequency mixing unit 9202 are described above. Details are not described herein again. The third optical multiplexer 9205 multiplexes the second optical sub-signal of the first echo signal and the first optical sub-signal of the second echo signal into a first multiplexed signal. The fourth optical multiplexer 9206 multiplexes the first optical sub-signal of the first echo signal and the second optical sub-signal of the second echo signal into a second multiplexed signal. Then, two channels of detection signals are output after photoelectric detection of the photoelectric detectors 81031 and 81032 are performed.

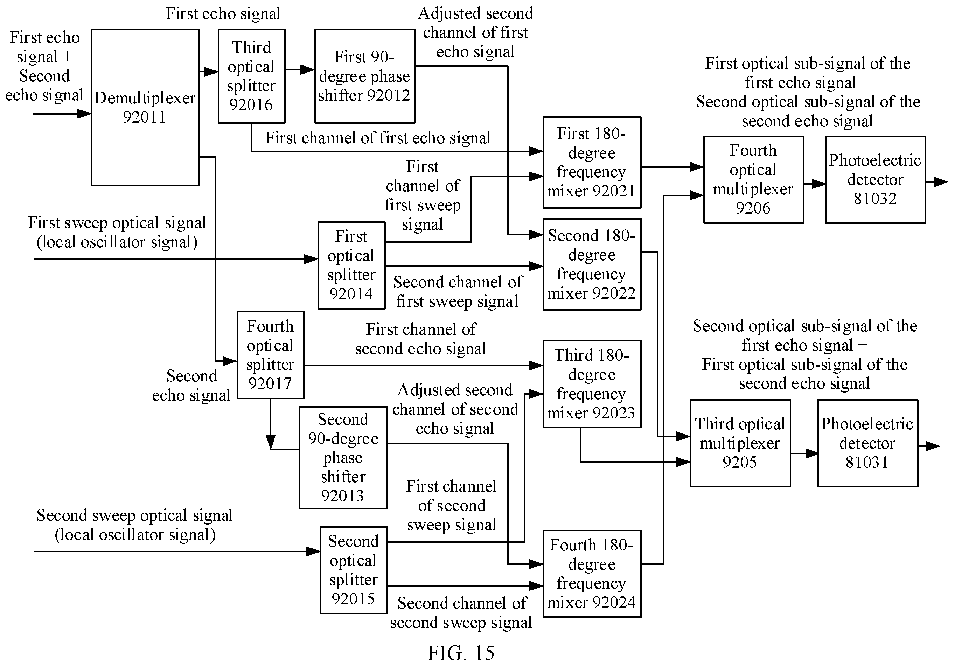

FIG. 15 is a diagram of another possible structure of a frequency mixing detection unit 810 according to Example 1 according to an embodiment of this application. For example, the first optical splitting unit 9201 in FIG. 15 uses Structure 1-1 shown in FIG. 11A. The first 180-degree frequency mixer 92021 performs frequency mixing on the first channel of first echo signal output by the third optical splitter 92016 and the first channel of first sweep optical signal output by the first optical splitter 92014, to obtain the first optical sub-signal of the first echo signal. The second 180-degree frequency mixer 92022 performs frequency mixing on the adjusted second channel of first echo signal output by the first 90-degree phase shifter 92012 and the second channel of first sweep optical signal output by the first optical splitter 92014, to obtain the second optical sub-signal of the first echo signal. The third 180-degree frequency mixer 92023 performs frequency mixing on the first channel of second echo signal output by the fourth optical splitter 92017 and the first channel of second sweep optical signal output by the second optical splitter 92015, to obtain the first optical sub-signal of the second echo signal. The fourth 180-degree frequency mixer 92024 performs frequency mixing on the adjusted second channel of second echo signal output by the second 90-degree phase shifter 92013 and the second channel of second sweep optical signal output by the second optical splitter 92015, to obtain the second optical sub-signal of the second echo signal. Further, the third optical multiplexer 9205 multiplexes the second optical sub-signal of the first echo signal and the first optical sub-signal of the second echo signal into one channel. The fourth optical multiplexer 9206 multiplexes the first optical sub-signal of the first echo signal and the second optical sub-signal of the second echo signal into one channel. The two multiplexed signals enter the two photoelectric detectors 81031 and 81032, and then pass through analog-to-digital converters to obtain detection results.

It can be learned from this solution that, in this solution, only two detectors and two analog-to-digital converters are required, so that costs can be further reduced in a case of avoiding distance and speed ambiguity.

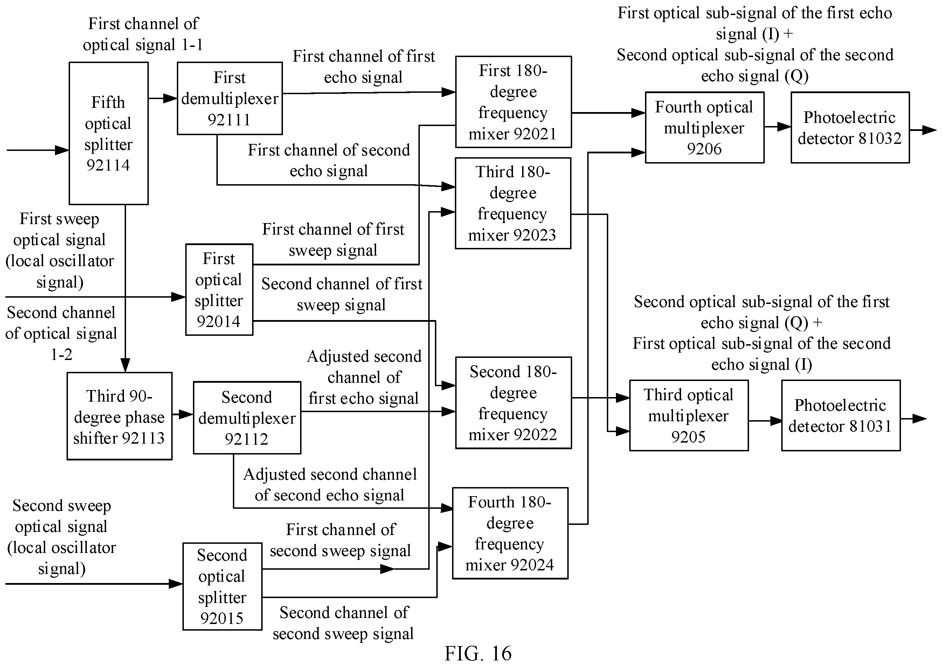

FIG. 16 is a diagram of another possible structure of a frequency mixing detection unit 810 according to Example 1 according to an embodiment of this application. For example, the first optical splitting unit 9201 in FIG. 16 uses Structure 1-2 shown in FIG. 11B. The first 180-degree frequency mixer 92021 performs frequency mixing on the first channel of first echo signal output by the first demultiplexer 92111 and the first channel of first sweep optical signal output by the first optical splitter 92014, to obtain the first optical sub-signal of the first echo signal. The second 180-degree frequency mixer 92022 performs frequency mixing on the adjusted second channel of first echo signal output by the second demultiplexer 92112 and the second channel of first sweep optical signal output by the first optical splitter 92014, to obtain the second optical sub-signal of the first echo signal. The third 180-degree frequency mixer 92023 performs frequency mixing on the first channel of second echo signal output by the first demultiplexer 92111 and the first channel of second sweep optical signal output by the second optical splitter 92015, to obtain the first optical sub-signal of the second echo signal. The fourth 180-degree frequency mixer 92024 performs frequency mixing on the adjusted second channel of second echo signal output by the second demultiplexer 92112 and the second channel of second sweep optical signal output by the second optical splitter 92015, to obtain the second optical sub-signal of the second echo signal. Further, the third optical multiplexer 9205 multiplexes the second optical sub-signal of the first echo signal and the first optical sub-signal of the second echo signal into one channel which is a first multiplexed signal. The fourth optical multiplexer 9206 multiplexes the first optical sub-signal of the first echo signal and the second optical sub-signal of the second echo signal into one channel which is a second multiplexed signal. The two multiplexed signals enter the two photoelectric detectors 81031 and 81032, and then pass through analog-to-digital converters to obtain detection results.

It can be learned from this solution that, in this solution, only two detectors and two analog-to-digital converters are required, so that costs can be further reduced in a case of avoiding distance and speed ambiguity.

**Example 2**

For example, there are two sweep optical signals: a first sweep optical signal S0 and a second sweep optical signal S1. Echo signals respectively corresponding to the first sweep optical signal S0 and the second sweep optical signal S1 are a first echo signal U0 and a second echo signal U1. Two optical sub-signals are output after frequency mixing is performed on the first echo signal U0, and one optical sub-signal is output after frequency mixing is performed on the second echo signal U1. Phases of the two optical sub-signals, namely, a first optical sub-signal and a second optical sub-signal, output after frequency mixing is performed on the first echo signal U0 are different. The optical sub-signal output after frequency mixing is performed on the second echo signal U1 is a first optical sub-signal or a second optical sub-signal. The first optical sub-signal of U0 and the first optical sub-signal of U1 have a same phase. The second optical sub-signal of U0 and the second optical sub-signal of U1 have a same phase.

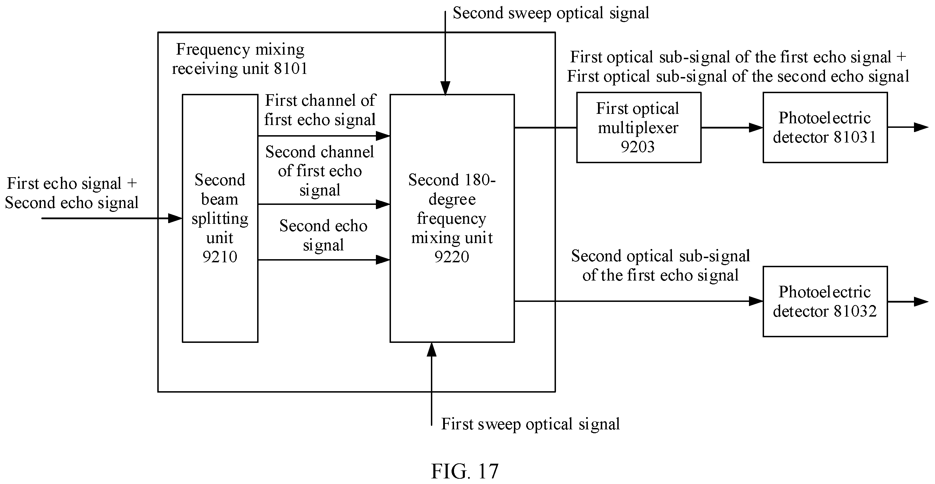

FIG. 17 is a diagram of a possible structure of a frequency mixing detection unit 810 according to an embodiment of this application. The frequency mixing receiving unit 8101 in the frequency mixing detection unit 810 includes a second beam splitting unit 9210 and a second 180-degree frequency mixing unit 9220. The optical multiplexing unit 8102 includes a first optical multiplexer 9203. It may also be understood that the optical multiplexing unit 8102 uses the first optical multiplexer 9203. An example in which one channel of multiplexed signal includes a first optical sub-signal of the first echo signal and a first optical sub-signal of the second echo signal and the other channel of multiplexed signal includes a second optical sub-signal of the first echo signal is used in FIG. 17.

The second beam splitting unit 9210 performs beam splitting on the first echo signal in the optical signal to obtain two channels of first echo signals, where the two channels of first echo signals have different phases. The second 180-degree frequency mixing unit 9220 separately performs frequency mixing on the two channels of first echo signals by using the first sweep optical signal, to obtain a first optical sub-signal of the first echo signal and a second optical sub-signal of the first echo signal; and performs frequency mixing on the second echo signal by using the second sweep optical signal, to obtain a first optical sub-signal of the second echo signal, where the second optical sub-signal of the first echo signal is used as a second frequency-mixed signal. The first optical multiplexer 9203 multiplexes the first optical sub-signal of the first echo signal and the first optical sub-signal of the second echo signal into a first frequency-mixed signal, where the first optical sub-signal of the first echo signal and the first optical sub-signal of the second echo signal have a same phase.

For example, the first optical sub-signal may be an I signal, and the second optical sub-signal may be a Q signal; or the first optical sub-signal is a Q signal, and the second optical sub-signal may be an I signal.

The following describes a structure of the second beam splitting unit 9210. The following four structures as an example: Structure 2-1, Structure 2-2, Structure 2-3, and Structure 2-4. In Structure 2-1 and Structure 2-2, an example in which the first optical sub-signal is an I signal and the second optical sub-signal is a Q signal is used. In Structure 2-3 and Structure 2-4, an example in which the first optical sub-signal is a Q signal and the second optical sub-signal is an I signal is used.

Structure 2-1

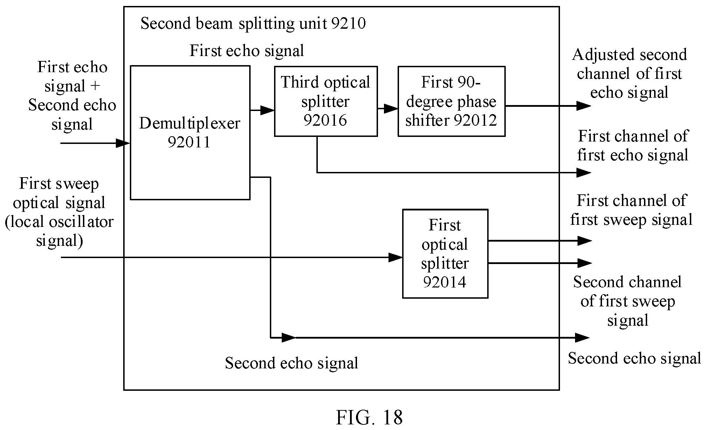

Refer to FIG. 18. The second beam splitting unit 9210 includes a demultiplexer 92011, a first optical splitter 92014, a third optical splitter 92016, and a first 90-degree phase shifter 92012.

The demultiplexer 92011 demultiplexes the received optical signal to obtain the first echo signal and the second echo signal. The first optical splitter 92014 demultiplexes the first sweep optical signal into a first channel of first sweep optical signal and a second channel of first sweep optical signal. The third optical splitter 92016 demultiplexes the first echo signal into a first channel of first echo signal and a second channel of first echo signal. The first 90-degree phase shifter 92012 adjusts a phase of the second channel of first echo signal by 90 degrees, to obtain an adjusted second channel of first echo signal.

Structure 2-2

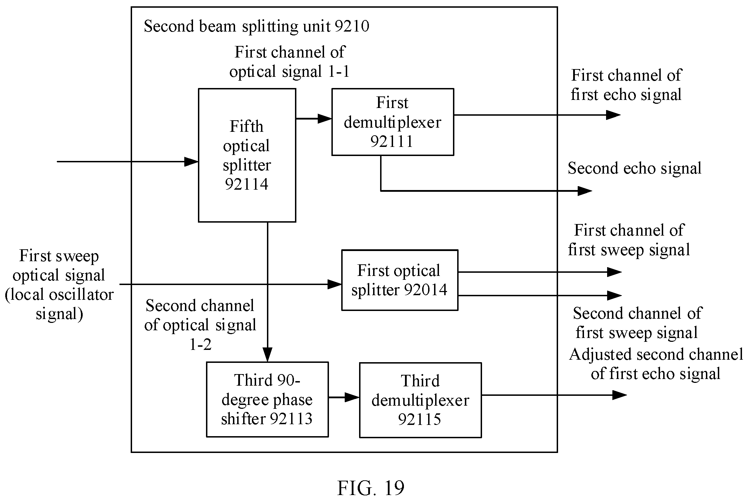

Refer to FIG. 19. The second beam splitting unit 9210 includes a first demultiplexer 92111, a third demultiplexer 92115, a third 90-degree phase shifter 92113, a first optical splitter 92014, and a fifth optical splitter 92114.

The first optical splitter 92014 demultiplexes the first sweep optical signal into a first channel of first sweep optical signal and a second channel of first sweep optical signal. The fifth optical splitter 92114 demultiplexes the received channel of optical signal into a first channel of optical signal and a second channel of optical signal. The first channel of optical signal includes a first channel of first echo signal and a first channel of second echo signal, and the second channel of optical signal includes a second channel of first echo signal and a second channel of second echo signal. The third 90-degree phase shifter 92113 adjusts a phase of the second channel of optical signal to obtain an adjusted second channel of optical signal. The first demultiplexer 92111 demultiplexes the first channel of optical signal to obtain a first channel of first echo signal and the second echo signal. The third demultiplexer 92115 demultiplexes the adjusted second channel of optical signal to obtain an adjusted second channel of first echo signal.

In a possible manner, the second 180-degree frequency mixing unit 9220 may include three 180-degree frequency mixers: a first 180-degree frequency mixer 92021, a second 180-degree frequency mixer 92022, and a fifth 180-degree frequency mixer 92025.

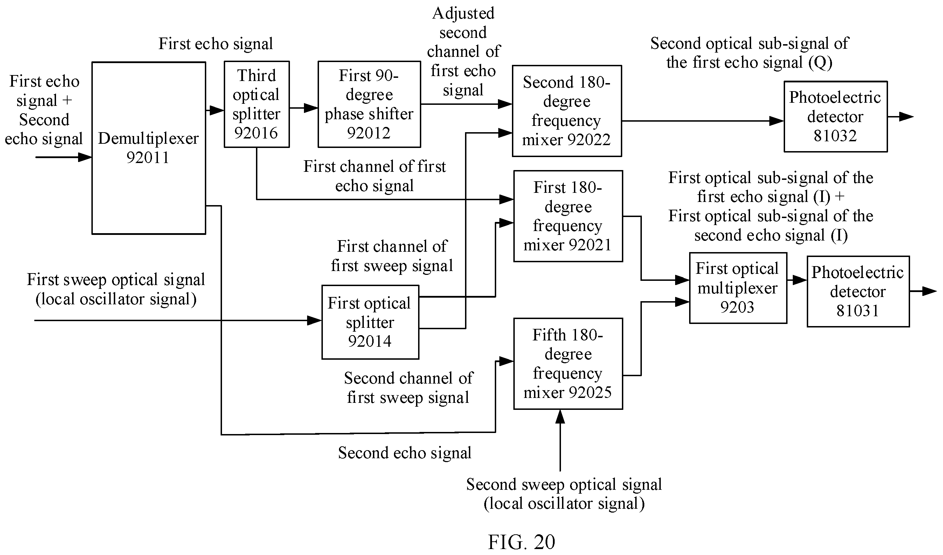

FIG. 20 is a diagram of a possible structure of a frequency mixing receiving unit 8101 according to Example 2 according to an embodiment of this application. For example, the second optical splitting unit 9210 in FIG. 20 uses Structure 2-1 shown in FIG. 18. The first 180-degree frequency mixer 92021 performs frequency mixing on the first channel of first echo signal output by the third optical splitter 92016 and the first channel of first sweep optical signal output by the first optical splitter 92014, to obtain the first optical sub-signal of the first echo signal. The second 180-degree frequency mixer 92022 performs frequency mixing on the adjusted second channel of first echo signal output by the first 90-degree phase shifter 92012 and the second channel of first sweep optical signal output by the first optical splitter 92014, to obtain the second optical sub-signal of the first echo signal. The fifth 180-degree frequency mixer 92025 performs frequency mixing on the second echo signal output by the demultiplexer 92011 and the received second sweep optical signal, to obtain the first optical sub-signal of the second echo signal. Further, the first optical multiplexer 9203 multiplexes the first optical sub-signal of the first echo signal and the first optical sub-signal of the second echo signal into one channel of frequency-mixed signal, and outputs the channel of frequency-mixed signal to the photoelectric detector 81031. The second optical sub-signal of the first echo signal output by the second 180-degree frequency mixer 92022 is directly output to the photoelectric detector 81032 as another channel of frequency-mixed signal, and then separately passes through analog-to-digital converters to obtain detection results.

It can be learned from this solution that, in this solution, only two detectors and two analog-to-digital converters are required, so that costs can be further reduced in a case of avoiding distance and speed ambiguity.

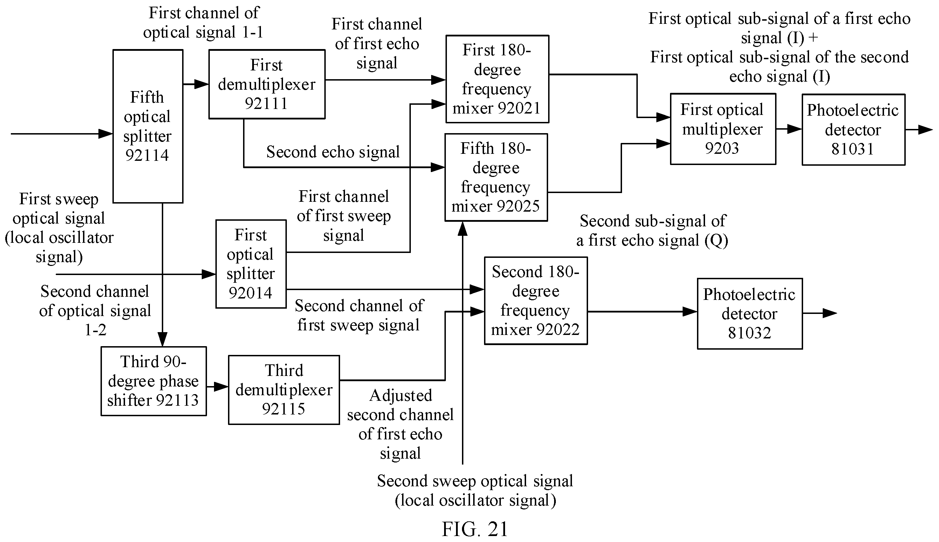

FIG. 21 is a diagram of another possible structure of a frequency mixing receiving unit 8101 according to Example 2 according to an embodiment of this application. For example, the second optical splitting unit 9210 in FIG. 21 uses Structure 2-2 shown in FIG. 19.

The first 180-degree frequency mixer 92021 performs frequency mixing on the first channel of first echo signal output by the first demultiplexer 92111 and the first channel of first sweep optical signal output by the first optical splitter 92014, to obtain the first optical sub-signal of the first echo signal. The second 180-degree frequency mixer 92022 performs frequency mixing on the adjusted second channel of first echo signal output by the third demultiplexer 92115 and the second channel of first sweep optical signal output by the first optical splitter 92014, to obtain the second optical sub-signal of the first echo signal. The fifth 180-degree frequency mixer 92025 performs frequency mixing on the second echo signal output by the first demultiplexer 92111 and the received second sweep optical signal, to obtain the first optical sub-signal of the second echo signal. Further, the first optical multiplexer 9203 multiplexes the first optical sub-signal of the first echo signal and the first optical sub-signal of the second echo signal into one channel of frequency-mixed signal, and outputs the channel of frequency-mixed signal to the photoelectric detector 81031. The second optical sub-signal of the first echo signal output by the second 180-degree frequency mixer 92022 is directly output to the photoelectric detector 81032 as another channel of frequency-mixed signal, and then separately passes through analog-to-digital converters to obtain detection results.

An example in which the first optical sub-signal is an I signal and the second optical sub-signal is a Q signal is used in FIG. 20 and FIG. 21.

Structure 2-3

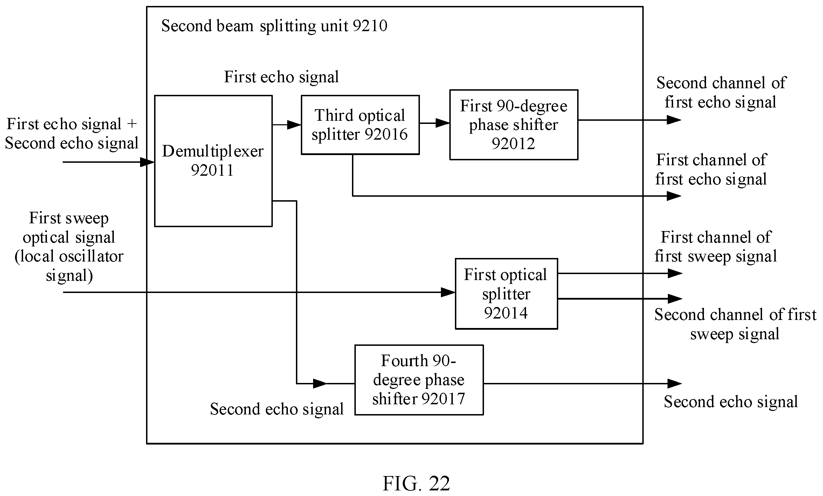

Refer to FIG. 22. The second beam splitting unit 9210 includes a demultiplexer 92011, a first optical splitter 92014, a third optical splitter 92016, a first 90-degree phase shifter 92012, and a fourth 90-degree phase shifter 92017.

The demultiplexer 92011 demultiplexes the received optical signal to obtain the first echo signal and the second echo signal. The first optical splitter 92014 demultiplexes the first sweep optical signal into a first channel of first sweep optical signal and a second channel of first sweep optical signal. The third optical splitter 92016 demultiplexes the first echo signal into two channels of first echo signals, where one channel of first echo signal is input to the first 90-degree phase shifter, and the other channel of first echo signal is used as a second channel of first echo signal. The first 90-degree phase shifter 92012 adjusts a phase of the one channel of first echo signal by 90 degrees, to obtain a first channel of first echo signal. The fourth 90-degree phase shifter 92017 adjusts a phase of the second echo signal.

Structure 2-4

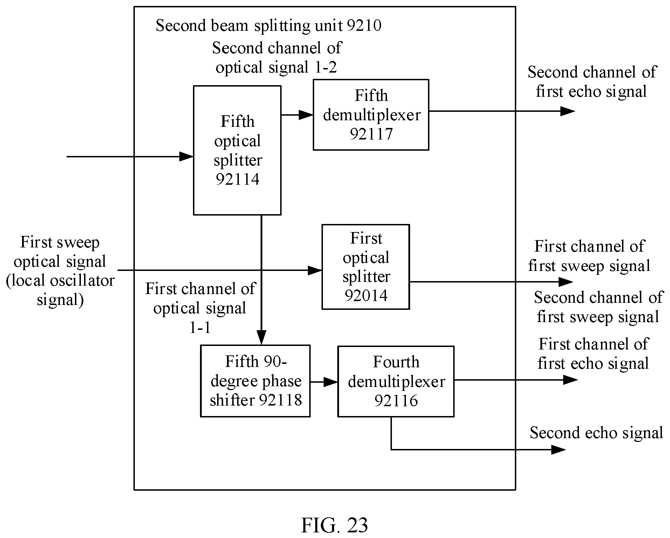

Refer to FIG. 23. The second beam splitting unit 9210 includes a fourth demultiplexer 92116, a fifth demultiplexer 92117, a fifth 90-degree phase shifter 92118, a first optical splitter 92014, and a fifth optical splitter 92114.

The first optical splitter 92014 demultiplexes the first sweep optical signal into a first channel of first sweep optical signal and a second channel of first sweep optical signal. The fifth optical splitter 92114 demultiplexes the received channel of optical signal into a first channel of optical signal and a second channel of optical signal. The first channel of optical signal includes a first channel of first echo signal and a first channel of second echo signal, and the second channel of optical signal includes a second channel of first echo signal and a second channel of second echo signal. The fifth 90-degree phase shifter 92118 adjusts a phase of the first channel of optical signal to obtain an adjusted first channel of optical signal. The fourth demultiplexer 92116 demultiplexes the adjusted first channel of optical signal to obtain a first channel of first echo signal and the second echo signal. The fifth demultiplexer 92117 demultiplexes the second channel of optical signal to obtain a second channel of first echo signal.

In another possible manner, the second 180-degree frequency mixing unit 9220 may include three 180-degree frequency mixers: a first 180-degree frequency mixer 92021, a second 180-degree frequency mixer 92022, and a fifth 180-degree frequency mixer 92025.

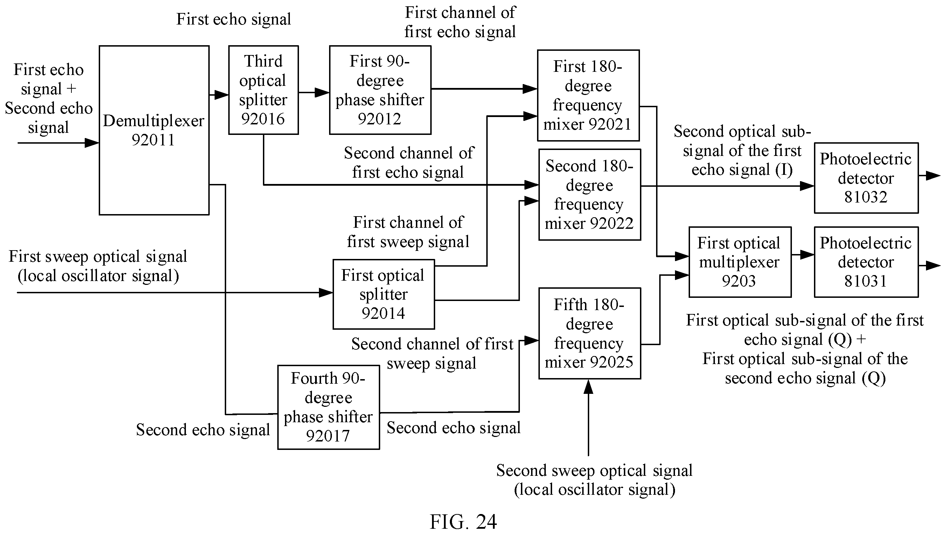

FIG. 24 is a diagram of a possible structure of a frequency mixing receiving unit 8101 according to Example 2 according to an embodiment of this application. An example in which the first optical sub-signal is a Q signal and the second optical sub-signal is an I signal is used in FIG. 24. For example, the second optical splitting unit 9210 in FIG. 24 uses Structure 2-3 shown in FIG. 22. The first 180-degree frequency mixer 92021 performs frequency mixing on the first channel of first echo signal output by the third optical splitter 92016 and the first channel of first sweep optical signal output by the first optical splitter 92014, to obtain the first optical sub-signal of the first echo signal. The second 180-degree frequency mixer 92022 performs frequency mixing on the adjusted second channel of first echo signal output by the first 90-degree phase shifter 92012 and the second channel of first sweep optical signal output by the first optical splitter 92014, to obtain the second optical sub-signal of the first echo signal. The fifth 180-degree frequency mixer 92025 performs frequency mixing on the adjusted second echo signal output by the fourth 90-degree phase shifter 92017 and the received second sweep optical signal, to obtain the second optical sub-signal of the second echo signal. Further, the first optical multiplexer 9203 multiplexes the first optical sub-signal of the first echo signal and the first optical sub-signal of the second echo signal into one channel of frequency-mixed signal, and outputs the channel of frequency-mixed signal to the photoelectric detector 81031. The second optical sub-signal of the first echo signal output by the second 180-degree frequency mixer 92022 is directly output to the photoelectric detector 81032 as another channel of frequency-mixed signal, and then separately passes through analog-to-digital converters to obtain detection results.

It can be learned from this solution that, in this solution, only two detectors and two analog-to-digital converters are required, so that costs can be further reduced in a case of avoiding distance and speed ambiguity.

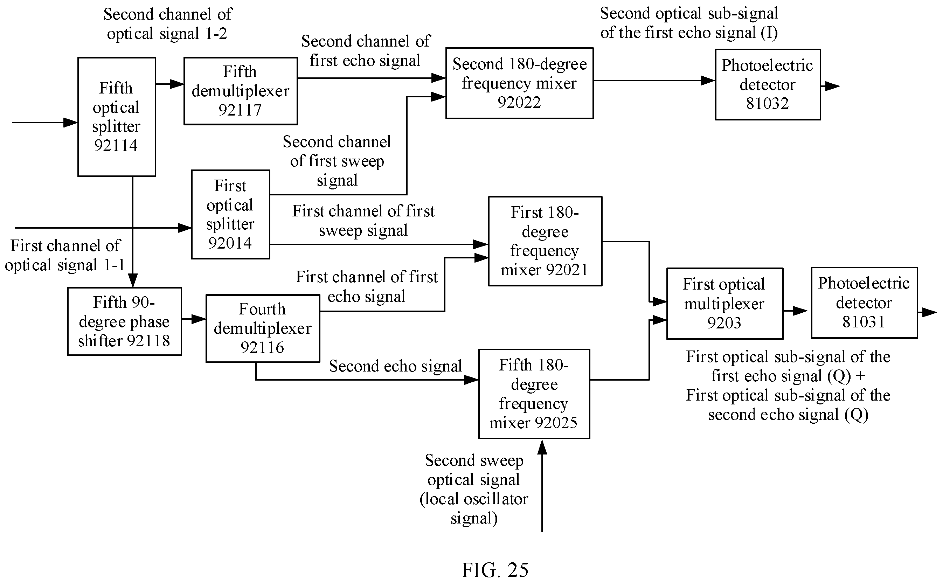

FIG. 25 is a diagram of another possible structure of a frequency mixing receiving unit 8101 according to Example 2 according to an embodiment of this application. An example in which the first optical sub-signal is a Q signal and the second optical sub-signal is an I signal is used in FIG. 25. For example, the second optical splitting unit 9210 in FIG. 25 uses Structure 2-4 shown in FIG. 23.

The second 180-degree frequency mixer 92022 performs frequency mixing on the second channel of first echo signal output by the fifth demultiplexer 92117 and the second channel of first sweep optical signal output by the first optical splitter 92014, to obtain the second optical sub-signal of the first echo signal. The first 180-degree frequency mixer 92021 performs frequency mixing on the first channel of first echo signal output by the fourth demultiplexer 92116 and the first channel of first sweep optical signal output by the first optical splitter 92014, to obtain the first optical sub-signal of the first echo signal. The fifth 180-degree frequency mixer 92025 performs frequency mixing on the second echo signal output by the fourth demultiplexer 92116 and the received second sweep optical signal, to obtain the first optical sub-signal of the second echo signal. Further, the second optical multiplexer 9204 multiplexes the first optical sub-signal of the first echo signal and the first optical sub-signal of the second echo signal into one channel of frequency-mixed signal, and outputs the channel of frequency-mixed signal to the photoelectric detector 81031. The second optical sub-signal of the first echo signal output by the second 180-degree frequency mixer 92022 is directly output to the photoelectric detector 81032 as another channel of frequency-mixed signal, and then separately passes through analog-to-digital converters to obtain detection results.

## Example 3

For example, there are two sweep optical signals: a first sweep optical signal S0 and a second sweep optical signal S1. Echo signals respectively corresponding to the first sweep optical signal S0 and the second sweep optical signal S1 are a first echo signal U0 and a second echo signal U1. Two optical sub-signals are output after frequency mixing is performed on the first echo signal U0, and one optical sub-signal is output after frequency mixing is performed on the second echo signal U1. Phases of the two optical sub-signals, namely, a first optical sub-signal and a second optical sub-signal, output after frequency mixing is performed on the first echo signal U0 are different. The optical sub-signal output after frequency mixing is performed on the second echo signal U1 is a first optical sub-signal or a second optical sub-signal. The first optical sub-signal of U0 and the first optical sub-signal of U1 have a same phase. The second optical sub-signal of U0 and the second optical sub-signal of U1 have a same phase.

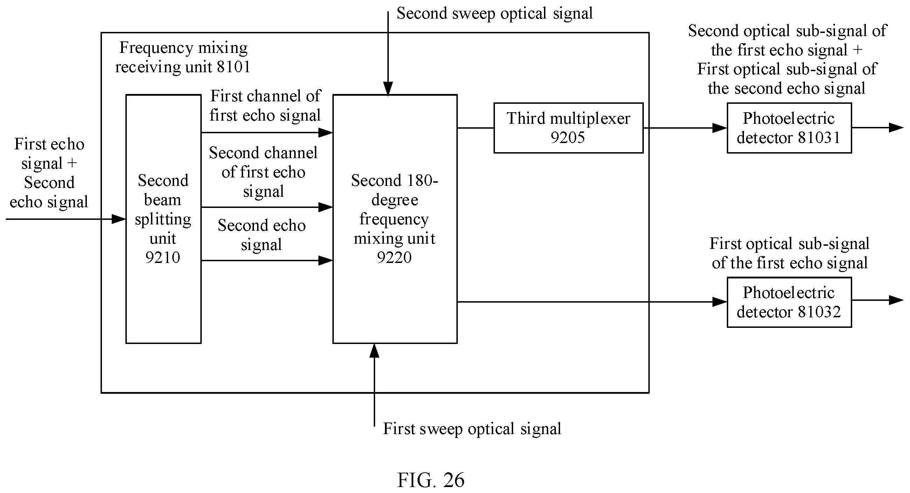

FIG. 26 is a diagram of a possible structure of a frequency mixing detection unit 810 according to an embodiment of this application. The frequency mixing receiving unit 8101 in the frequency mixing detection unit 810 includes a second beam splitting unit 9210, a second 180-degree frequency mixing unit 9220, and a third optical multiplexer 9205. An example in which one channel of frequency-mixed signal includes the second optical sub-signal of the first echo signal and the first optical sub-signal of the second echo signal and the other channel of frequency-mixed signal includes the second optical sub-signal of the first echo signal is used in FIG. 26.

The second beam splitting unit 9210 performs beam splitting on the first echo signal in the optical signal to obtain two channels of first echo signals, where the two channels of first echo signals have different phases. The second 180-degree frequency mixing unit 9220 separately performs frequency mixing on the two channels of first echo signals by using the first sweep optical signal, to obtain a first optical sub-signal of the first echo signal and a second optical sub-signal of the first echo signal; and performs frequency mixing on the second echo signal by using the second sweep optical signal, to obtain a first optical sub-signal of the second echo signal, where the second optical sub-signal of the first echo signal is used as a second frequency-mixed signal. The third optical multiplexer 9205 multiplexes the second optical sub-signal of the first echo signal and the first optical sub-signal of the second echo signal into a first multiplexed signal, and outputs the first multiplexed signal to the photoelectric detector 81031, where the first optical sub-signal of the first echo signal and the first optical sub-signal of the second echo signal have a same phase. The second 180-degree frequency mixing unit 9220 outputs the first optical sub-signal of the first echo signal to the photoelectric detector 81032.

For example, the first optical sub-signal may be an I signal, and the second optical sub-signal may be a Q signal; or the first optical sub-signal is a Q signal, and the second optical sub-signal may be an I signal.

For structures of the second beam splitting unit 9210 and the second 180-degree frequency mixing unit 9220, refer to the descriptions in Example 2. Details are not described herein again. An example in which the first optical sub-signal may be an I signal and the second optical sub-signal may be a Q signal is used below.

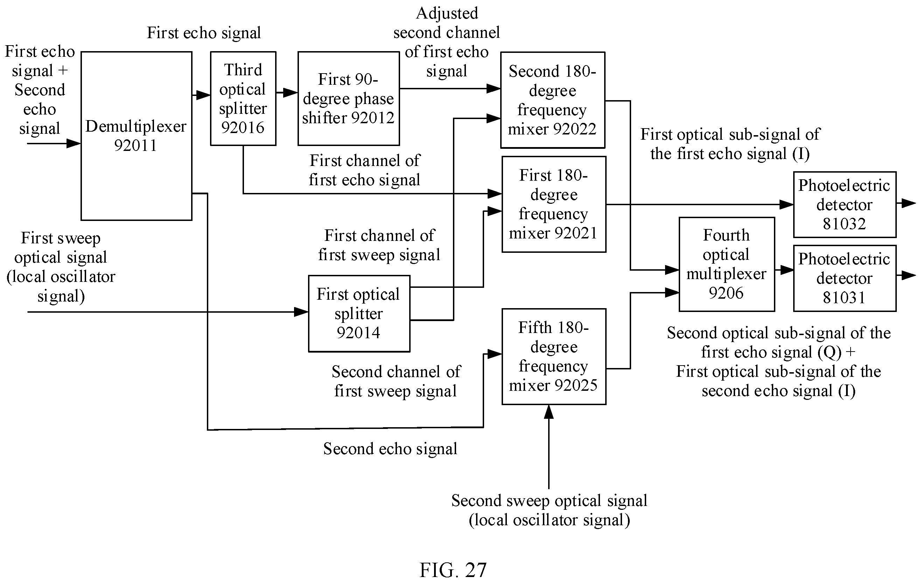

FIG. 27 is a diagram of a possible structure of a frequency mixing detection unit 810 according to Example 3 according to an embodiment of this application. For example, the second optical splitting unit 9210 in FIG. 27 uses Structure 2-1 shown in FIG. 18. The first 180-degree frequency mixer 92021 performs frequency mixing on the first channel of first echo signal output by the third optical splitter 92016 and the first channel of first sweep optical signal output by the first optical splitter 92014, to obtain the first optical sub-signal of the first echo signal. The second 180-degree frequency mixer 92022 performs frequency mixing on the adjusted second channel of first echo signal output by the first 90-degree phase shifter 92012 and the second channel of first sweep optical signal output by the first optical splitter 92014, to obtain the second optical sub-signal of the first echo signal. The fifth 180-degree frequency mixer 92025 performs frequency mixing on the second echo signal output by the demultiplexer 92011 and the received second sweep optical signal, to obtain the first optical sub-signal of the second echo signal. Further, the fourth optical multiplexer 9206 multiplexes the second optical sub-signal of the first echo signal and the first optical sub-signal of the second echo signal into one channel of frequency-mixed signal, and outputs the channel of frequency-mixed signal to the photoelectric detector 81031. The first optical sub-signal of the first echo signal output by the second 180-degree frequency mixer 92022 is directly output to the photoelectric detector 81032 as another channel of frequency-mixed signal, and then separately passes through analog-to-digital converters to obtain detection results.

It can be learned from this solution that, in this solution, only two detectors and two analog-to-digital converters are required, so that costs can be further reduced in a case of avoiding distance and speed ambiguity.

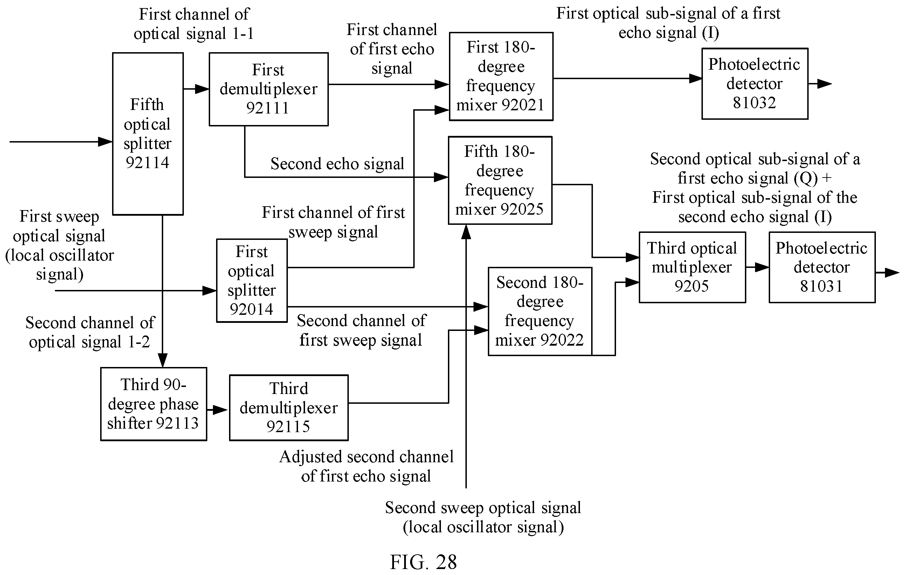

FIG. 28 is a diagram of another possible structure of a frequency mixing detection unit 810 according to Example 3 according to an embodiment of this application. For example, the second optical splitting unit 9210 in FIG. 28 uses Structure 2-2 shown in FIG. 19.

The first 180-degree frequency mixer 92021 performs frequency mixing on the first channel of first echo signal output by the first demultiplexer 92111 and the first channel of first sweep optical signal output by the first optical splitter 92014, to obtain the first optical sub-signal of the first echo signal. The second 180-degree frequency mixer 92022 performs frequency mixing on the adjusted second channel of first echo signal output by the third demultiplexer 92115 and the second channel of first sweep optical signal output by the first optical splitter 92014, to obtain the second optical sub-signal of the first echo signal. The fifth 180-degree frequency mixer 92025 performs frequency mixing on the second echo signal output by the first demultiplexer 92111 and the received second sweep optical signal, to obtain the first optical sub-signal of the second echo signal. Further, the fourth optical multiplexer 9206 multiplexes the second optical sub-signal of the first echo signal and the first optical sub-signal of the second echo signal into one channel of multiplexed signal, and outputs the channel of multiplexed signal to the photoelectric detector 81031. The first optical sub-signal of the first echo signal output by the first 180-degree frequency mixer 92021 is directly output to the photoelectric detector 81032 as another channel of multiplexed signal, and then separately passes through analog-to-digital converters to obtain detection results.

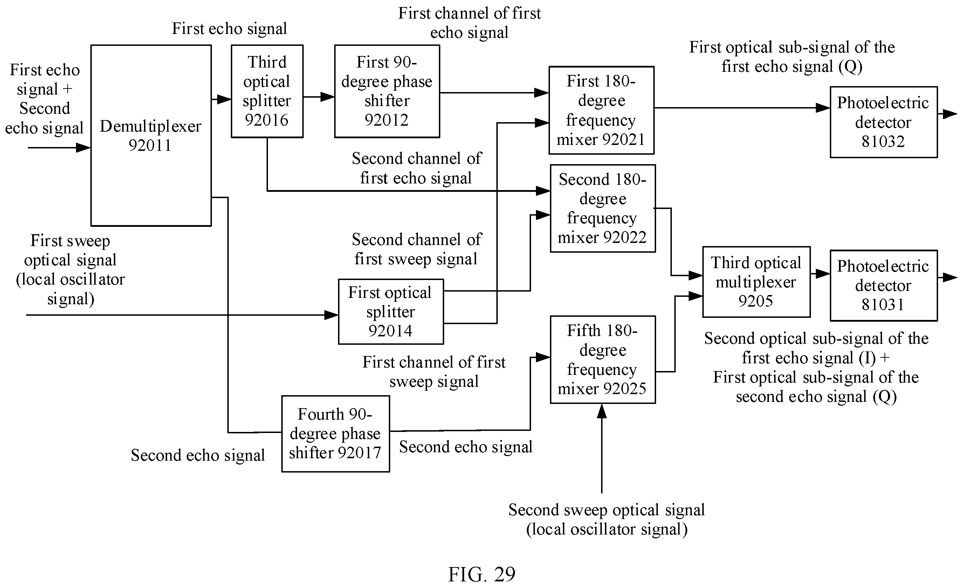

FIG. 29 is a diagram of a possible structure of a frequency mixing detection unit 810 according to Example 3 according to an embodiment of this application. An example in which the first optical sub-signal is a Q signal and the second optical sub-signal is an I signal is used in FIG. 29. For example, the second optical splitting unit 9210 in FIG. 29 uses Structure 2-3 shown in FIG. 22. The first 180-degree frequency mixer 92021 performs frequency mixing on the first channel of first echo signal output by the first 90-degree phase shifter 92012 and the first channel of first sweep optical signal output by the first optical splitter 92014, to obtain the first optical sub-signal of the first echo signal. The second 180-degree frequency mixer 92022 performs frequency mixing on the adjusted second channel of first echo signal output by the third optical splitter 92016 and the second channel of first sweep optical signal output by the first optical splitter 92014, to obtain the second optical sub-signal of the first echo signal. The fifth 180-degree frequency mixer 92025 performs frequency mixing on the second echo signal output by the fourth 90-degree phase shifter 92017 and the received second sweep optical signal, to obtain the first optical sub-signal of the second echo signal. Further, the third optical multiplexer 9205 multiplexes the second optical sub-signal of the first echo signal and the first optical sub-signal of the second echo signal into one channel, and outputs the channel to the photoelectric detector 81031. The first optical sub-signal of the first echo signal output by the first 180-degree frequency mixer 92022 is directly output to the photoelectric detector 81032, and then separately passes through analog-to-digital converters to obtain detection results.

It can be learned from this solution that, in this solution, only two detectors and two analog-to-digital converters are required, so that costs can be further reduced in a case of avoiding distance and speed ambiguity.

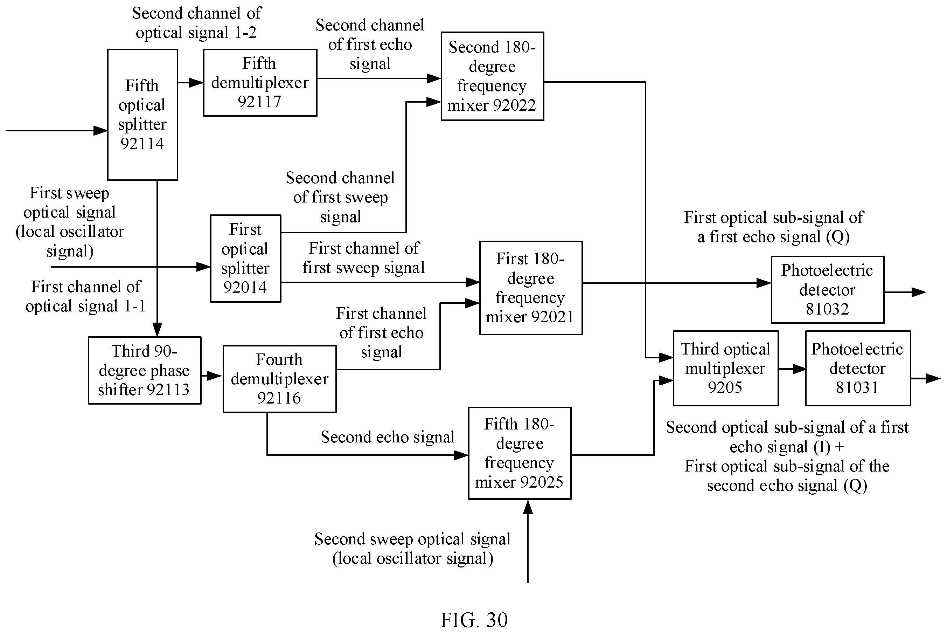

FIG. 30 is a diagram of another possible structure of a frequency mixing detection unit 810 according to Example 3 according to an embodiment of this application. An example in which the first optical sub-signal is a Q signal and the second optical sub-signal is an I signal is used in FIG. 30. For example, the second optical splitting unit 9210 in FIG. 30 uses Structure 2-4 shown in FIG. 23.

The first 180-degree frequency mixer 92021 performs frequency mixing on the first channel of first echo signal output by the fourth demultiplexer 92116 and the first channel of first sweep optical signal output by the first optical splitter 92014, to obtain the first optical sub-signal of the first echo signal. The second 180-degree frequency mixer 92022 performs frequency mixing on the adjusted second channel of first echo signal output by the fifth demultiplexer 92117 and the second channel of first sweep optical signal output by the first optical splitter 92014, to obtain the second optical sub-signal of the first echo signal. The fifth 180-degree frequency mixer 92025 performs frequency mixing on the second echo signal output by the fourth demultiplexer 92116 and the received second sweep optical signal, to obtain the first optical sub-signal of the second echo signal. Further, the third optical multiplexer 9205 multiplexes the second optical sub-signal of the first echo signal and the first optical sub-signal of the second echo signal into one channel, and outputs the channel to the photoelectric detector 81031. The first optical sub-signal of the first echo signal output by the first 180-degree frequency mixer 92021 is directly output to the photoelectric detector 81032, and then separately passes through analog-to-digital converters to obtain detection results.

## Example 4

Two sweep optical signals are also used as an example.

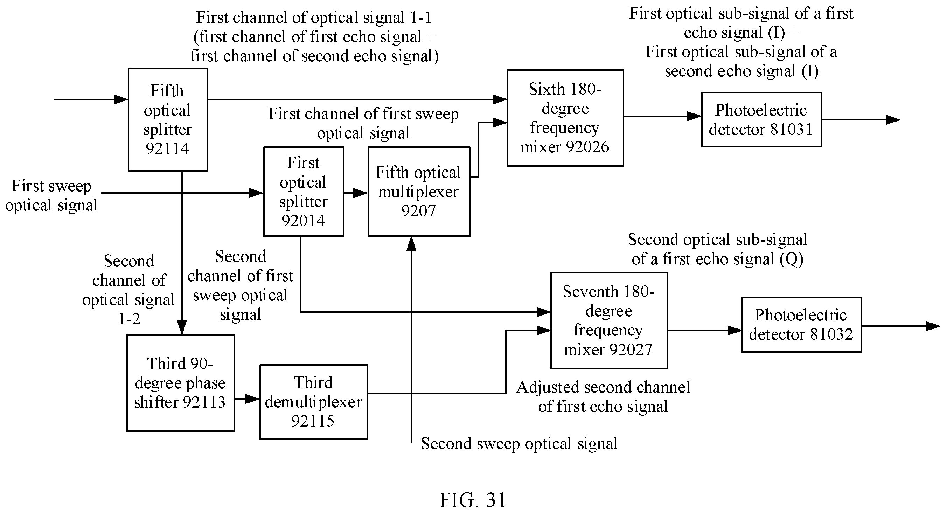

FIG. 31 is a diagram of a possible structure of a frequency mixing detection unit 810 according to an embodiment of this application. The frequency mixing receiving unit 8101 in the frequency mixing detection unit 810 includes a third 90-degree phase shifter 92113, a first optical splitter 92014, a fifth optical splitter 92114, a sixth 180-degree frequency mixer 92026, a third demultiplexer 92115, and a seventh 180-degree frequency mixer 92027.

The first optical splitter 92014 demultiplexes the first sweep optical signal into a first channel of first sweep optical signal and a second channel of first sweep optical signal. The fifth optical splitter 92114 demultiplexes the optical signal into a first channel of optical signal and a second channel of optical signal. The third 90-degree phase shifter 92113 adjusts a phase of the second channel of optical signal to obtain an adjusted second channel of optical signal. The sixth 180-degree frequency mixer 92026 is configured to perform frequency mixing on the first channel of optical signal by using the first channel of first sweep optical signal and the second sweep optical signal, to obtain the first frequency-mixed signal, where the first frequency-mixed signal includes a first optical sub-signal of the first echo signal and a first optical sub-signal of the second echo signal. In some embodiments, the frequency mixing receiving unit 8101 further includes a fifth optical multiplexer 9207, configured to multiplex the first channel of first sweep optical signal and the second sweep optical signal that are split by the first optical splitter 92014 to obtain the first frequency-mixed signal, and output the first frequency-mixed signal to the sixth 180-degree frequency mixer 92026. The third demultiplexer 92115 demultiplexes the adjusted second channel of optical signal to obtain an adjusted first echo signal. The seventh 180-degree frequency mixer 92027 uses the second channel of first sweep optical signal to perform frequency mixing on the adjusted first echo signal to obtain a second optical sub-signal of the first echo signal, where the second optical sub-signal of the first echo signal is used as the second frequency-mixed signal. Further, the detection unit performs detection on the first frequency-mixed signal, and the detection unit performs detection on the second frequency-mixed signal.

An example in which one channel of frequency-mixed signal includes the first optical sub-signal of the first echo signal and the first optical sub-signal of the second echo signal and the other channel of frequency-mixed signal includes the second optical sub-signal of the first echo signal is used in FIG. 31.

In some possible embodiments, a received local oscillator signal is used as one channel. One channel of local oscillator signal includes the first sweep optical signal and the second sweep optical signal. The channel of local oscillator signal may be split into two channels by using an optical splitter, and then another channel of local oscillator signal is demultiplexed to obtain the first sweep optical signal. The first sweep optical signal is input to the frequency mixing receiving unit 8101. In some embodiments, a component configured to perform optical splitting and demultiplexing on the local oscillator signal may alternatively be deployed inside the frequency mixing receiving unit 8101. This is not specifically limited in embodiments of this application. For example, an optical splitter may be deployed inside the frequency mixing receiving unit 8101 to split one channel of local oscillator signal including the first sweep optical signal and the second sweep optical signal into two channels, where one channel is input to the sixth 180-degree frequency mixer 92026, and the other channel is demultiplexed by a demultiplexer to obtain the second channel of first sweep optical signal. The second channel of first sweep optical signal is output to the seventh 180-degree frequency mixer 92027.

Example 5

Two sweep optical signals are also used as an example.

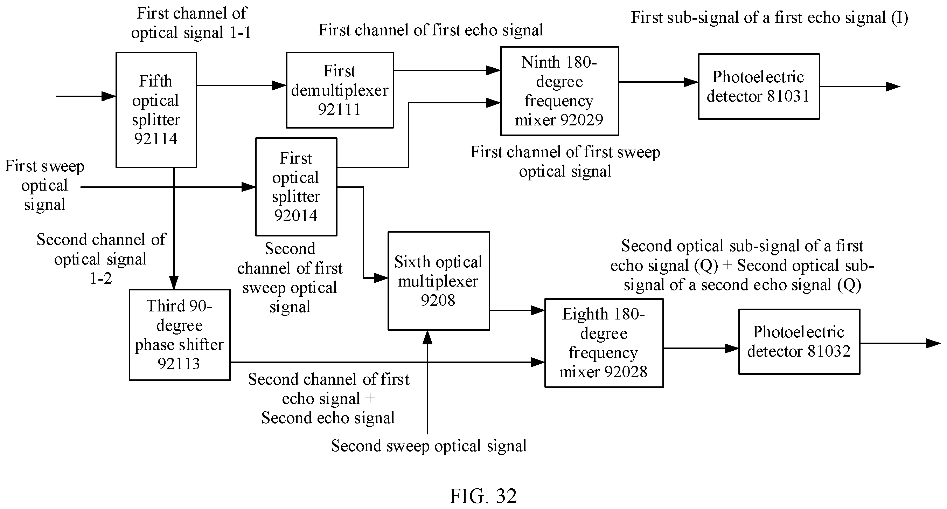

FIG. 32 is a diagram of a possible structure of a frequency mixing detection unit 810 according to an embodiment of this application. The frequency mixing receiving unit 8101 in the frequency mixing detection unit 810 includes a third 90-degree phase shifter 92113, a first optical splitter 92014, a fifth optical splitter 92114, an eighth 180-degree frequency mixer 92028, a first demultiplexer 92111, a ninth 180-degree frequency mixer 92029, a photoelectric detector 81031, and a photoelectric detector 81032. The first optical splitter 92014 is configured to demultiplex the first sweep optical signal into a first channel of first sweep optical signal and a second channel of first sweep optical signal. The fifth optical splitter 92114 is configured to demultiplex the optical signal into a first channel of optical signal and a second channel of optical signal. The third 90-degree phase shifter 92113 is configured to adjust a phase of the second channel of optical signal to obtain an adjusted second channel of optical signal. The eighth 180-degree frequency mixer 92028 is configured to perform frequency mixing on the adjusted second optical signal by using the second channel of first sweep optical signal and the second sweep optical signal, to obtain a frequency-mixed signal, where the frequency-mixed signal includes a second optical sub-signal of the first echo signal and a second optical sub-signal of the second echo signal. In some embodiments, the frequency mixing receiving unit 8101 further includes a sixth optical multiplexer 9208, configured to multiplex the second channel of first sweep optical signal split by the first optical splitter 92014 and the second sweep optical signal, to obtain a signal, and output the signal to the eighth 180-degree frequency mixer 92028. The first demultiplexer 92111 is configured to demultiplex the first channel of optical signal to obtain a first channel of first echo signal. The ninth 180-degree frequency mixer 92029 is configured to perform frequency mixing on the first echo signal by using the first channel of first sweep optical signal to obtain a first optical sub-signal of the first echo signal. The photoelectric detector 81031 is configured to perform photoelectric detection on the frequency-mixed signal to obtain a first channel of detection signal. The photoelectric detector 81032 is configured to perform photoelectric detection on the first optical sub-signal of the first echo signal to obtain a second channel of first echo signal.

In some possible embodiments, a received local oscillator signal is used as one channel. One channel of local oscillator signal includes the first sweep optical signal and the second sweep optical signal. The channel of local oscillator signal may be split into two channels by using an optical splitter, and then another channel of local oscillator signal is demultiplexed to obtain the first sweep optical signal. The first sweep optical signal is input to the frequency mixing receiving unit 8101. In some embodiments, a component configured to perform optical splitting and demultiplexing on the local oscillator signal may alternatively be deployed inside the frequency mixing receiving unit 8101. This is not specifically limited in embodiments of this application. For example, an optical splitter may be deployed inside the frequency mixing receiving unit 8101 to split one channel of local oscillator signal including the first sweep optical signal and the second sweep optical signal into two channels, where one channel is input to the eighth 180-degree frequency mixer 92028, and the other channel is demultiplexed by a demultiplexer to obtain the first channel of first sweep optical signal. The first channel of first sweep optical signal is output to the ninth 180-degree frequency mixer 92029.

Example 6

Two sweep optical signals are also used as an example.

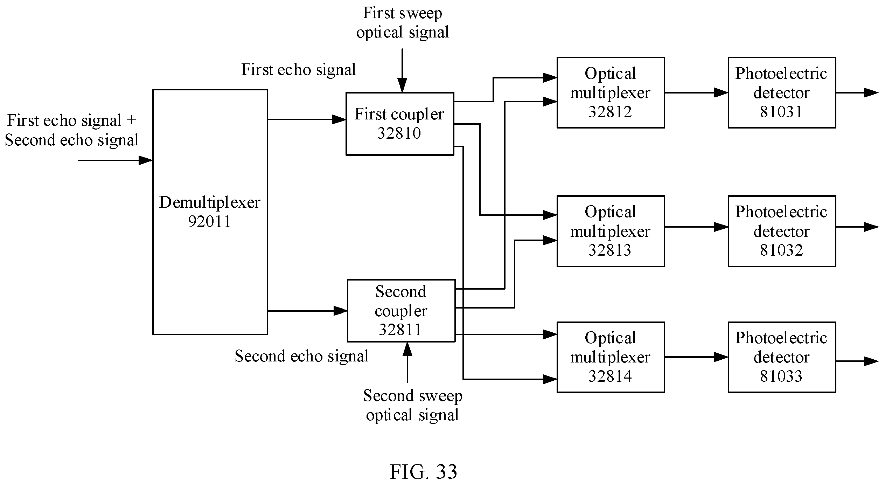

FIG. 33 is a diagram of a possible structure of a frequency mixing detection unit 810 according to an embodiment of this application. The frequency mixing receiving unit 8101 in the frequency mixing detection unit 810 includes a demultiplexer 92011, a first coupler 32810, a second coupler 32811, and three optical multiplexers: an optical multiplexer 32812 to an optical multiplexer 32814.

The demultiplexer 92011 demultiplexes the received optical signal to obtain the first echo signal and the second echo signal. The first coupler 32810 performs frequency mixing on the first echo signal by using the first sweep optical signal, to obtain three optical sub-signals of the first echo signal. The second coupler 32811 is configured to perform frequency mixing on the second echo signal by using the second sweep optical signal, to obtain three optical sub-signals of the second echo signal. The three optical multiplexers 32812 to 32814 multiplex three optical sub-signals of the first echo signal and three optical sub-signals of the second echo signal into three channels of frequency-mixed signals. Each of the three channels of frequency-mixed signals includes two optical sub-signals, and the two optical sub-signals included in each channel of frequency-mixed signals belong to different echo signals. For example, a phase difference between every two of the three optical sub-signals is 120 degrees. Both the first coupler 32810 and the second coupler 32811 may be $3 \times 3$ couplers. Further, the three channels of frequency-mixed signals output from the three optical multiplexers, namely, the optical multiplexer 32812 to the optical multiplexer 32814, are input to three photoelectric detectors, namely, photoelectric detectors 81031 to 81033, in one-to-one correspondence.

In addition, in embodiments of this application, a photoelectric detector may be alternatively deployed before a multiplexer that multiplexes each optical sub-signal, so that photoelectric detection is first performed, and then the multiplexer performs coupling. In this case, the used multiplexer is an electrical coupler. In this solution, a quantity of used photoelectric detectors is greater than that in the foregoing solution, and costs are higher.

With reference to FIG. 9B, the structure of the frequency mixing receiving unit 8101 may be described above, and details are not described herein again. In some embodiments, when N=S=P=2, the electrical multiplexing unit 8105 may include two electrical multiplexers (which may also be referred to as electrical couplers). The two electrical multiplexers are configured to multiplex the two electrical sub-signals that belong to the first echo signal and the two electrical sub-signals that belong to the second echo signal, to obtain two channels of multiplexed signals. Two electrical sub-signals in a same multiplexed signal belong to different echo signals. In some embodiments, when N=S=2 and P=1, the electrical multiplexing unit 8105 may include an electrical multiplexer (which may also be referred to as an electrical coupler). The electrical multiplexer is configured to multiplex one channel of electrical sub-signal belonging to the first echo signal and an electrical sub-signal belonging to the second echo signal, to obtain one channel of multiplexed signal, and output the multiplexed signal to an analog-to-digital converter. The other channel of electrical sub-signal belonging to the first echo signal is directly output to another analog-to-digital converter.

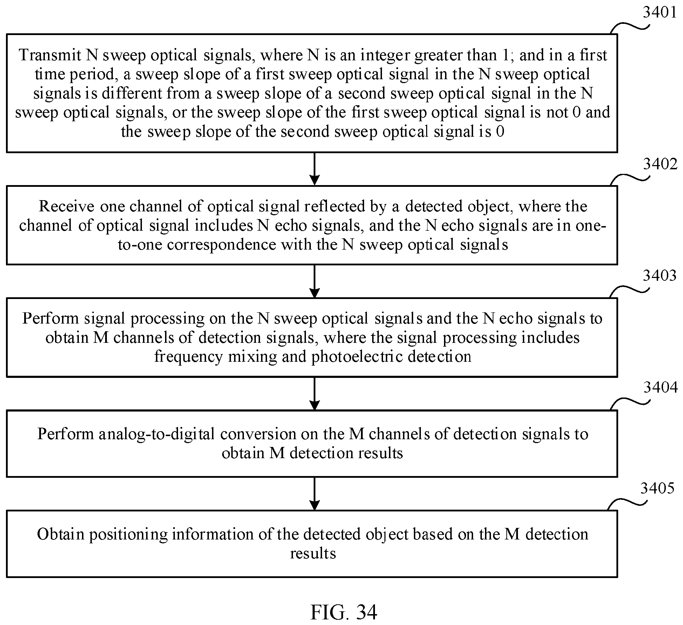

Based on the foregoing content and a same concept, this application provides a detection method for a lidar. Refer to descriptions of FIG. 34. The detection method may be applied to the receiving apparatus shown in any one of the embodiments in FIG. 7 to FIG. 33. It may also be understood that the detection method may be implemented based on the structure shown in any one of the embodiments in FIG. 7 to FIG. 33.

FIG. 34 is a schematic flowchart of a detection method for a lidar according to this application. The detection method includes the following steps.

3401: Transmit N sweep optical signals, where N is an integer greater than 1; and in a first time period, a sweep slope of a first sweep optical signal in the N sweep optical signals is different from a sweep slope of a second sweep optical signal in the N sweep optical signals, or the sweep slope of the first sweep optical signal is not 0 and the sweep slope of the second sweep optical signal is 0.

3402: Receive one channel of optical signal reflected by a detected object, where the channel of optical signal includes N echo signals, and the N echo signals are in one-to-one correspondence with the N sweep optical signals.

3403: Perform signal processing on the N sweep optical signals and the N echo signals to obtain M channels of detection signals, where the signal processing includes frequency mixing and photoelectric detection, and M is an integer greater than or equal to 2.

A first detection signal in the M channels of detection signals includes at least an electrical sub-signal of a first echo signal corresponding to the first sweep optical signal and an electrical sub-signal of a second echo signal corresponding to the second sweep optical signal; the signal processing is performed on at least one echo signal in the N echo signals to obtain electrical sub-signals having at least two phases; a second detection signal in the M channels of detection signals includes at least an electrical sub-signal of the first echo signal; and the electrical sub-signal of the first echo signal in the first detection signal and the electrical sub-signal of the first echo signal in the second detection signal have different phases.

3404: Perform analog-to-digital conversion on the M channels of detection signals to obtain M detection results.

3405: Obtain positioning information of the detected object based on the M detection results.

In a possible implementation, the electrical sub-signal of the first echo signal and the electrical sub-signal of the second echo signal in the first frequency-mixed signal have a same phase or different phases.

In a possible implementation, the second frequency-mixed signal further includes an electrical sub-signal of the second echo signal, the electrical sub-signal of the first echo signal and the electrical sub-signal of the second echo signal in the second frequency-mixed signal have a same phase or different phases, and the electrical sub-signal of the second echo signal in the first frequency-mixed signal and the electrical sub-signal of the second echo signal in the second frequency-mixed signal have different phases.

In a possible implementation, the performing signal processing on the N sweep optical signals and the N echo signals includes:

performing frequency mixing on the N sweep optical signals and the N echo signals to obtain L channels of frequency-mixed signals, where L is greater than N, the L channels of frequency-mixed signals at least include at least two optical sub-signals of the first echo signal and at least one optical sub-signal of the second echo signal, and the at least two optical sub-signals of the first echo signal have different phases;
multiplexing the L channels of frequency-mixed signals to obtain M channels of multiplexed signals; and
performing photoelectric detection on the M channels of multiplexed signals to obtain the M channels of detection signals.

In a possible implementation, the performing signal processing on the N sweep optical signals and the N echo signals includes:

performing frequency mixing on the N sweep optical signals and the N echo signals to obtain L channels of frequency-mixed signals, where L is an integer greater than or equal to N, the L channels of frequency-mixed signals at least include at least two optical sub-signals of the first echo signal and at least one optical sub-signal of the second echo signal, and the at least two optical sub-signals of the first echo signal have different phases;

respectively performing frequency mixing on the L channels of frequency-mixed signals to obtain L channels of detection signals; and

multiplexing the L channels of detection signals into the M channels of detection signals, where M is less than L.

In a possible implementation, the performing frequency mixing on the N sweep optical signals and the N echo signals to obtain L channels of frequency-mixed signals includes:

separately splitting P sweep optical signals in the N sweep optical signals to obtain L channels of sweep optical signals, where each of the P sweep optical signals is split into S channels of sweep optical signals, and L meets L=P×(S-1)+N;

demultiplexing the channel of optical signal to obtain the N echo signals, and separately splitting P echo signals in the N echo signals to obtain L channels of echo signals, where each of the P echo signals is split into S channels of echo signals;

performing phase adjustment on S-1 channels of echo signals corresponding to each of the P echo signals, where adjusted phases of different channels of echo signals that belong to a same echo signal are different; and

respectively performing frequency mixing on the L channels of sweep optical signals and the L channels of echo signals in one-to-one correspondence to obtain the L channels of frequency-mixed signals.

In a possible implementation, the performing frequency mixing on the N sweep optical signals and the N echo signals to obtain L channels of frequency-mixed signals includes:

separately splitting P sweep optical signals in the N sweep optical signals to obtain L channels of sweep optical signals, where each of the P sweep optical signals is split into S channels of sweep optical signals, and L meets L=P×(S-1)+N;

splitting the channel of optical signal into S channels of optical signals, and demultiplexing one of the S channels of optical signals to obtain N channels of echo signals, where different channels of echo signals belong to different echo signals; and separately demultiplexing S-1 channels of optical signals to obtain P channels of echo signals, where the P channels of echo signals belong to different echo signals;

performing phase adjustment on (S-1)×P channels of echo signals that are obtained by demultiplexing the S-1 channels of optical signals, where adjusted phases of different channels of echo signals that belong to a same echo signal are different; and

respectively performing frequency mixing on the L channels of sweep optical signals and L channels of echo signals in one-to-one correspondence to obtain the L channels of frequency-mixed signals.

It should be understood that division of the units of the receiving apparatus is merely logical function division. During actual implementation, all or some of the units may be integrated into one physical entity, or may be physically separated. This is not specifically limited in this application. In addition, the foregoing listed components are functional components, and other components or component combinations that can implement a same function also fall within the protection scope of this application. This is not specifically limited in this application.

In addition, the detection solution provided in this application may be further extended to any information system that needs to efficiently detect a target object. The information system may include not only an optical information system, but also an electrical information system. For example, the information system may be further used to improve electromagnetic wave detection efficiency in the electromagnetic wave detection field. It should be understood that all technical solutions for implementing efficient detection by using the detection solution provided in this application fall within the protection scope of this application, and are not listed one by one in this application.

According to the detection solution provided in embodiments of this application, this application further provides a lidar, including the signal processor and the detection system described in the foregoing content.

According to the detection solution provided in embodiments of this application, this application further provides an electronic device, including the lidar described in the foregoing content. Examples of the terminal include but are not limited to: smart home devices (such as a television, a robotic vacuum cleaner, a smart desk lamp, a sound system, a smart lighting system, an electrical control system, home background music, a home theater system, an intercom system, and video surveillance), smart transportation devices (such as a vehicle, a ship, an uncrewed aerial vehicle, a train, a lorry, and a truck), smart manufacturing devices (such as a robot, an industrial device, smart logistics, and a smart factory), and smart terminals (such as a mobile phone, a computer, a tablet computer, a palmtop computer, a desktop computer, a headset, a speaker, a wearable device, a vehicle-mounted device, a virtual reality device, and an augmented reality device).

The terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A receiving apparatus for a lidar, comprising:

   a frequency mixing detection unit, configured to: receive one channel of optical signal, wherein the channel of optical signal comprises N echo signals, N is an integer greater than 1, and the N echo signals are in one-to-one correspondence with N sweep optical signals; and perform signal processing on the N sweep optical signals and the N echo signals to obtain M channels of detection signals, wherein the signal processing comprises frequency mixing and photoelectric detection, and M is an integer greater than or equal to 2, wherein

in a first time period, a sweep slope of a first sweep optical signal in the N sweep optical signals is different from a sweep slope of a second sweep optical signal in the N sweep optical signals, or the sweep slope of the first sweep optical signal is not 0 and the sweep slope of the second sweep optical signal is 0; a first detection signal in the M channels of detection signals comprises at least an electrical sub-signal of a first echo signal corresponding to the first sweep optical signal and an electrical sub-signal of a second echo signal corresponding to the second sweep optical signal; the signal processing is performed on at least one echo signal in the N echo signals to obtain electrical sub-signals having at least two phases; a second detection signal in the M channels of detection signals comprises at least an electrical sub-signal of the first echo signal; and the electrical sub-signal of the first echo signal in the first detection signal and the electrical sub-signal of the first echo signal in the second detection signal have different phases; and

M analog-to-digital converters, respectively configured to perform analog-to-digital conversion on the M channels of detection signals to obtain M detection results.

2. The apparatus according to claim 1, wherein the electrical sub-signal of the first echo signal and the electrical sub-signal of the second echo signal in the first detection signal have a same phase or different phases.

3. The apparatus according to claim 1 or 2, wherein the second detection signal further comprises an electrical sub-signal of the second echo signal, the electrical sub-signal of the first echo signal and the electrical sub-signal of the second echo signal in the second detection signal have a same phase or different phases, and the electrical sub-signal of the second echo signal in the first detection signal and the electrical sub-signal of the second echo signal in the second detection signal have different phases.

4. The apparatus according to any one of claims 1 to 3, wherein the frequency mixing detection unit comprises a frequency mixing receiving unit, an optical multiplexing unit, and M photoelectric detectors, wherein

the frequency mixing receiving unit is configured to receive the optical signal, and perform frequency mixing on the N sweep optical signals and the N echo signals to obtain L channels of frequency-mixed signals, wherein L is an integer greater than N, the L channels of frequency-mixed signals at least comprise at least two optical sub-signals of the first echo signal and at least one optical sub-signal of the second echo signal, and the at least two optical sub-signals of the first echo signal have different phases;

the optical multiplexing unit is configured to multiplex the L channels of frequency-mixed signals to obtain M channels of multiplexed signals; and

the M photoelectric detectors are respectively configured to perform photoelectric detection on the M channels of multiplexed signals to obtain the M channels of detection signals.

5. The apparatus according to claim 4, wherein the frequency mixing receiving unit comprises:

a first beam splitting unit, configured to perform beam splitting on the first echo signal in the optical signal to obtain two channels of first echo signals, and perform beam splitting on the second echo signal in the optical signal to obtain two channels of second echo signals, wherein the two channels of first echo signals have different phases, and the two channels of second echo signals have different phases; and

a first 180-degree frequency mixing unit, configured to: separately perform frequency mixing on the two channels of first echo signals by using the first sweep optical signal, to obtain a first optical sub-signal of the first echo signal and a second optical sub-signal of the first echo signal; and separately perform frequency mixing on the two channels of second echo signals by using the second sweep optical signal, to obtain a first optical sub-signal of the second echo signal and a second optical sub-signal of the second echo signal.

6. The apparatus according to claim 5, wherein the optical multiplexing unit comprises:

a first optical multiplexer, configured to multiplex the first optical sub-signal of the first echo signal and the first optical sub-signal of the second echo signal into a first multiplexed signal, wherein the first optical sub-signal of the first echo signal and the first optical sub-signal of the second echo signal have a same phase; and

a second optical multiplexer, configured to multiplex the second optical sub-signal of the first echo signal and the second optical sub-signal of the second echo signal into a second multiplexed signal, wherein the second optical sub-signal of the first echo signal and the second optical sub-signal of the second echo signal that are comprised in the second multiplexed signal have a same phase.

7.  The apparatus according to claim 5, wherein the optical multiplexing unit comprises:

a third optical multiplexer, configured to multiplex the second optical sub-signal of the first echo signal and the first optical sub-signal of the second echo signal into a first multiplexed signal, wherein the second optical sub-signal of the first echo signal and the first optical sub-signal of the second echo signal have different phases; and
a fourth optical multiplexer, configured to multiplex the first optical sub-signal of the first echo signal and the second optical sub-signal of the second echo signal into a second multiplexed signal, wherein the first optical sub-signal of the first echo signal and the second optical sub-signal of the second echo signal have different phases.

8.  The apparatus according to any one of claims 5 to 7, wherein the first beam splitting unit comprises a demultiplexer, a first 90-degree phase shifter, a second 90-degree phase shifter, a first optical splitter, a second optical splitter, a third optical splitter, and a fourth optical splitter, wherein

the demultiplexer is configured to demultiplex the received optical signal to obtain the first echo signal and the second echo signal;
the first optical splitter is configured to demultiplex the first sweep optical signal into a first channel of first sweep optical signal and a second channel of first sweep optical signal;
the second optical splitter is configured to demultiplex the second sweep optical signal into a first channel of second sweep optical signal and a second channel of second sweep optical signal;
the third optical splitter is configured to demultiplex the first echo signal into a first channel of first echo signal and a second channel of first echo signal;
the fourth optical splitter is configured to demultiplex the second echo signal into a first channel of second echo signal and a second channel of second echo signal;
the first 90-degree phase shifter is configured to adjust a phase of the second channel of first echo signal by 90 degrees, to obtain an adjusted second channel of first echo signal; and
the second 90-degree phase shifter is configured to adjust a phase of the second channel of first echo signal by 90 degrees, to obtain an adjusted second channel of first echo signal.

9.  The apparatus according to any one of claims 5 to 7, wherein the first beam splitting unit comprises a first demultiplexer, a second demultiplexer, a third 90-degree phase shifter, a first optical splitter, a second optical splitter, and a fifth optical splitter, wherein

the first optical splitter is configured to demultiplex the first sweep optical signal into a first channel of first sweep optical signal and a second channel of first sweep optical signal;
the second optical splitter is configured to demultiplex the second sweep optical signal into a first channel of second sweep optical signal and a second channel of second sweep optical signal;
the fifth optical splitter is configured to demultiplex the optical signal into a first channel of optical signal and a second channel of optical signal;
the third 90-degree phase shifter is configured to adjust a phase of the second channel of optical signal to obtain an adjusted second channel of optical signal;
the first demultiplexer is configured to demultiplex the first channel of optical signal to obtain a first channel of first echo signal and a first channel of second echo signal; and
the second demultiplexer is configured to demultiplex the adjusted second channel of optical signal to obtain an adjusted second channel of first echo signal and an adjusted second channel of second echo signal.

10. The apparatus according to any one of claims 5 to 9, wherein the first 180-degree frequency mixing unit comprises:

a first 180-degree frequency mixer, configured to perform frequency mixing on the first channel of first echo signal and the first channel of first sweep optical signal to obtain the first optical sub-signal of the first echo signal;
a second 180-degree frequency mixer, configured to perform frequency mixing on the adjusted second channel of first echo signal and the second channel of first sweep optical signal to obtain the second optical sub-signal of the first echo signal;
a third 180-degree frequency mixer, configured to perform frequency mixing on the first channel of second echo signal and the first channel of second sweep optical signal to obtain the first optical sub-signal of the second echo signal; and
a fourth 180-degree frequency mixer, configured to perform frequency mixing on the adjusted second channel of second echo signal and the second channel of second sweep optical signal to obtain the second optical sub-signal of the second echo signal.

11. The apparatus according to claim 4, wherein the frequency mixing receiving unit comprises:

a second beam splitting unit, configured to perform beam splitting on the first echo signal in the optical signal to obtain two channels of first echo signals, wherein the two channels of first echo signals have different phases; and a second 180-degree frequency mixing unit, configured to: separately perform frequency mixing on the two channels of first echo signals by using the first sweep optical signal, to obtain a first optical sub-signal of the first echo signal and a second optical sub-signal of the first echo signal; and perform frequency mixing on the second echo signal by using the second sweep optical signal, to obtain a first optical sub-signal of the second echo signal.

12. The apparatus according to claim 11, wherein the optical multiplexing unit comprises:

a first optical multiplexer, configured to multiplex the first optical sub-signal of the first echo signal and the first optical sub-signal of the second echo signal into a first multiplexed signal, wherein the first optical sub-signal of the first echo signal and the first optical sub-signal of the second echo signal have a same phase, and the second optical sub-signal of the first echo signal is output from the optical multiplexing unit as a second multiplexed signal; or a third optical multiplexer, configured to multiplex the second optical sub-signal of the first echo signal and the first optical sub-signal of the second echo signal into a first multiplexed signal, wherein the second optical sub-signal of the first echo signal and the first optical sub-signal of the second echo signal have different phases, and the first optical sub-signal of the first echo signal is output from the optical multiplexing unit as a second multiplexed signal.

13. The apparatus according to claim 11 or 12, wherein the second beam splitting unit comprises a demultiplexer, a first 90-degree phase shifter, a first optical splitter, and a third optical splitter, wherein

the demultiplexer is configured to demultiplex the received optical signal to obtain the first echo signal and the second echo signal;
the first optical splitter is configured to demultiplex the first sweep optical signal into a first channel of first sweep optical signal and a second channel of first sweep optical signal;
the third optical splitter is configured to demultiplex the first echo signal into two channels of first echo signals, wherein in the two channels of first echo signals, one channel of first echo signal is used as a first channel of first echo signal, and the other channel of first echo signal is input to the first 90-degree phase shifter; and
the first 90-degree phase shifter is configured to adjust a phase of the other channel of first echo signal by 90 degrees, to obtain a second channel of first echo signal.

14. The apparatus according to claim 11 or 12, wherein the second beam splitting unit comprises a first demultiplexer, a third demultiplexer, a third 90-degree phase shifter, a first optical splitter, and a fifth optical splitter, wherein

the first optical splitter is configured to demultiplex the first sweep optical signal into a first channel of first sweep optical signal and a second channel of first sweep optical signal;
the fifth optical splitter is configured to demultiplex the optical signal into a first channel of optical signal and a second channel of optical signal;
the third 90-degree phase shifter is configured to adjust a phase of the second channel of optical signal to obtain an adjusted second channel of optical signal;
the first demultiplexer is configured to demultiplex the first channel of optical signal to obtain a first channel of first echo signal and the second echo signal; and
the third demultiplexer is configured to demultiplex the adjusted second channel of optical signal to obtain a second channel of first echo signal.

15. The apparatus according to claim 11 or 12, wherein the second beam splitting unit comprises a demultiplexer, a first 90-degree phase shifter, a fourth 90-degree phase shifter, a first optical splitter, and a third optical splitter, wherein

the demultiplexer is configured to demultiplex the received optical signal to obtain the first echo signal and the second echo signal;
the first optical splitter is configured to demultiplex the first sweep optical signal into a first channel of first sweep optical signal and a second channel of first sweep optical signal;

the third optical splitter is configured to demultiplex the first echo signal into two channels of first echo signals, wherein in the two channels of first echo signals, one channel of first echo signal is input to the first 90-degree phase shifter, and the other channel of first echo signal is used as a second channel of first echo signal;

the first 90-degree phase shifter is configured to adjust a phase of the one channel of first echo signal by 90 degrees, to obtain a first channel of first echo signal; and

the fourth 90-degree phase shifter is configured to adjust a phase of the second echo signal by 90 degrees and output an adjusted second echo signal.

16. The apparatus according to claim 11 or 12, wherein the second beam splitting unit comprises a fourth demultiplexer, a fifth demultiplexer, a fifth 90-degree phase shifter, a first optical splitter, and a fifth optical splitter, wherein

the first optical splitter is configured to demultiplex the first sweep optical signal into a first channel of first sweep optical signal and a second channel of first sweep optical signal;

the fifth optical splitter is configured to demultiplex the optical signal into a first channel of optical signal and a second channel of optical signal;

the fifth 90-degree phase shifter is configured to adjust a phase of the first channel of optical signal to obtain an adjusted first channel of optical signal;

the fourth demultiplexer is configured to demultiplex the adjusted first channel of optical signal to obtain a first channel of first echo signal and the second echo signal; and

the fifth demultiplexer is configured to demultiplex the second channel of optical signal to obtain a second channel of first echo signal.

17. The apparatus according to any one of claims 12 to 16, wherein the second 180-degree frequency mixing unit comprises:

a first 180-degree frequency mixer, configured to perform frequency mixing on the first channel of first echo signal and the first channel of first sweep optical signal to obtain the first optical sub-signal of the first echo signal;

a second 180-degree frequency mixer, configured to perform frequency mixing on the second channel of first echo signal and the second channel of first sweep optical signal to obtain the second optical sub-signal of the first echo signal; and

a fifth 180-degree frequency mixer, configured to perform frequency mixing on the received second echo signal and the received second sweep optical signal to obtain the first optical sub-signal of the second echo signal.

18. The apparatus according to any one of claims 1 to 3, wherein the frequency mixing detection unit comprises a third 90-degree phase shifter, a first optical splitter, a fifth optical splitter, a sixth 180-degree frequency mixer, a third demultiplexer, a seventh 180-degree frequency mixer, a first photoelectric detector, and a second photoelectric detector, wherein

the first optical splitter is configured to demultiplex the first sweep optical signal into a first channel of first sweep optical signal and a second channel of first sweep optical signal;

the fifth optical splitter is configured to demultiplex the optical signal into a first channel of optical signal and a second channel of optical signal;

the third 90-degree phase shifter is configured to adjust a phase of the second channel of optical signal to obtain an adjusted second channel of optical signal;

the sixth 180-degree frequency mixer is configured to perform frequency mixing on the first channel of optical signal by using the first channel of first sweep optical signal and the second sweep optical signal, to obtain a frequency-mixed signal, wherein the first channel of optical signal comprises a first channel of first echo signal and a first channel of second echo signal, and the frequency-mixed signal comprises a first optical sub-signal of the first echo signal and a first optical sub-signal of the second echo signal;

the third demultiplexer is configured to demultiplex the adjusted second channel of optical signal to obtain an adjusted second channel of first echo signal;

the seventh 180-degree frequency mixer is configured to perform frequency mixing on the adjusted second channel of first echo signal by using the second channel of first sweep optical signal, to obtain a second optical sub-signal of the first echo signal;

the first photoelectric detector is configured to perform photoelectric detection on the frequency-mixed signal to obtain a first channel of detection signal; and

the second photoelectric detector is configured to perform photoelectric detection on the second optical sub-signal of the first echo signal to obtain a second channel of detection signal.

19. The apparatus according to any one of claims 1 to 3, wherein the frequency mixing detection unit comprises a third 90-degree phase shifter, a first optical splitter, a fifth optical splitter, an eighth 180-degree frequency mixer, a first demultiplexer, a ninth 180-degree frequency mixer, a first photoelectric detector, and a second photoelectric detector, wherein

the first optical splitter is configured to demultiplex the first sweep optical signal into a first channel of first sweep optical signal and a second channel of first sweep optical signal;
the fifth optical splitter is configured to demultiplex the optical signal into a first channel of optical signal and a second channel of optical signal;
the third 90-degree phase shifter is configured to adjust a phase of the second channel of optical signal to obtain an adjusted second channel of optical signal;
the eighth 180-degree frequency mixer is configured to perform frequency mixing on the adjusted second channel of optical signal by using the second channel of first sweep optical signal and the second sweep optical signal, to obtain a frequency-mixed signal, wherein the adjusted second channel of optical signal comprises an adjusted second channel of first echo signal and an adjusted second channel of second echo signal, and the frequency-mixed signal comprises a second optical sub-signal of the first echo signal and a second optical sub-signal of the second echo signal;
the first demultiplexer is configured to demultiplex the first channel of optical signal to obtain a first channel of first echo signal;
the ninth 180-degree frequency mixer is configured to perform frequency mixing on the first echo signal by using the first channel of first sweep optical signal, to obtain a first optical sub-signal of the first echo signal;
the first photoelectric detector is configured to perform photoelectric detection on the frequency-mixed signal to obtain a first channel of detection signal; and
the second photoelectric detector is configured to perform photoelectric detection on the first optical sub-signal of the first echo signal to obtain a second channel of detection signal.

20. The apparatus according to any one of claims 1 to 3, wherein a frequency mixing receiving unit comprises a demultiplexer, a first coupler, a second coupler, and three multiplexers, wherein

the demultiplexer is configured to demultiplex the optical signal to obtain the first echo signal and the second echo signal;
the first coupler is configured to perform frequency mixing on the first echo signal by using the first sweep optical signal, to obtain three optical sub-signals of the first echo signal;
the second coupler is configured to perform frequency mixing on the second echo signal by using the second sweep optical signal, to obtain three optical sub-signals of the second echo signal;
the three multiplexers are configured to multiplex the three optical sub-signals of the first echo signal and the three optical sub-signals of the second echo signal into three channels of multiplexed signals, wherein each of the three channels of multiplexed signals comprises two optical sub-signals, and the two optical sub-signals comprised in each channel of multiplexed signal belong to different echo signals; and
the three photoelectric detectors are configured to perform photoelectric detection on the three channels of multiplexed signals to obtain three channels of detection signals.

21. The apparatus according to any one of claims 1 to 3, 5, and 10, wherein the frequency mixing detection unit comprises the frequency mixing receiving unit, L photoelectric detectors, and an electrical multiplexing unit, wherein

the frequency mixing receiving unit is configured to: receive the optical signal, wherein the optical signal comprises the N echo signals, N is an integer greater than 1, and the N echo signals are in one-to-one correspondence with the N sweep optical signals; and perform frequency mixing on the N sweep optical signals and the N echo signals to obtain the L channels of frequency-mixed signals, wherein L is an integer greater than N, the L channels of frequency-mixed signals at least comprise the at least two optical sub-signals of the first echo signal and the at least one optical sub-signal of the second echo signal, and the at least two optical sub-signals of the first echo signal have different phases;
the L photoelectric detectors are configured to respectively perform photoelectric detection on the L channels of frequency-mixed signals to obtain L channels of detection signals; and
the electrical multiplexing unit is configured to multiplex the L channels of detection signals into the M channels of detection signals.

22. A lidar, wherein the lidar comprises the receiving apparatus for the lidar according to any one of claims 1 to 10 and a signal processor, and the signal processor is configured to process the M detection results to obtain positioning information of a detected object.

23. The lidar according to claim 22, further comprising a transmitting apparatus for the lidar, wherein the transmitting apparatus is configured to generate the N sweep optical signals.

24. A detection method for a lidar, comprising:

transmitting N sweep optical signals, wherein N is an integer greater than 1, and in a first time period, a sweep slope of a first sweep optical signal in the N sweep optical signals is different from a sweep slope of a second sweep optical signal in the N sweep optical signals, or the sweep slope of the first sweep optical signal is not 0 and the sweep slope of the second sweep optical signal is 0;

receiving one channel of optical signal reflected by a detected object, wherein the channel of optical signal comprises N echo signals, and the N echo signals are in one-to-one correspondence with the N sweep optical signals;

performing signal processing on the N sweep optical signals and the N echo signals to obtain M channels of detection signals, wherein the signal processing comprises frequency mixing and photoelectric detection, and M is an integer greater than or equal to 2, wherein

a first detection signal in the M channels of detection signals comprises at least an electrical sub-signal of a first echo signal corresponding to the first sweep optical signal and an electrical sub-signal of a second echo signal corresponding to the second sweep optical signal; the signal processing is performed on at least one echo signal in the N echo signals to obtain electrical sub-signals having at least two phases; a second detection signal in the M channels of detection signals comprises at least an electrical sub-signal of the first echo signal; and the electrical sub-signal of the first echo signal in the first detection signal and the electrical sub-signal of the first echo signal in the second detection signal have different phases;

performing analog-to-digital conversion on the M channels of detection signals to obtain M detection results; and obtaining positioning information of the detected object based on the M detection results.

25. The method according to claim 24, wherein the electrical sub-signal of the first echo signal and the electrical sub-signal of the second echo signal in the first frequency-mixed signal have a same phase or different phases.

26. The method according to claim 24 or 25, wherein the second frequency-mixed signal further comprises an electrical sub-signal of the second echo signal, the electrical sub-signal of the first echo signal and the electrical sub-signal of the second echo signal in the second frequency-mixed signal have a same phase or different phases, and the electrical sub-signal of the second echo signal in the first frequency-mixed signal and the electrical sub-signal of the second echo signal in the second frequency-mixed signal have different phases.

27. The method according to any one of claims 24 to 26, wherein the performing signal processing on the N sweep optical signals and the N echo signals comprises:

performing frequency mixing on the N sweep optical signals and the N echo signals to obtain L channels of frequency-mixed signals, wherein L is an integer greater than N, the L channels of frequency-mixed signals at least comprise at least two optical sub-signals of the first echo signal and at least one optical sub-signal of the second echo signal, and the at least two optical sub-signals of the first echo signal have different phases;

multiplexing the L channels of frequency-mixed signals to obtain M channels of multiplexed signals; and performing photoelectric detection on the M channels of multiplexed signals to obtain the M channels of detection signals.

28. The method according to any one of claims 24 to 26, wherein the performing signal processing on the N sweep optical signals and the N echo signals comprises:

performing frequency mixing on the N sweep optical signals and the N echo signals to obtain L channels of frequency-mixed signals, wherein L is an integer greater than N, the L channels of frequency-mixed signals at least comprise at least two optical sub-signals of the first echo signal and at least one optical sub-signal of the second echo signal, and the at least two optical sub-signals of the first echo signal have different phases;

respectively performing frequency mixing on the L channels of frequency-mixed signals to obtain L channels of detection signals; and

multiplexing the L channels of detection signals into the M channels of detection signals, wherein M is less than L.

29. The method according to claim 27 or 28, wherein the performing frequency mixing on the N sweep optical signals and the N echo signals to obtain L channels of frequency-mixed signals comprises:

separately splitting P sweep optical signals in the N sweep optical signals to obtain L channels of sweep optical signals, wherein each of the P sweep optical signals is split into S channels of sweep optical signals, P, L, and S are all positive integers, P is less than N, and L meets $L = P \times (S-1) + N$;

demultiplexing the channel of optical signal to obtain the N echo signals, and separately splitting P echo signals in the N echo signals to obtain L channels of echo signals, wherein each of the P echo signals is split into S channels of echo signals;

performing phase adjustment on S-1 channels of echo signals corresponding to each of the P echo signals, wherein adjusted phases of different channels of echo signals that belong to a same echo signal are different; and respectively performing frequency mixing on the L channels of sweep optical signals and the L channels of echo signals in one-to-one correspondence to obtain the L channels of frequency-mixed signals.

30. The method according to claim 27 or 28, wherein the performing frequency mixing on the N sweep optical signals and the N echo signals to obtain L channels of frequency-mixed signals comprises:

separately splitting P sweep optical signals in the N sweep optical signals to obtain L channels of sweep optical signals, wherein each of the P sweep optical signals is split into S channels of sweep optical signals, P, L, and S are all positive integers, P is less than N, and L meets $L = P \times (S-1) + N$;

splitting the channel of optical signal into S channels of optical signals, and demultiplexing one of the S channels of optical signals to obtain N channels of echo signals, wherein different channels of echo signals belong to different echo signals; and separately demultiplexing S-1 channels of optical signals to obtain P channels of echo signals, wherein the P channels of echo signals belong to different echo signals;

performing phase adjustment on $(S-1) \times P$ channels of echo signals that are obtained by demultiplexing the S-1 channels of optical signals, wherein adjusted phases of different channels of echo signals that belong to a same echo signal are different; and

respectively performing frequency mixing on the L channels of sweep optical signals and L channels of echo signals in one-to-one correspondence to obtain the L channels of frequency-mixed signals.

FIG. 1

FIG. 2

FIG. 3

FIG. 4

Detection system 500

Transmitting apparatus 510

Detection signal

Local oscillator signal

Echo signal

Receiving apparatus 520

FIG. 5A

Lidar

Transmitting apparatus 510

Detection signal

Local oscillator signal

Echo signal

Receiving apparatus 520

Processing unit 530

FIG. 5B

Triangular wave

Triangular wave

Trapezoidal wave

Trapezoidal wave

Sawtooth wave

Sawtooth wave

Constant frequency waveform

FIG. 6

First channel of optical signal 1-1

Optical splitter 710

Demultiplexer 731

180-degree frequency mixer 741

180-degree frequency mixer 742

Detector 751

Detector 752

Analog-to-digital converter 761

Analog-to-digital converter 762

First sweep optical signal (local oscillator signal)

Second channel of optical signal 1-2

90-degree phase shifter 720

Demultiplexer 732

180-degree frequency mixer 743

180-degree frequency mixer 744

Detector 753

Detector 754

Analog-to-digital converter 763

Analog-to-digital converter 764

Second sweep optical signal (local oscillator signal)

FIG. 7

First sub-signal of a first echo signal +
First sub-signal of a second echo signal

N echo signals →

N sweep optical
signals
(local oscillator
signals) →

Frequency
mixing
detection unit
810

...

Analog-to-digital
converter 8201 →

...

Second sub-signal
of an N$^{th}$ echo
signal →

Analog-to-digital
converter 820M →

Analog-to-digital
converter array 820

FIG. 8

Frequency mixing detection unit 810

First channel
of
frequency-
mixed signal

One channel of
optical signal
(N echo signals) →

N sweep
optical
signals →

Frequency
mixing
receiving unit
8101

...

L$^{th}$ channel of
frequency-
mixed signal

Optical
multiplexing
unit 8102

Photoelectric
detector
81031 →

Photoelectric
detector
8103M →

FIG. 9A

Frequency mixing detection unit 810

One channel of optical signal (N echo signals) → Frequency mixing receiving unit 8101

N sweep optical signals →

First channel of frequency-mixed signal → Photoelectric detector 81041 →

...                    ...

$L^{th}$ channel of frequency-mixed signal → Photoelectric detector 8104L →

Electrical multiplexing unit 8105 →

→

**FIG. 9B**

FIG. 10

First beam splitting unit 9201

First echo signal

First echo signal +
Second echo signal → Demultiplexer 92011

Third optical splitter 92016 → First 90-degree phase shifter 92012 → Adjusted second channel of first echo signal

First channel of first echo signal

First sweep optical signal (local oscillator signal)

First optical splitter 92014 → First channel of first sweep signal

Second channel of first sweep signal

Second echo signal

Fourth optical splitter 92017 → First channel of second echo signal

Second 90-degree phase shifter 92013 → Adjusted second channel of second echo signal

Second sweep optical signal (local oscillator signal)

Second optical splitter 92015 → First channel of second sweep signal

Second channel of second sweep signal

FIG. 11A

EP 4 617 715 A1

First beam splitting unit 9201

First channel of optical signal 1-1

Fifth optical splitter 92114

First demultiplexer 92111

First channel of first echo signal

First channel of second echo signal

First sweep optical signal (local oscillator signal)

First optical splitter 92014

First channel of first sweep signal

Second channel of optical signal 1-2

Second channel of first sweep signal

Adjusted second channel of first echo signal

Third 90-degree phase shifter 92113

Second demultiplexer 92112

Adjusted second channel of second echo signal

Second sweep optical signal (local oscillator signal)

Second optical splitter 92015

First channel of second sweep signal

Second channel of second sweep signal

FIG. 11B

48

First echo signal + Second echo signal → **Demultiplexer 92011**

First echo signal → **Third optical splitter 92016**

First channel of first echo signal

Adjusted second channel of first echo signal → **First 90-degree phase shifter 92012**

First sweep optical signal (local oscillator signal) → **First optical splitter 92014**

First channel of first sweep signal

Second channel of first sweep signal

Second echo signal → **Fourth optical splitter 92017**

First channel of second echo signal

Adjusted second channel of second echo signal → **Second 90-degree phase shifter 92013**

First channel of second sweep signal

Second sweep optical signal (local oscillator signal) → **Second optical splitter 92015**

Second channel of second sweep signal

**First 180-degree frequency mixer 92021**

**Second 180-degree frequency mixer 92022**

**Third 180-degree frequency mixer 92023**

**Fourth 180-degree frequency mixer 92024**

First optical sub-signal of the first echo signal (I) + First optical sub-signal of the second echo signal (I) → **First optical multiplexer 9203** → **Photoelectric detector 81031**

Second optical sub-signal of the first echo signal (Q) + Second optical sub-signal of the second echo signal (Q) → **Second optical multiplexer 9204** → **Photoelectric detector 81032**

FIG. 12

EP 4 617 715 A1

FIG. 13

Second sweep optical signal

Frequency mixing
receiving unit 8101

First echo
signal +
Second echo
signal

First
beam
splitting
unit 9201

First channel of
first echo signal

Second channel
of first echo
signal

First channel of
second echo
signal

Second channel
of second echo
signal

First 180-
degree
frequency
mixing
unit 9202

Optical multiplexing
unit 8102

First optical sub-signal of the
first echo signal +
Second optical sub-signal of
the second echo signal

Fourth optical
multiplexer
9206

Photoelectric
detector 81032

Second optical sub-signal of
the first echo signal +
First optical sub-signal of the
second echo signal

Third optical
multiplexer
9205

Photoelectric
detector 81031

First sweep optical signal

FIG. 14

First optical sub-signal of the first echo signal + Second optical sub-signal of the second echo signal

Photoelectric detector 81032

Fourth optical multiplexer 9206

Second optical sub-signal of the first echo signal + First optical sub-signal of the second echo signal

Photoelectric detector 81031

Third optical multiplexer 9205

First 180-degree frequency mixer 92021

Second 180-degree frequency mixer 92022

Third 180-degree frequency mixer 92023

Fourth 180-degree frequency mixer 92024

Adjusted second channel of first echo signal

First 90-degree phase shifter 92012

First channel of first echo signal

First channel of first sweep signal

Second channel of first sweep signal

First channel of second echo signal

Adjusted second channel of second echo signal

First channel of second sweep signal

Second channel of second sweep signal

First echo signal

Third optical splitter 92016

First optical splitter 92014

Fourth optical splitter 92017

Second 90-degree phase shifter 92013

Second optical splitter 92015

First echo signal + Second echo signal

Demultiplexer 92011

First sweep optical signal (local oscillator signal)

Second echo signal

Second sweep optical signal (local oscillator signal)

FIG. 15

52

FIG. 16

EP 4 617 715 A1

FIG. 17

Second beam splitting unit 9210

First echo signal

First echo
signal +
Second echo
signal

First sweep
optical signal
(local oscillator
signal)

Demultiplexer
92011

Third optical
splitter
92016

First 90-
degree phase
shifter 92012

Adjusted second
channel of first
echo signal

First channel of
first echo signal

First
optical
splitter
92014

First channel of
first sweep signal

Second channel
of first sweep
signal

Second echo signal

Second echo signal

FIG. 18

Second beam splitting unit 9210

First channel of
optical signal 1-1

Fifth
optical
splitter
92114

First
demultiplexer
92111

First channel of
first echo signal

Second echo signal

First sweep
optical signal
(local oscillator
signal)

Second channel
of optical signal
1-2

First optical
splitter 92014

First channel of
first sweep signal

Second channel of
first sweep signal

Third 90-
degree phase
shifter 92113

Third
demultiplexer
92115

Adjusted second channel
of first echo signal

FIG. 19

FIG. 20

First channel of
optical signal 1-1

First channel
of first echo
signal

First optical sub-signal of a first echo
signal (I) +
First optical sub-signal of the second
echo signal (I)

First
demultiplexer
92111

First 180-
degree
frequency
mixer 92021

First optical
multiplexer
9203

Photoelectric
detector
81031

Fifth
optical
splitter
92114

Second echo signal

Fifth 180-
degree
frequency
mixer 92025

First sweep
optical signal
(local oscillator
signal)

First channel
of first sweep
signal

First
optical
splitter
92014

Second sub-signal of
a first echo signal (Q)

Second channel
of optical signal
1-2

Second channel of
first sweep signal

Second 180-
degree
frequency
mixer 92022

Photoelectric
detector
81032

Third 90-
degree phase
shifter 92113

Third
demultiplexer
92115

Adjusted
second channel
of first echo
signal

Second sweep optical signal
(local oscillator signal)

FIG. 21

EP 4 617 715 A1

Second beam splitting unit 9210

First echo signal

First echo signal +
Second echo signal

Demultiplexer
92011

Third optical
splitter 92016

First 90-degree
phase shifter
92012

Second channel of
first echo signal

First channel of
first echo signal

First sweep
optical signal
(local oscillator
signal)

First channel of
first sweep signal

First optical
splitter
92014

Second channel of first
sweep signal

Fourth 90-
degree phase
shifter 92017

Second echo signal

Second echo signal

FIG. 22

FIG. 23

FIG. 24

EP 4 617 715 A1

FIG. 25

FIG. 26

First echo signal

Adjusted
second channel
of first echo
signal

First echo
signal +
Second
echo
signal → Demultiplexer 92011 → Third optical splitter 92016 → First 90-degree phase shifter 92012 → Second 180-degree frequency mixer 92022

First channel of
first echo signal

First channel of
first sweep signal

First sweep
optical signal
(local oscillator
signal) → First optical splitter 92014

Second channel of
first sweep signal

First 180-degree frequency mixer 92021

Fifth 180-degree frequency mixer 92025

Second echo signal

First optical sub-signal of
the first echo signal (I)

Fourth optical multiplexer 9206

Photoelectric detector 81032 →

Photoelectric detector 81031 →

Second optical sub-signal of the
first echo signal (Q) +
First optical sub-signal of the
second echo signal (I)

Second sweep optical signal
(local oscillator signal)

FIG. 27

FIG. 28

FIG. 29

EP 4 617 715 A1

FIG. 30

EP 4 617 715 A1

EP 4 617 715 A1

First channel of optical signal 1-1
(first channel of first echo signal +
first channel of second echo signal)

First optical sub-signal of a first
echo signal (I) +
First optical sub-signal of a
second echo signal (I)

Fifth
optical
splitter
92114

First channel of first sweep
optical signal

Sixth 180-
degree
frequency
mixer 92026

Photoelectric
detector 81031

First sweep
optical signal

First
optical
splitter
92014

Fifth optical
multiplexer
9207

Second
channel of
optical signal
1-2

Second
channel of first
sweep optical
signal

Second optical sub-signal
of a first echo signal (Q)

Seventh 180-
degree
frequency
mixer 92027

Photoelectric
detector 81032

Third 90-
degree phase
shifter 92113

Third
demultiplexer
92115

Adjusted second channel
of first echo signal

Second sweep optical signal

FIG. 31

First channel of optical signal 1-1

First channel of first echo signal

First sub-signal of a first echo signal (I)

Fifth optical splitter 92114

First demultiplexer 92111

Ninth 180-degree frequency mixer 92029

Photoelectric detector 81031

First sweep optical signal

First optical splitter 92014

First channel of first sweep optical signal

Second channel of optical signal 1-2

Second channel of first sweep optical signal

Sixth optical multiplexer 9208

Second optical sub-signal of a first echo signal (Q) + Second optical sub-signal of a second echo signal (Q)

Third 90-degree phase shifter 92113

Eighth 180-degree frequency mixer 92028

Photoelectric detector 81032

Second channel of first echo signal + Second echo signal

Second sweep optical signal

FIG. 32

EP 4 617 715 A1

First sweep
optical signal

First echo signal

First echo signal +
Second echo signal

Demultiplexer
92011

First coupler
32810

Optical
multiplexer
32812

Photoelectric
detector
81031

Optical
multiplexer
32813

Photoelectric
detector
81032

Second
coupler
32811

Second echo signal

Second sweep
optical signal

Optical
multiplexer
32814

Photoelectric
detector
81033

FIG. 33

3401

Transmit N sweep optical signals, where N is an integer greater than 1; and in a first time period, a sweep slope of a first sweep optical signal in the N sweep optical signals is different from a sweep slope of a second sweep optical signal in the N sweep optical signals, or the sweep slope of the first sweep optical signal is not 0 and the sweep slope of the second sweep optical signal is 0

3402

Receive one channel of optical signal reflected by a detected object, where the channel of optical signal includes N echo signals, and the N echo signals are in one-to-one correspondence with the N sweep optical signals

3403

Perform signal processing on the N sweep optical signals and the N echo signals to obtain M channels of detection signals, where the signal processing includes frequency mixing and photoelectric detection

3404

Perform analog-to-digital conversion on the M channels of detection signals to obtain M detection results

3405

Obtain positioning information of the detected object based on the M detection results

FIG. 34

## INTERNATIONAL SEARCH REPORT

| International application No. |
| --- |
| **PCT/CN2024/090648** |

### A. CLASSIFICATION OF SUBJECT MATTER

G01S 7/481(2006.01)i

According to International Patent Classification (IPC) or to both national classification and IPC

### B. FIELDS SEARCHED

Minimum documentation searched (classification system followed by classification symbols)

IPC:G01S

Documentation searched other than minimum documentation to the extent that such documents are included in the fields searched

Electronic data base consulted during the international search (name of data base and, where practicable, search terms used)

CNTXT, ENTXTC, WPABSC, ENTXT, DWPI, VEN, CNKI, Web of Science: 雷达, FWCW, 斜率, 线性度, 扫频, 调频, 调制, 三角波, 梯形波, 锯齿波, 回波, 相位, 不同, 多, 移相器, I, Q, 同相, 正交, 相移, 复用器, 虚假, 虚拟, 虚伪, 真实, 正频率, 负频率, lidar, radar, rake ratio, gradient, slope, modulat+, chirp, tunable, sweep, triangular wave, sawtooth wave, trapezoidal wave, echo, phase, different, phase shift+, multiplexer, fake, false, ghost, real

### C. DOCUMENTS CONSIDERED TO BE RELEVANT

| Category* | Citation of document, with indication, where appropriate, of the relevant passages | Relevant to claim No. |
| --- | --- | --- |
| A | CN 112654894 A (HUAWEI TECHNOLOGIES CO., LTD.) 13 April 2021 (2021-04-13) description, paragraphs 62-116 | 1-30 |
| A | CN 110632597 A (NANJING UNIVERSITY OF AERONAUTICS AND ASTRONAUTICS) 31 December 2019 (2019-12-31) entire document | 1-30 |
| A | CN 115639568 A (SUTENG INNOVATION TECHNOLOGY CO., LTD.) 24 January 2023 (2023-01-24) entire document | 1-30 |
| A | US 2021356558 A1 (ARBE ROBOTICS LTD.) 18 November 2021 (2021-11-18) entire document | 1-30 |
| A | DE 102020215040 A1 (ROBERT BOSCH GMBH) 02 June 2022 (2022-06-02) entire document | 1-30 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **08 July 2024** | **26 July 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/090648**

| Patent document cited in search report | | | Publication date (day/month/year) | Patent family member(s) | | | Publication date (day/month/year) |
|---|---|---|---|---|---|---|---|
| CN | 112654894 | A | 13 April 2021 | WO | 2022000332 | A1 | 06 January 2022 |
| | | | | CN | 112654894 | B | 12 July 2022 |
| | | | | EP | 4170387 | A1 | 26 April 2023 |
| | | | | US | 2023168381 | A1 | 01 June 2023 |
| | | | | EP | 4170387 | A4 | 05 July 2023 |
| CN | 110632597 | A | 31 December 2019 | CN | 110632597 | B | 07 January 2022 |
| CN | 115639568 | A | 24 January 2023 | None | | | |
| US | 2021356558 | A1 | 18 November 2021 | IL | 250253 | A0 | 30 March 2017 |
| | | | | IL | 250253 | B | 31 October 2021 |
| | | | | WO | 2018138725 | A1 | 02 August 2018 |
| | | | | US | 11650286 | B2 | 16 May 2023 |
| DE | 102020215040 | A1 | 02 June 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310520681